(19) Europäisches Patentamt
European Patent Office
Office européen des brevets

(11) **EP 4 654 141 A1**

(12) **EUROPEAN PATENT APPLICATION**

(43) Date of publication:
**26.11.2025 Bulletin 2025/48**

(21) Application number: **25177763.7**

(22) Date of filing: **20.05.2025**

(51) International Patent Classification (IPC):
**G06T 15/06** (2011.01)

(52) Cooperative Patent Classification (CPC):
**G06T 15/06; G06T 2210/12; G06T 2210/21**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH LA MA MD TN**

(30) Priority: **24.05.2024 GB 202407459
07.04.2025 GB 202505214**

(71) Applicant: **Imagination Technologies Limited
Kings Langley, Hertfordshire WD4 8LZ (GB)**

(72) Inventors:
• **Fenney, Simon James
Hertfordshire, WD4 8LZ (GB)**
• **Allen, Henry
Hertfordshire, WD4 8LZ (GB)**

(74) Representative: **Slingsby Partners LLP
1 Kingsway
London WC2B 6AN (GB)**

(54) **FACILITATING OBJECT INTERSECTION TESTING IN A RAY TRACING SYSTEM**

(57) The present disclosure is directed to methods and systems for facilitating intersection testing. There is provided a method generating a contained region for use in a ray tracing system, wherein the contained region facilitates determining whether a ray intersects an object of a scene, wherein the object is contained within one or more finite bounding regions which form part of an object partitioning hierarchy. The method comprises: partitioning the volume inside the one or more finite bounding regions into a plurality of voxels; categorising the plurality of voxels, wherein the categorisation comprises identifying a subset of internal voxels that are contained within extents of a geometry defined by the object, and determining an occlusion utility metric for each of the internal voxels, wherein the occlusion utility metric quantifies an estimate of a potential surface area of an expanded version of each internal voxel. The method further comprises, in dependence on the occlusion utility metric, selecting an internal voxel, from the subset of internal voxels, to be a candidate voxel for transformation into a contained region, and expanding a volume of the candidate voxel through at least one dimension to obtain an expanded voxel, wherein the expanded voxel is contained within, and smaller than, the extents of the geometry defined by the object, and is allocating as a contained region.

FIGURE 13

**Description**

CROSS-REFERENCE TO RELATED APPLICATION

This application claims priority from UK patent application GB2407459.3 filed on 24 May 2024 and UK patent application GB2505214.3 filed on 7 April 2025, which are both herein incorporated by reference in their entirety.

TECHNICAL FIELD

The present disclosure is directed to techniques of performing intersection testing and traversing acceleration structures in a ray tracing system, in particular for methods of generating regions contained within objects for facilitating intersection testing.

BACKGROUND

Ray tracing is a computational rendering technique for generating an image of a scene (e.g., a 3D scene) by tracing paths of light ('rays') through a scene, usually from the viewpoint of a camera, but also as secondary rays, for example from object reflections. Each ray is modelled as originating from the camera and passing through a pixel into the scene. As a ray traverses the scene it may intersect objects within the scene, thus creating secondary rays. The interaction between rays and objects can be modelled to create realistic visual effects. For example, in response to determining an intersection of a ray with an object, a shader program (i.e., a portion of computer code) may be executed in respect of the intersection. A programmer can write the shader program to define how the system reacts to the intersection which may, for example, cause one or more secondary rays to be emitted into the scene, e.g., to represent a reflection of the ray from the intersected object or a refraction of the ray through the object (e.g., if the object is transparent or translucent). As another example, the shader program could cause one or more rays to be emitted into the scene for the purposes of determining whether the object is in shadow at the intersection point, i.e., so-called 'shadow rays'. The result of executing the shader program (and processing the relevant secondary rays) can be the calculation of a colour value for the pixel the ray passed through.

Rendering an image of a scene using ray tracing may involve performing many intersection tests, e.g., billions of intersection tests for rendering an image of a scene. In order to reduce the number of intersection tests that need to be performed, ray tracing systems typically use an acceleration structure, sometimes abbreviated to 'AS', wherein each node of an acceleration structure represents a region within the scene. Nodes can have successive generations of child nodes, which represent successively smaller regions of the scene, and which are within regions associated with the parent node. Thus, acceleration structures are often hierarchical (e.g., having a tree structure) such that they include multiple levels of nodes, wherein nodes near the top of the acceleration structure represent relatively large regions in the scene (e.g., the root node may represent the whole scene), and nodes near the bottom of the acceleration structure represent smaller regions in the scene. A "tree node" refers to a node which has pointers (or references) to other nodes in the hierarchical acceleration structure, i.e., a tree node has child nodes in the hierarchical acceleration structure. A "leaf node" refers to a node which has one or more pointers to one or more primitives or a patch of primitives, i.e., a leaf node does not typically have further child nodes in the hierarchical acceleration structure. In other words, leaf nodes of the acceleration structure represent regions bounding one or more primitives of an object, and it is typically necessary to reach a leaf node in an AS in order to process a ray accordingly.

In some examples, the nodes represent axis-aligned bounding boxes (AABBs) in the scene, where each AABB bounds some object or a specific portion of an object. Intersection testing generally proceeds in a recursive manner, i.e., by testing the ray for intersection with the root node of the acceleration structure first, and in response to a 'hit' testing each child nodes of the root node. If the ray 'misses' a parent node, intersection testing of the child nodes of that parent node can be avoided, saving computational effort. If a ray is found to intersect a leaf node, the ray can be tested against the objects (i.e., primitives) within the region represented by the leaf node to thereby determine whether an object intersects the ray. Typically, a ray needs to be tested against a leaf node (i.e., primitive) of an object in order to determine that the ray intersects the object. Furthermore, it is typically necessary to reach a leaf node, thereby determining an intersection with an object, in order to reduce the so-called 'maximum culling distance' of the ray. This maximum culling distance represents an effective endpoint of a ray and may therefore represent the position at which a ray is occluded by some object in the scene. Nodes which correspond to a region in a scene that are more distant than the maximum culling distance therefore need not be tested for intersection. Thus, if the ray tracing system can determine that an object (or a portion thereof) associated with a distant node is occluded by an object of a closer node, the more distant node need not be tested against the ray. This is the case for intersection rays such as primary and secondary rays, where it is desirable to find the 'closest hit' of a ray as soon as possible, since this is computationally efficient. However, finding the closest intersection with an object in the fewest possible steps is non-trivial, and indeed unknowable in most cases. The 'closest hit' problem is amplified for traversal algorithms that test nodes in parallel, since parallel traversal algorithms are more likely than non-parallel searches to perform tests on nodes representing objects which are, in reality, occluded.

The same problem also applies to other rays such as shadow rays, where 'any hit' identified between the shadow ray and an object would allow that shadow ray to be culled entirely, and the traversal of the AS for that shadow ray immediately terminated. Some publications have noted that, for the case of shadow rays, just knowing there is an intersection with the light ray may be sufficient to determine that a location is in shadow, i.e. that it is 'occluded'. These have proposed, when tracing shadow rays, to substitute existing geometry with approximate 'occluding' geometry that, say, has fewer primitives and thus is cheaper to traverse. However approximate models often lead to visual artifacts which are unacceptable.

In *"Accelerating Shadow Rays Using Volumetric Occluders and Modified kd-Tree Traversal"* (High Performance Graphics 2009), Djeu et al identify a scene object that is known to be a solid, closed and watertight polygon mesh. Within that mesh, they construct sets of "volumetric occluders" from nodes of the k-d tree deemed opaque, that are *strictly* within the closed interior of the mesh. The assumption is that there are usually significantly fewer volumetric occluders for a given mesh than primitives. These occluders can be included in the acceleration structure but are only considered for shadow rays. When testing a shadow ray, they can test the volumetric occluders of a given object earlier than its primitives. For this method to work, types of object must be closed, solid, and watertight, and the acceleration structure must be a space-partitioning structure such as a k-d tree.

GB application GB2407459.3 (which is hereby incorporated in its entirety by reference) addresses some of these problems associated with how to more efficiently identify an intersection with an object. This application provided a solution which enabled, for the 'closest hit' condition, the value of $t_{max}$ (i.e., the maximum culling distance) to be reduced at a significantly earlier opportunity by determining the existence of an intersection of an object without the need to traverse down to the leaf node of the object and determine an intersection between a ray and a primitive of the object. Specifically, the solution involved determining the existence of an intersection with an object with as few as two box intersection tests. The first test is between the ray and the bounding region of an object (e.g., an AABB), and the second test is between the ray and a contained region that is contained wholly the object, and within the bounding region. Consequently, GB application GB2407459.3 provided that the existence of an intersection with an object may be determined without the need to traverse down to a leaf node, thus without performing ray-primitive intersection tests with any of the primitives of the corresponding sub-tree. In the case of shadow rays, determining the existence of an intersection with a contained region may entirely avoid the need to perform an intersection test between a ray and a primitive.

In summary, the advantage of placing a contained region in an object is that, if it can be established that i) the ray intersects with the bounding region bounding the object and ii) the ray intersects the contained region that is wholly contained within the object, it can be inferred with certainty that the ray intersects with the object.

The method of traversal disclosed in GB2407459.3 is therefore more efficient (i.e., by inferring an intersection based on as few as two box intersection tests). However, how to efficiently generate effective contained regions that provide a good utility is an outstanding problem. For example, it would be advantageous if a large amount of internal volume of an object can be occupied by a contained region, in order to provide good utility (i.e., a high probability that a ray will intersect the contained region). Moreover, it is a non-trivial problem to determine whether one or many contained regions should be used, and how to determine the relative sizes of the contained regions if many are to be generated. Yet further, not all objects are closed objects, and therefore the problem of how to generate contained regions for non-standard objects and non-closed objects is an especially non-trivial problem.

The present disclosure is directed to methods of improving traversal of acceleration structures and improved methods of determining intersections with objects, with the aim of solving the aforementioned problems.

SUMMARY

This Summary is provided to introduce a selection of concepts in a simplified form that are further described below in the Detailed Description. This Summary is not intended to identify key features or essential features of the claimed subject matter, nor is it intended to be used to limit the scope of the claimed subject matter.

The present disclosure is directed to methods and systems for facilitating intersection testing. There is provided a method generating a contained region for use in a ray tracing system, wherein the contained region facilitates determining whether a ray intersects an object of a scene, wherein the object is contained within one or more finite bounding regions which form part of an object partitioning hierarchy. The method comprises: partitioning the volume inside the one or more finite bounding regions into a plurality of voxels; categorising the plurality of voxels, wherein the categorisation comprises identifying a subset of internal voxels that are contained within extents of a geometry defined by the object, and determining an occlusion utility metric for each of the internal voxels, wherein the occlusion utility metric quantifies an estimate of a potential surface area of an expanded version of each internal voxel. The method further comprises, in dependence on the occlusion utility metric, selecting an internal voxel, from the subset of internal voxels, to be a candidate voxel for transformation into a contained region, and expanding a volume of the candidate voxel through at least one dimension to obtain an expanded voxel, wherein the expanded voxel is contained within, and smaller than, the extents of the geometry defined by the object, and is allocating as a contained region.

There is provided a method of generating a contained region for use in a ray tracing system, wherein the contained region is arranged to facilitate determining whether a ray intersects an object of a scene, wherein the object is contained within one or more finite bounding regions which form part of an object partitioning hierarchy, the method comprising:

> partitioning the volume inside the one or more finite bounding regions into a plurality of voxels;
> categorising the plurality of voxels, wherein the categorisation comprises identifying a subset of internal voxels that are contained within extents of a geometry defined by the object;
> determining an occlusion utility metric for each of the internal voxels, wherein the occlusion utility metric quantifies an estimate of a potential surface area of an expanded version of each internal voxel;
> in dependence on the occlusion utility metric, selecting an internal voxel, from the subset of internal voxels, to be a candidate voxel for transformation into a contained region;
> expanding a volume of the candidate voxel through at least one dimension to obtain an expanded voxel, wherein the expanded voxel is contained within, and smaller than, the extents of the geometry defined by the object;
> allocating the expanded voxel as a contained region, wherein the contained region is arranged to facilitate determining whether a ray intersects the object in dependence on determining that the ray intersects the contained region.

In other words, the occlusion utility metric may quantify an estimate of a lower bound of a surface area of each internal voxel when expanded and transformed into a contained region, and thereby estimates a potential utility of each internal voxel, once expanded into a contained region, to occlude the object. In example implementations, the occlusion utility metric is a scalar value, for example a 1-dimensional scalar estimate of surface area, which enable rapid and straightforward comparison with other occlusion utility metrics also defined as a scalar value. In some implementations, the whole object may be entirely contained within a region defined by the union of the one or more bounding regions.

In example implementations, the method further comprises: determining a surface area metric of the expanded voxel; and allocating the expanded voxel as a contained region in dependence on determining that the surface area metric of the expanded voxel meets one or more surface area utility criteria.

In example implementations, the categorisation further comprises identifying a subset of boundary voxels that intersect with a surface of the object.

In example implementations, the object is a closed object, wherein the extents of the geometry of the object is an external surface of the object. In example implementations, expanding the volume of the candidate voxel comprises uniformly expanding the candidate voxel until a surface of the candidate voxel reaches one or more boundary voxels. In example implementations, a surface of the candidate voxel may comprise a face, edge, or vertex of the candidate voxel.

In example implementations, the method further comprises, subsequent to uniformly expanding the candidate voxel, non-uniformly extending the voxel in one or more dimensions, wherein the resulting expanded voxel comprises at least one dimension with a different to size to at least one other dimension.

In example implementations, non-uniformly extending the voxel comprises: determining that, subsequent to uniformly expanding the candidate voxel, uniform expansion of the voxel is no longer possible; determining that the candidate voxel may be extended in a plurality of different dimensions; and selecting, from the plurality of different dimensions, a set of one or more dimensions through which the candidate voxel may be extended simultaneously, wherein the set of one or more dimensions comprises the maximum number of possible simultaneous extensions.

In example implementations, the occlusion utility metric is a depth metric that quantifies a shortest distance of each internal voxel to external surface of the object.

In example implementations, the object comprises an open concave region, and wherein identifying the subset of internal voxels that are contained within extents of a geometry defined by the object comprises determining a subset of voxels that are enclosed, within a cross section of at least one dimension, by a plurality of boundary voxels.

In example implementations, categorising the plurality of voxels further comprises categorising any voxels that are not either internal voxels or boundary voxels as empty voxels, and wherein the extents of the geometry of the object that contain the contained region are defined by an enclosed region defined by a union of boundary voxels and empty voxels.

In example implementations, expanding the volume of the candidate voxel comprises uniformly expanding the candidate voxel until a surface of the candidate voxel reaches one or more boundary voxels or empty voxels.

In example implementations, subsequent to uniformly expanding the candidate voxel, non-uniformly extending the voxel in one or more dimensions, wherein the resulting expanded voxel comprises at least one dimension with a different to size to at least one other dimension.

In example implementations, the occlusion utility metric is a modified depth metric defined by i) quantifying a shortest distance of each internal voxel to any part of the enclosed region defined by the union of boundary voxels and empty voxels, and ii) weighting the quantification in i) by a value representing an estimated proportion of incident rays that will intersect the enclosed region by passing through an opening of the open concave region.

In example implementations, the object is a non-closed self-concealing object that contains a hidden region, wherein the hidden region is contained entirely within an interior of non-closed self-concealing object, the hidden region defined by being obscured from all possible viewing angles external to the non-closed self-concealing object, and wherein the occlusion utility metric is a depth metric that quantifies a shortest distance of each internal voxel to external surface of the object.

In example implementations, identifying the subset of internal voxels comprises identifying a set of voxels that are contained within the hidden region, and expanding the volume of the candidate voxel comprises uniformly expanding the candidate voxel until a surface of the candidate voxel reaches a boundary of the hidden region.

In example implementations, the object is a contiguous surface, and wherein the extents of the geometry defined by the object comprises an outer boundary of the contiguous surface, and wherein identifying the subset of internal voxels that are contained within extents of a geometry defined by the object comprises determining a set of voxels that intersect with the contiguous surface.

In example implementations, the occlusion utility metric for each internal voxel is defined based on the maximum number of internal voxels lying in a contiguous chain in a single dimension that intersect the contiguous surface of the object, in which the internal voxel is a member of the chain.

In example implementations, expanding the volume of the candidate voxel comprises expanding along at least a dimension of the contiguous chain defining the occlusion utility metric for the candidate voxel, and expanding until a surface of the candidate voxel reaches an outer boundary of the surface.

In example implementations, the surface area metric determined for the expanded voxel defines a combined surface area of all sides of the expanded voxel, wherein the surface area utility criteria comprises one or both of i) a threshold defined by a predetermined surface area and ii) a threshold defined by a combined surface area of all sides of a previously generated contained region.

In example implementations, determining that the surface area metric of the expanded voxel meets the one or more surface area utility criteria comprises determining that the combined surface area of all sides of the expanded voxel is equal to or greater than the combined surface area of all sides of the previously generated contained region.

In example implementations, dependent claim 2, wherein the surface area metric comprises i) a first component defining the proportion of projected overlap between the expanded voxel and a previously generated contained region and ii) a second component defining the proportion of projected overlap between the expanded voxel and a projection of the object, and wherein the surface area utility criteria comprises is a predetermined value defined using the same criteria as the surface area metric.

In example implementations, the surface area metric is a weighted projected surface area metric, $SA_{WP}$, is defined as

$$SA_{WP} = \frac{SA_{unoccluded}}{SA_{total}} \times \frac{SA_{unoccluded}}{SA_{object}}$$

wherein, for a given projection direction:

$SA_{unoccluded}$ defines a surface area of the expanded voxel that is not occluded by a projection of the previously generated contained region;
$SA_{total}$ defines a projected surface area of the expanded voxel;
$SA_{object}$ defines a projected surface area of the object.

In example implementations, the weighted projected surface area metric comprises a combination of individual weighted projected surface area, each calculated for a projection direction of a plurality of projection directions.

In example implementations, the method further comprises: selecting a further one or more internal voxels for transformation into a one or more further contained regions, wherein the further one or more internal voxels are selected from a further subset of the subset of internal voxels that are not contained within contained region allocated from the expanded voxel, and are selected in dependence on the occlusion utility metric for each internal voxel of the further subset; and generating one or more further contained regions by expanding a volume of each of the further one or more internal voxels through at least one dimension, wherein each one or more further contained region is contained within, and smaller than, the extents of the geometry defined by the object.

In example implementations, the surface area metric is the occlusion utility metric of the internal voxel used to generate the expanded voxel, and wherein the surface area utility criteria comprises a threshold based on a current minimum of an occlusion utility metric associated with any previously generated contained region.

In example implementations, identifying the subset of internal voxels that are contained within extents of the geometry defined by the object comprises: obtaining a mesh defining at least the object in the scene; identifying that the portion of the mesh defining the object is a separate sub-mesh comprising connected vertices; determining that the identified sub-mesh forms a watertight closed object; determining the boundary voxels that intersect with the sub-mesh defining the surface of the object; identifying all voxels that lie within an enclosed region defined by the boundary voxels are internal voxels.

In example implementations, the method further comprises: determining whether the ray intersects the object in dependence on at least determining that the ray intersects the contained region; and outputting an indication that the ray intersects the object, wherein the outputted indication is used in the ray tracing system for rendering an image of a scene.

There is also provided a graphics processing system configured to perform the method of any of claims 1 to 27. In example implementations, the graphics processing system is embodied in hardware on an integrated circuit.

There is also provided computer readable code configured to cause the method of any of claims 1 to 27 to be performed when the code is run.

There is also provided an integrated circuit definition dataset that, when processed in an integrated circuit manufacturing system, configures the integrated circuit manufacturing system to manufacture a graphics processing system as claimed in claim 28 or 29.

There is also provided a non-transitory computer readable storage medium having stored thereon a computer readable description of a graphics processing system as claimed in claim 29 or 30 that, when processed in an integrated circuit manufacturing system, causes the integrated circuit manufacturing system to manufacture an integrated circuit embodying the graphics processing system.

There is also provided a graphics processing module for generating a contained region for use in a ray tracing system, wherein the contained region is arranged to facilitate determining whether a ray intersects an object of a scene, wherein the object is contained within one or more finite bounding regions which form part of an object partitioning hierarchy, the module being configured to:

partition the volume inside the one or more finite bounding regions into a plurality of voxels;

categorise the plurality of voxels, wherein the categorisation comprises identifying a subset of internal voxels that are contained within extents of a geometry defined by the object;

determine an occlusion utility metric for each of the internal voxels, wherein the occlusion utility metric quantifies an estimate of a potential surface area of an expanded version of each internal voxel;

in dependence on the occlusion utility metric, select an internal voxel, from the subset of internal voxels, to be a candidate voxel for transformation into a contained region;

expand a volume of the candidate voxel through at least one dimension to obtain an expanded voxel, wherein the expanded voxel is contained within, and smaller than, the extents of the geometry defined by the object;

allocate the expanded voxel as a contained region, wherein the contained region is arranged to facilitate determining whether a ray intersects the object in dependence on determining that the ray intersects the contained region.

According to embodiments of the present disclosure, there is also provided a method of selecting a plurality of contained regions for use in a ray tracing system, wherein each of the plurality of contained regions is arranged to facilitate determining whether a ray intersects an object of a scene, wherein the object is contained within one or more finite bounding regions which form part of an object partitioning hierarchy, the method comprising:

obtaining geometry data defining an object and a plurality of candidate contained regions, wherein each of the plurality of candidate contained regions are contained within extents of a geometry defined by the object;

selecting a target contained region from the plurality of contained regions;

identifying one or more occluded contained regions, of the plurality of contained regions, which the target contained region at least partially occludes;

determining a surface area metric of the target contained region;

determining whether the surface area metric of the target contained region meets one or more surface area utility criteria, wherein the one or more surface area utility criteria is defined based on at least one of i) a surface area defined by the one or more occluded contained regions; and ii) a surface area defined by with the object;

in response to determining that the surface area metric of the target contained region does not meet the one or more surface area utility criteria, discarding the geometry data defining the target contained region to obtain a refined set of contained regions;

wherein the refined set of contained regions are arranged to facilitate determining whether a ray intersects the object in dependence on determining that the ray intersects at least one contained region of the refined set of contained regions.

According to embodiments of the present disclosure, there is also provided a method of generating a contained region for use in a ray tracing system, wherein the contained region is arranged to facilitate determining whether a ray intersects an object of a scene, wherein the object is contained within one or more finite bounding regions which form part of an object partitioning hierarchy, and wherein the object is a contiguous surface, the method comprising:

partitioning the volume inside the one or more finite bounding regions into a plurality of voxels;
categorising the plurality of voxels, wherein the categorisation comprises identifying a subset of boundary voxels that lie within extents of a geometry defined by the object and which intersect with the object's contiguous surface;
determining an occlusion utility metric for each of the boundary voxels, wherein the occlusion utility metric comprises a component quantifying at least a maximum number of boundary voxels lying in a contiguous chain in a single dimension that intersect the contiguous surface of the object, in which the boundary voxel is a member of the chain;
in dependence on the occlusion utility metric, selecting a boundary voxel, from the subset of boundary voxels, to be a candidate voxel for transformation into a contained region;
expanding a volume of the candidate voxel through at least one dimension to obtain an expanded voxel, wherein the expanded voxel is contained within, and smaller than, the extents of the geometry defined by the object;
allocating the expanded voxel as a contained region, wherein the contained region is arranged to facilitate determining whether a ray intersects the object in dependence on determining that the ray intersects the contained region.

The graphics processing module may be embodied in hardware on an integrated circuit. There may be provided a method of manufacturing, at an integrated circuit manufacturing system, a graphics processing module. There may be provided an integrated circuit definition dataset that, when processed in an integrated circuit manufacturing system, configures the system to manufacture a graphics processing module. There may be provided a non-transitory computer readable storage medium having stored thereon a computer readable description of a graphics processing module that, when processed in an integrated circuit manufacturing system, causes the integrated circuit manufacturing system to manufacture an integrated circuit embodying a graphics processing module.

There may be provided an integrated circuit manufacturing system comprising: a non-transitory computer readable storage medium having stored thereon a computer readable description of the graphics processing module; a layout processing system configured to process the computer readable description so as to generate a circuit layout description of an integrated circuit embodying the graphics processing module; and an integrated circuit generation system configured to manufacture the graphics processing module according to the circuit layout description.

There may be provided computer program code for performing any of the methods described herein. There may be provided non-transitory computer readable storage medium having stored thereon computer readable instructions that, when executed at a computer system, cause the computer system to perform any of the methods described herein.

The above features may be combined as appropriate, as would be apparent to a skilled person, and may be combined with any of the aspects of the examples described herein.

BRIEF DESCRIPTION OF THE DRAWINGS

Examples will now be described in detail with reference to the accompanying drawings in which:

Figure 1 shows a ray tracing system according to examples described herein;
Figure 2a shows a ray and a box where the start of the ray is before the box and the end of the ray is beyond the box;
Figure 2b shows a ray and a box where both the start and the end of the ray are before the box;
Figure 3 shows a ray interacting with a 2D representation of three objects in a scene, and bounding regions associated with the objects which represent part of an acceleration structure;
Figure 4a shows a 2D representation of a ray interacting with an object and a contained region within the object;
Figure 4b shows a 3D representation of the scene in figure 4a, in which the bounding region is an axis-aligned bounding box;
Figure 4c shows an example of a ray interacting contained regions within an object that is contained within a union of multiple bounding regions;
Figure 5 shows a 2D and 3D representation of a closed object having been voxelised according to present embodiments;
Figure 6a shows a first example behaviour of a ray intersecting with a contained region within an object containing a cavity;
Figure 6b shows a second example behaviour of a ray intersecting with a contained region within an object containing a cavity;
Figure 7 shows a crooked pipe object with two open ends, and surfaces and regions used to handle ray tracing according to present embodiments;
Figure 8 shows an object with an object with a concavity in a 3D representation, and a 3D representation of a cross section of the object having been voxelised according to present embodiments;

Figure 9 shows 2D of the same object with a concavity as Figure 8, with different cross sectional views, and having been voxelised according to present embodiments;

Figure 10a shows an example of a 2D non-closed self-concealing object with a hidden region;

Figure 10b shows the 2D non-closed self-concealing in Figure 10a and illustrates another example behaviour of a ray intersecting with a contained region within the hidden region of the non-watertight object;

Figure 10c illustrates a method by with the hidden region of a non-closed self-concealing object is identified according to present embodiments;

Figure 11a shows an example of a 3D non-closed self-concealing object with a hidden region, in plan view;

Figure 11b shows an example of a 3D non-closed self-concealing object with a hidden region;

Figure 11c shows an example of a 3D object that resembles a non-joined pipe being open at both ends;

Figure 12a shows an example of the depth metric, an occlusion utility metric used for closed objects according to present embodiments;

Figure 12b shows an example of the discounted depth metric, an occlusion utility metric used for concave objects according to present embodiments;

Figure 13 shows a 2D representation of part of a method of generating a contained region from a voxel within a closed object, according to present embodiments;

Figures 14a and 14b show a 2D representation of another part of the method of generating a contained region from a voxel within a closed object, according to present embodiments;

Figures 15a and 15b show a 2D representation of another part of the method of generating a contained region from a voxel within an object with a cavity, according to present embodiments;

Figure 16 illustrates a 2D representation of a method of replacing one contained region with a more effective contained region, according to present embodiments;

Figure 17 illustrates an isometric projection of a 3D object, according to present embodiments;

Figure 18a shows a third example involving an object that is a 3D surface, and a method of bounding that object;

Figure 18b shows an example of how to deal with ray intersection testing with the 3D surface object of figure 18a;

Figure 19 shows a 2D representation of part of a method of generating a contained region from a voxel within an object that is a 3D surface;

Figures 20a and 20b show part of a method of generating a contained region from a voxel within an object that is a 3D surface, according to present embodiments;

Figure 21 is a flowchart for a method of generating a contained region within an object, according to the presently described examples and embodiments.

Figure 22 is a flowchart for a method of refining a set of contained regions according to the presently described examples and embodiments.

Figure 23 is a flowchart for a method of generating a contained region for a contiguous surface according to present embodiments.

Figure 24 shows a computer system in which a graphics processing system is implemented; and

Figure 25 shows an integrated circuit manufacturing system for generating an integrated circuit embodying a graphics processing system.

The accompanying drawings illustrate various examples. The skilled person will appreciate that the illustrated element boundaries (e.g., boxes, groups of boxes, or other shapes) in the drawings represent one example of the boundaries. It may be that in some examples, one element may be designed as multiple elements or that multiple elements may be designed as one element. Common reference numerals are used throughout the figures, where appropriate, to indicate similar features.

DETAILED DESCRIPTION

The following description is presented by way of example to enable a person skilled in the art to make and use the invention. The present invention is not limited to the embodiments described herein and various modifications to the disclosed embodiments will be apparent to those skilled in the art.

Embodiments will now be described by way of example only.

In a ray tracing system, even when an acceleration structure is used, the amount of work involved in performing intersection testing is still very large. For example, ray tracing may be used for rendering an image of a 3D scene, where the image may have in the order of a million pixels. A primary ray may be traced for each sample position. Moreover, with super sampling, there may be multiple primary rays generated per pixel. The complexity of scenes to be rendered tends to increase with the development of graphics rendering technology, so it would not be unusual for there to be thousands of objects in a scene, each of which may be represented by many thousands of primitives. Furthermore, the images being rendered may represent frames of a sequence of frames which are to be rendered in real-time, e.g. for display to a user in real-time. For example, the user may be playing a game wherein the rendered images represent a user's view of the 3D scene as the user plays the game. In order for the sequence of frames to appear continuous, many frames may be rendered per second, e.g. 24, 30, 60, or even 120 frames per second. It can therefore be appreciated that the work involved in performing intersection testing in a ray tracing system to render scenes in real-time is vast. This problem is compounded by the desire to perform ray tracing on home computers, and even mobile devices, such as a tablet or smartphone, for which the acceptable size and power consumption may be much lower than for a standard computer.

As described above, testing rays for intersection with bounding regions, which correspond with nodes of an acceleration structure, is an extremely frequent operation in a ray tracing system. It should be appreciated that a bounding region refers to a general n-dimensional closed region, which may be axis-aligned. Preferably, for a 3D scene, the bounding region is an axis-aligned bounding box (AABB), which can be efficiently tested using box testing units (BTUs), or oriented bounding box (OBB)), which can give tighter bounds, but may be more expensive to test. In particular, the intersection testing of rays with bounding regions usually accounts for most of the intersection tests that are performed to render an image of a scene using ray tracing. Therefore, optimizations which can reduce the number of these intersection tests will be advantageous for optimizing the ray tracing system in terms any or all of i) reducing the execution time, ii) reducing power consumption, and iii) reducing the physical size of the ray tracing system.

As mentioned above, GB application GB2407459.3 (incorporated in its entirety by reference) addresses these problems and provides ways to optimise intersection testing methods, particularly in scenes that comprise a large number of occluded objects, and/or for objects that contain a large number of primitives. The solution provided is to include a so-called 'contained region' (which may be a volume in 3D, and may be axis-aligned, thereby making it an axis-aligned contained region, AACB) within the mesh of an object, and test the ray against the geometry defining the contained region in the first instance before determining whether a ray intersects the mesh defining the object. The advantage is that an intersection between a ray and an object can be inferred early. The specific advantages and use-cases of performing an intersection with a contained region are briefly described for context, before describing the examples and embodiments of the present disclosure, which is directed in particular to methods of generating contained regions, and method of selecting an optimised set of contained regions for use in intersection testing.

Motivation to use Contained Regions

Typically, an acceleration structure called a bounding volume hierarchy (BVH) is used. This comprises a tree structure for a set of objects comprising a set of nodes, where each node relates to a bounding region (in a 3D scene, a bounding volume) for an object. An object may be bounded by a single bounding region, or multiple bounding region. That is, an object may not be entirely contained within a single bounding region, but the object may be entirely contained within a group of bounding regions (i.e. with different bounding regions bounding different, or overlapping, parts of the object). In other words, a region defined by the union of multiple bounding regions may wholly contain an object. Child nodes contain successively smaller bounding regions, where the bounding regions of all child nodes are contained within the region of the parent nodes. Thus, a recursive structure is formed in which the 'leaf node' for a scene represents the endpoint of the tree. For a top-level acceleration structure (TLAS), the leaf node may represent the bounding region for an object. For a bottom-level acceleration structure (BLAS), the root may represent the leaf node of the TLAS, and a leaf node of the BLAS may represent a bounding region containing one or more primitives defining the surface of an object. As mentioned in the examples in the background section, it is typically necessary to determine an intersection with a leaf node of a BLAS in order to determine that an intersection between a ray and an object exists. This necessity carries two disadvantages: firstly, testing at a leaf node requires testing against a primitive of an object, which requires a triangle test to be carried out. Typically, triangle tests are more computationally expensive and/or time-consuming to carry out than box tests (and/or, in a hardware system, there may be fewer ray-triangle testing units than ray-box tester). Secondly, in order to traverse to a leaf node, all successive parent nodes must be traversed, which, depending on the complexity of the object, may represent a large number of box intersection tests.

For reasons explained below, regardless of whether the closest-hit needs to be identified, it is generally essential to determine whether an intersection with an object exists for all types of rays. This is done in order to determine how to continue the processing of the ray. For example, an attribute of the ray may be updated or modified, or it may be determined to terminate the processing of the ray altogether. Consequently, it would be advantageous if the existence of an intersection between a ray and an object could be determined more efficiently, e.g., without the need to traverse the entirety of a BLAS all the way to a leaf node. The advantage of determining intersection with objects more efficiently is particularly noticeable for scenes with a larger number of closed objects. The problem is amplified further for traversal algorithms that test nodes of an acceleration structure in a non-depth-first and non-sorted order, e.g. a breadth-first order or hybrid thereof, or in parallel, i.e., which traverse different branches of the acceleration structure concurrently. For example, a set of intersection tests from adjacent branches of a BVH tree structure may be queued for testing either sequentially or in parallel for a given ray or packet of rays. However, parallel testing can proceed in an unpredictable order.

A ray (*r*) can be defined as *r* = *O* + *Dt* where *O* is a vector which represents the ray origin, D is a vector which represents the ray direction and t represents a distance along the ray from the origin. Each ray is associated with a maximum culling distance, also called $t_{max}$, which usually defines the maximum distance at which testing needs to be carried out (i.e., geometry testing need not be carried out beyond $t_{max}$). In other words, $t_{max}$ represents the maximum required test distance of a ray, or the current endpoint of the ray. Thus, where intersection testing is performed breadth-first or in parallel, and potentially in an unpredictable order, it may be the case that many nodes of a BVH are needlessly tested. Such testing may be a waste of the computing resources time because objects associated with those nodes may, in reality, be occluded by an object of another node that is still in the queue to be tested. The problem is that, until the closest hit has been found, $t_{max}$ cannot be updated to reflect the 'true' endpoint of the ray, which means that unnecessary compute power can be wasted testing occluded objects.

For this reason, it would be particularly advantageous to be able to reduce the value of $t_{max}$ at an earlier opportunity, e.g., by providing a method that can determine the existence of an intersection with an object much faster, e.g., with many fewer tests. For example, rather than traversing all the way down to a leaf node of an object to determine the existence of an intersection, it would be especially advantageous if the existence of that intersection could be determined based purely on box tests (which are computationally cheaper than a triangle test, i.e., a test between a ray and a primitive). More generally, it would be especially advantageous if the existence of an intersection could be determined at a higher level in the BVH, i.e., at a node much closer to the root node, thereby significantly reducing the number of box tests that need to be carried out. As noted above, a ray vs bounding region (e.g. AABB) test may be considered a 'conservative hit test of a ray against an object' that may return a 'false positive' but never a 'false negative'. A true hit can typically only be determined through traversal down through the hierarchy to, and the testing of, primitive nodes. Inferring an intersection with an object in this manner at least these two advantages compared to a typical scene model, i.e., i) determining the existence of an intersection between an object and a ray using a test between a ray and a 'new type' of bounding region, rather than between a ray and a triangle/primitive, and ii) determining the existence of an intersection between an object and a ray in (potentially significantly) fewer intersection tests. This dual advantage confers improvements in ray tracing efficiency both for algorithms which traverse an acceleration structure in parallel or in breadth order, and in the case where traversal is implemented serially, or in depth order. Further, it confers a significant advantage in any system for rays that do not require the closest hit but just the existence of a hit, such as shadow rays.

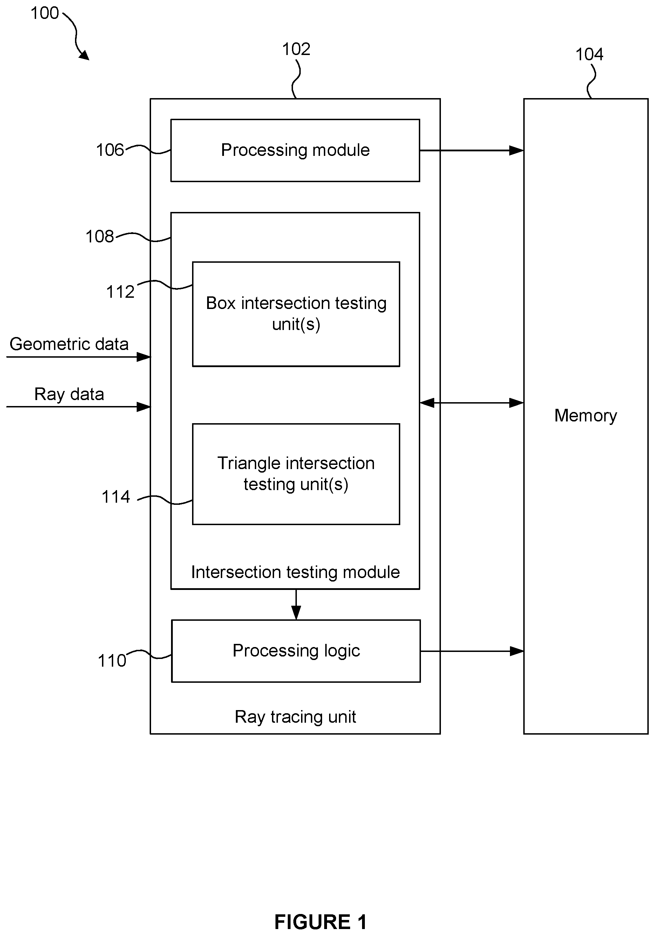

Figure 1 shows a ray tracing system 100 comprising a ray tracing unit 102 and a memory 104. The ray tracing unit 102 comprises a processing module 106, an intersection testing module 108 and processing logic 110. The intersection testing module 108 comprises one or more box intersection testing units 112, one or more triangle intersection testing units 114. In operation, the ray tracing unit 102 receives geometric data defining objects within the 3D scene. The geometric data may also contain any geometric data defining bounding regions or contained regions for use in the intersection testing, and any other geometric feature of the object that may be required (e.g., the interior volume, cavity, the convex hull, or convex deficiency/concavity of on object). The ray tracing unit 102 also receives ray data defining rays that are to be tested for intersection. The rays may be primary rays or secondary rays such as shadow rays or reflection rays. The processing module 106 is configured to generate an acceleration structure based on the geometric data and to send the acceleration structure to the memory 104 for storage therein. Alternatively, the acceleration structure may be pre-determined and form part of the geometric data. After the acceleration structure has been stored in the memory 104, the intersection testing module 108 can retrieve nodes (comprising data defining bounding volumes, e.g., axis-aligned boxes corresponding to the nodes) of the acceleration structure from the memory 104 to perform intersection testing of rays against the retrieved nodes. To avoid reading in the whole acceleration structure at a time, the intersection testing module 108 may retrieve a subset of the boxes from one level of the acceleration structure from memory 104 at each stage, based on the results of previous intersection tests. The box intersection testing unit(s) 112 perform intersection tests to determine whether or not a ray intersects each of the bounding regions corresponding to nodes of the acceleration structure (where a miss can cull vast swathes of the hierarchical acceleration structure). If a leaf node is intersected, then the appropriate ray-primitive testing is performed, e.g., for triangles, the triangle intersection testing unit(s) 114 performs one or more triangle intersection tests to determine which object(s) (if any) the ray intersects. Other primitive types may use other testing units, e.g., procedural models may be done with a shader program.

Use of the box intersection testing unit(s) 112 is extended to performing intersection tests to determine whether a ray intersects a contained region, that is contained within an object, as described below in more detail. In some embodiments, box intersection testing unit(s) 112 may be split, either logically or physically, into two box intersection testing units (or two groups of units thereof), which performs intersection tests with bounding regions and contained regions. In some examples, the same box intersection testing unit (BTU) may be configured to test bounding regions and contained regions, in other words, a single box testing unit could be used twice, i.e., once to test bounding region(s) and once to test contained region(s). In some examples, two or more box intersection testing units are configured to run in parallel: in this case, one BTU can test the bounding region(s) concurrently with the other BTU, which tests the contained region(s). The results of the intersection tests may be used to infer the existence of an intersection with an object, and to indicate which object in the scene a ray intersects. Where a triangle testing unit has determined the intersection, the result may also indicate a position of the intersection point on the object, and may also indicate a distance along the ray where the intersection occurs. Where a box testing unit indicates an intersection with an object, the result generally will not reveal the exact position at which the object and ray intersect (box testing units in some cases, or specifically modified box testing units, may provide the exact position/coordinates of an intersection point at which the object and ray intersect). Advantages of, however, embodiments of the present invention are configured to infer the existence of an intersection with an object without this information. The processing logic 110 is configured to receive the results of the intersection testing. The processing logic 110 is configured to process the results of the intersection testing to determine rendered values representing the image of the 3D scene. The rendered values determined by the processing logic 110 can be passed back to the memory 104 for storage therein to represent the image of the 3D scene.

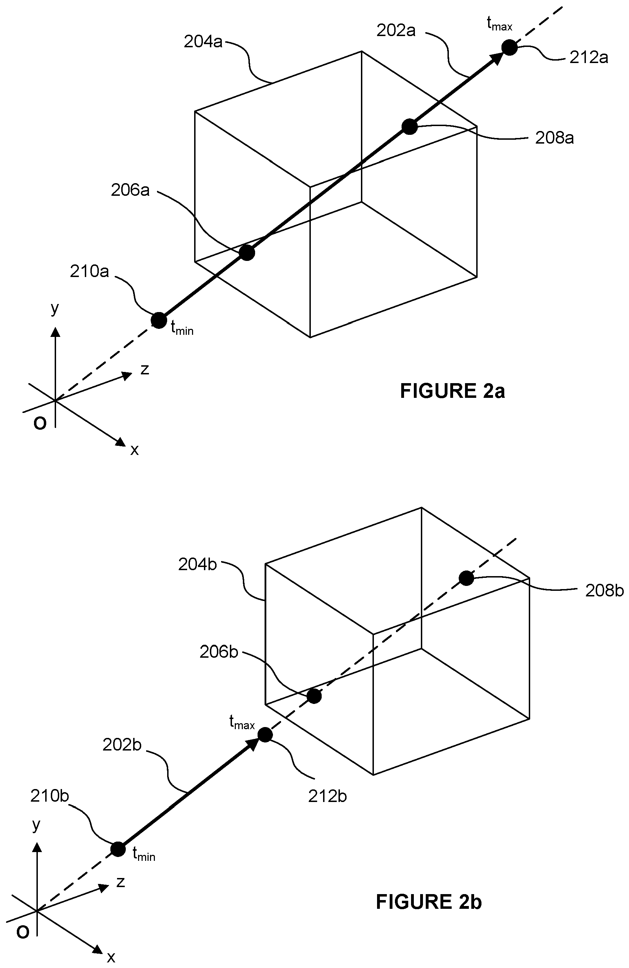

Figures 2a and 2b illustrate the purpose of the maximum culling distance, $t_{max}$, with respect to performing intersection tests with axis-aligned bounding boxes (though the general principle applies for a bounding region of suitable shape, and in 2D or 3D). Figure 2a illustrates an example in which an intersection would be found to exist between a ray 202a and a box 204a, which in this case is an axis-aligned bounding box. The ray can be defined as $r = O + Dt$ where $O$ is a vector which represents the ray origin, D is a vector which represents the ray direction and t represents a distance along the ray from the origin. Thus, the line defining the ray is in principle infinite. The ray itself is therefore characterised by its minimum culling distance 210a, which notionally defines the start point of the ray, and the maximum culling distance 212a, which notionally defines the endpoint of the ray. The minimum/maximum culling distance may also be referred to as the minimum/maximum valid distance of the ray.

The ray 202a intersects the boundaries of the box at two positions 206a, 208a. It will be appreciated that, elsewhere in this disclosure, the intersection point 206a that is least far along a direction of the ray may otherwise be referred to as the 'first' or 'closest' intersection point between the ray and the box. Additionally, the closest intersection point 206a can be referred to as the intersection point at which the ray 'enters' the box (i.e., since the ray vector can notionally be seen as travelling from its start point 210a to its end point 212a). Similarly, the intersection point 208a that is furthest along a direction of the ray may otherwise be referred to as the 'second' or 'furthest' intersection point between the ray and the box, or, the point at which the ray 'exits' the box. In figure 2a, both the intersection points with the box 206a, 208a, lie on positions on the ray that are in between the minimum culling distance and the maximum culling distance. Consequently, the maximum and minimum distance conditions have been satisfied, and the ray 202a will be found in intersect the bounding box 204a.

Figure 2b illustrates an example in which an intersection would not be found to exist between a ray 202b and a bounding region204b. Moreover, because of the distance conditions, an intersection test between the ray (or, formally, the straight line defining the path of the ray) and the box could be avoided altogether. The ray 202b intersects a front-facing plane of the box 204b (i.e., enters the box) at point 206b, and intersects a back-facing plane of the box 204b (i.e., exits the box) at point 208b. Although the line defining the ray 202b does intersect the box 204b, the endpoint of the ray defined by the maximum culling distance 212b, $t_{max}$, is less far along the direction of the ray than either intersection point 206b, 208b. Consequently, the box intersection testing unit is able to determine that no intersection exists between the ray 202b and box 204b without ever having to perform an intersection test between the ray and the box.

The methods disclosed apply to various different kinds of rays. The consequences of the ray processing, subsequent to determining an intersection with an object, can differ depending on the ray type. More specifically, the consequences depend on the 'exit condition' of the ray. In general, two types of rays, each with a respective exit condition, are considered in the present disclosure.

The first type of ray is an 'intersection ray', which typically, and for the purposes of this disclosure, is associated with a 'closest-hit' exit condition. Closest-hit is used to determine the first object that a ray intersects (starting from the start point of the ray defined by $t_{min}$) along the direction of the ray. This exit condition is generally associated with primary, reflected, and transmitted rays. The second type, which include 'shadow rays', is associated with an 'any-hit' exit condition. Any-hit is used for visibility tests between two points. For example, a shadow ray is cast from a surface when checking to see if a point on that surface is lit directly by a light source. Similar types of rays are used for visibility estimation in, for example, ambient occlusion calculations. For such rays, no information other than the existence of a hit is needed, i.e., the position of an object that is hit - provided it is within the $t_{min}$, $t_{max}$ range - is not needed and is thus generally not determined. Such rays might also be used for non-graphics purposes, e.g. path finding and/or character "AI". For brevity, this class of ray will henceforth be referred to simply as shadow rays.

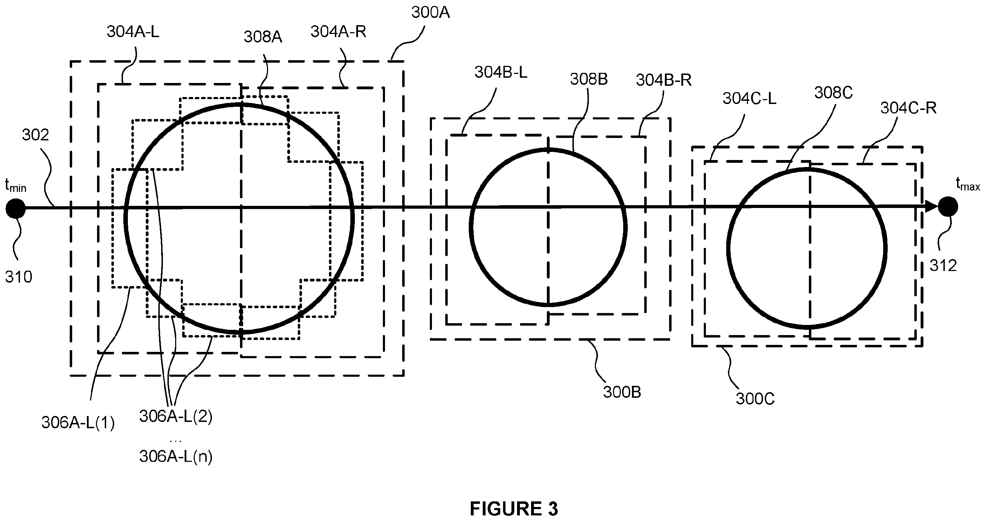

Figure 3 illustrates a 2D representation of a ray 302 and three objects 308A, 308B, 308C within a scene. The scene represented by the illustration may, in fact, be a 2D scene, though may equally be a 3D scene. The ray 302 here could be an intersection ray or a shadow ray, and the consequences for both will be explained below in more detail. Each object is depicted as being contained within a bounding region 300A, 300B, 300C. Within each object-bounding region are left-hand and right-hand bounding regions corresponding to first-generation child nodes. Thus, the left-hand bounding region 304A-L and right-hand bounding region 304A-R represent the two child nodes for the object-bounding region 300A of the first object 308A in the ray's path. Yet further, bounding regions 306A-L(1), 306A-L(2), 306A-L(n) correspond to second-generation child nodes that are contained within the left-hand bounding region 304A-L of the first object 308A.

Therefore, figure 3 depicts the recursively contained set of bounding regions that make up a bounding volume hierarchy (BVH) for a set of three objects.

The ray is additionally defined by a start point 310 and an end point 312, which respectively represent the minimum culling distance, $t_{min}$, and the maximum culling distance, $t_{max}$. It can be seen that the first object 308A occludes the second 308B and third 308C objects for the ray 302 in figure 3. In a first example, let the ray be an intersection ray associated with a closest-hit exit condition. The position of the maximum culling distance is further along the ray than each of the objects and their respective bounding boxes. Therefore, the ray 302 could potentially be tested against the bounding regions for all objects. Indeed, because the ray intersects each bounding region for the objects 300A, 300B, 300C, a traversal algorithm could potentially traverse down the hierarchy for each of the objects until it reaches a leaf node for one of the objects. As mentioned above, typically, an intersection with a primitive (contained in a leaf node of the BVH) of an object would need to be found in order to safely reduce the maximum culling distance. In a worst-case scenario, therefore, a traversal algorithm could first find an intersection with a leaf node on object 308C, then subsequently traverse the portion of the BVH associated with object 308B until an intersection with a leaf node is found, and then again traverse down the portion of the BVH associated with object 308A. This worst-case scenario would therefore involve many (wasted) intersection tests with bounding regions associated with occluded objects 308B and 308C. Moreover, the maximum culling distance would be reduced three separate times in this inefficient scenario. In other, worst-case scenarios, the maximum culling distance may be incrementally reduced even more than three times.

Moreover, even if the BVH traversal algorithm decided (e.g., based on a guiding heuristic) to traverse the portion of the BVH associated with object 308A first, the algorithm would still need to traverse all the way down to a leaf node (which, as seen in the figure, would exist in the second-generation child node 306A-L(1)). During this traversal, the ray may well be tested against bounding regions that would not result in an intersection, e.g., many of the regions contained within child-node 304A-R. Consequently, even if the traversal algorithm traverses the BVH associated with the 'true' closest object 308A, there is still the potential for many wasted intersection tests before the leaf node containing the intersection is reached. This is because the position of $t_{max}$ cannot be updated until an intersection with the object has been confirmed, at which point the position of $t_{max}$ would be updated to the determined intersection point. Similarly, for shadow rays, an intersection needs to be determined before the processing of the ray can be terminated. Thus, even though $t_{max}$ need not be updated for shadow rays, shadows rays are still associated with endpoint, $t_{max}$, that defines a maximum distance that needs to be tested against geometry. Thus, all objects that are between the minimum and maximum valid distance defined by $t_{min}$ and $t_{max}$ have the potential to be tested, potentially unnecessarily (in the sense that the rendering does not depend on an intersection with more distant, occluded, objects).

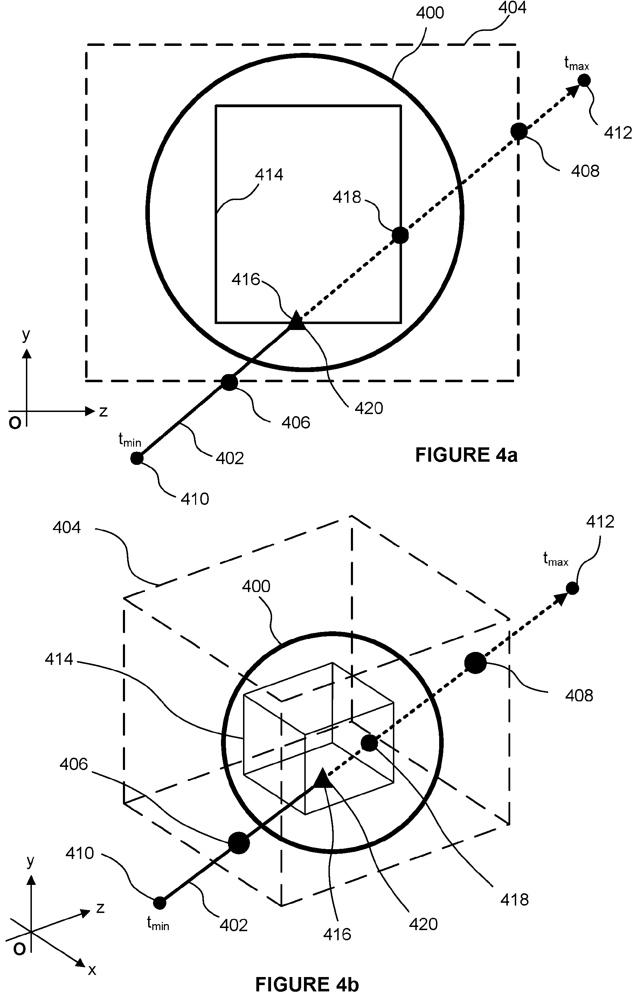

Figures 4a and 4b illustrate an embodiment of a method by which an intersection with an object can be much more efficiently determined. Figure 4a shows a 2D representation, and figure 4b shows a 3D representation of the same scene. The scene shows a ray 402 intersecting with a spherical/circular object 400. The object 400 is contained within a bounding region 404. As can be seen in figure 4b, the bounding region 404 is an axis-aligned bounding box 404, i.e., because the x, y, and z dimensions of the box are aligned with the x, y, z axes of the coordinate system. It will be appreciated that any suitable bounding volume (or an n-dimensional bounding region, in general) may be suitable. The ray 402 has a start point 410 and endpoint 412, defined by the minimum culling distance 410, $t_{min}$, and the maximum culling distance, $t_{max}$, respectively. In figures 4a and 4b, and generally in all figures illustrates bounding regions/volumes, and contained regions/volumes, the regions/volumes may be expanded and/or reduced for illustrative clarity compared to a practical implementation.

The object 400 is a closed object. For the purposes of this disclosure, a 'closed' object may be considered an object that has no 'gaps' in the surface defining its extremities, such that an unbounded ray interacting with a closed object is guaranteed to intersect with the object an even number of times (e.g., for a closed sphere, once on 'entering' the object and once on 'exiting' the object - grazing/tangential "intersections" are discounted). To take another example, a ray and a closed 3D torus would be guaranteed to intersect either zero times, twice, or four times. It should be appreciated that the 'closed' property of an object is independent of the visual attributes of that object (with the exception, for example, of 'alpha tested' geometry). For example, a closed object need not be considered 'opaque' by the ray tracing system. For example, a closed object may be opaque, translucent, transparent, or have any other attribute that informs the rendered appearance of the object. Embodiments of the present method are generally applicable to all closed objects irrespective of the object's visual or attributes.

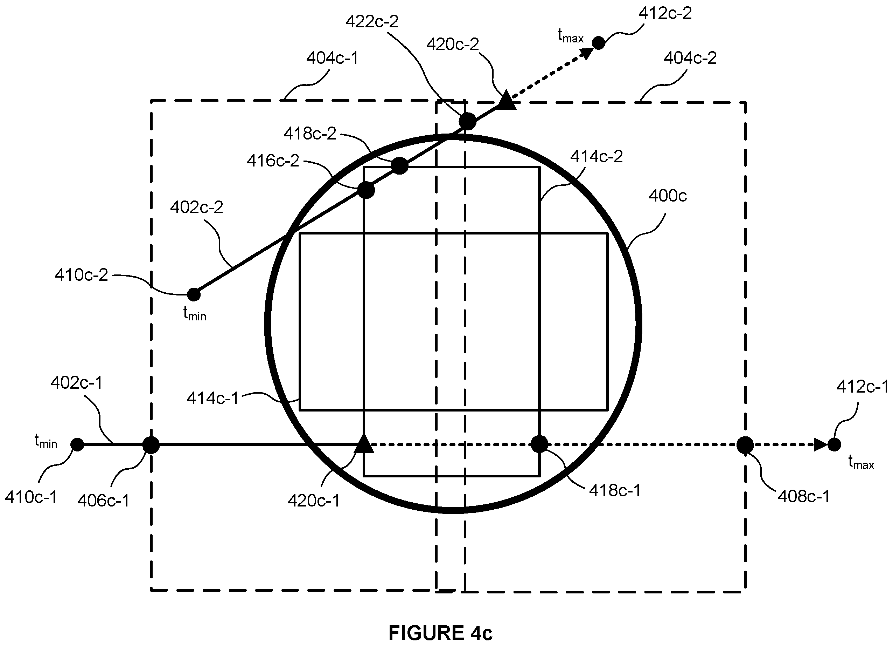

The object 400 in figures 4a and 4b is also defined with a 'contained region' 414. The contained region is wholly contained within the external surface of the object and is thus smaller than the object 400. In this case, a single bounding region 404 is used to contain the entire object, and so it is trivial that if the contained region is wholly contained within the external surface of the object 400 then it is also wholly contained within the bounding region 404. However, it can readily be understood that multiple bounding regions could be used to completely bound the object 400 instead. For example, in this case, one bounding region could be used to bound the left side of the spherical object 400, whilst another could be used to bound the right side of the spherical object. In cases with multiple bounding regions, the union of those bounding regions defines the volume within which contained regions can be identified and defined (i.e. a contained region can extend beyond a single boundary region into another bounding region, provided it is entirely contained by those bounding regions). So, in the example of using two bounding regions to bound the two halves of the object 400, the same contained regions 414 would still be valid, even though it would extend across the interface between the two boundary regions. A specific example involving multiple bounding regions is illustrated in Figure 4c.

The contained region in figure 4b is axis-aligned, though this is not a requirement. For example, the contained region could be an oriented bounding box (OBB), meaning that its axes are oriented in the 'instance space' coordinate system used to define the object. This is in contrast to an axis-aligned bounding box (AABB), which is aligned with the axes defining the coordinate system of the 'world space' that defines the scene. In practice, it would be preferable for the contained region and the bounding volume to be defined using the same axis system. Furthermore, the contained region, or contained volume for a 3D scene, may be any suitable shape, e.g., a cuboid, sphere, prism etc provided that is relatively inexpensive to test against a ray. The advantage of placing a contained region in a closed object is that, if it can be established that i) the ray intersects with the bounding region bounding the object and ii) the ray intersects the contained region that is wholly contained within the object, it can be inferred with certainty that the ray intersects with the object. Consequently, the existence of an intersection with an object can be determined based on only two box intersection tests. The first test is between the ray and the bounding region (e.g., an AABB), and the second test is between the ray and the contained region (which may also be an axis-aligned box). Consequently, the existence of an intersection may be determined without the need to traverse down to a leaf node, thus without performing ray-primitive intersection tests with any of the primitives of the corresponding sub-tree. In the case of shadow rays, determining the existence of an intersection with a contained region may entirely avoid the need to perform an intersection test between a ray and a primitive. Furthermore, this means that the existence of an intersection with an object may be determined using only box testing units 112 (BTUs), and without employing triangle testing units 114 (TTUs), which tend not to be as computationally efficient as BTUs 112.

For an intersection ray, when the existence of an intersection with an object is determined, the maximum valid distance of the ray, $t_{max}$, is reduced by the greatest distance possible that still preserves the integrity of the rendering process (i.e., maintains watertight or non-redundantly watertight properties of the rendering algorithm). For a typical rendering process, when an intersection with a primitive is detected, $t_{max}$ is reduced to be equal to that point of the intersection. In embodiments of the present method, this exact intersection point is not (initially) determined. Therefore, different criteria are generally applied to determine how far to reduce $t_{max}$. Generally, the value to which $t_{max}$ is reduced is no greater than the distance between the endpoint of the ray (i.e., the current value of $t_{max}$) and a point of intersection with the contained region. Specifically, the new, reduced, value of $t_{max}$ may be set such that the new value is no closer to the start point of the ray than the closest point of intersection with the contained region.

In Figures 4a an 4b, it can be seen that the ray 402 intersects the bounding box 404 at points 406 and 408 (corresponding to the entry and exit points of the ray, based on the ray direction). The ray also can also be seen to intersect with the contained region at points 416 and 418. Given that the start point of the ray lies outside the bounding region 404, there is no need to determine whether the start point of the ray lies outside the contained region (because, by inference, it must do). However, for completeness, it is noted that the ray intersects with the contained region an even number of times, i.e., at points 416 and 418. Due to the fact that the ray 402 starts outside the bounding region 404, and intersects with the contained region 414, it can be determined that the ray intersects the object 400. This is because it can be inferred, with certainty, that the intersection point between the object 400 and the ray 402 occurs at some point between the first intersection with the bounding region 406, and the first intersection with the contained region 416. This inference is possible because the object is closed, the contained region is fully within the closed object, and the bounding region is fully outside the closed object.

The objective is therefore to reduce $t_{max}$ by the largest conservative amount given the supplied regions. The motivation for reducing $t_{max}$ as far as (conservatively) allows, is to reduce the possibility that the ray 402 will be needlessly tested against more distant, occluded, objects; it can additionally, reduce the amount of testing of geometry/boxes within the subtree corresponding to AABB 404 / object 400. It cannot be determined, without further intersection tests, where exactly the intersection point with the object is. Therefore, $t_{max}$ can be reduced, at most, to the intersection point 416, between the ray and the contained region, that is closest to the start point of the ray (i.e., the first intersection point 416 with the contained region). Consequently, $t_{max}$ can be updated to an 'updated maximum culling distance' 420, denoted by the triangle in figures 4a and 4b.

In some embodiments which are described in detail below, it is determined whether the ray starts within the bounding region and/or the contained region.. In this regard, if a ray starts within the boundary defined by a closed region, the ray will necessarily intersect with the contained (convex) region an odd number of times. There are various different ways to determine whether the start point of the ray, defined by $t_{min}$ begins inside a contained region. For example. For example, in the case where the region is a box, (no more than) six comparison tests can be performed in respect of the six planes defining the box (e.g., Xmin <= X <= Xmax, and likewise for the Y and Z dimensions) to determine an intersection, which involves determining if a portion the infinite ray is contained within the box. The portion of the ray within the box, i.e., defined by $[t_{enterbox}, t_{exitbox}]$, can then be compared to determine whether the start point lies within that portion, i.e.: $t_{enterbox} \leq t_{min} \leq t_{exitbox}$. In another example, $t_{min}$ can be multiplied by the ray direction and the result added to the ray origin to find the 3D location of the start point of the ray, and that can be compared to the contained region's bounds.

Although the contained region can be any suitable shape or dimension, it can be particularly advantageous for the contained region to be a box that is axis-aligned, which in this disclosure is denoted as an axis-aligned contained box (AACB). This is because BTUs work especially efficiently for axis-aligned geometries. Moreover, if the contained regions are axis-aligned, then the existing hardware of the BTUs can be exploited to perform tests against the contained boxes. In this regard, since BTUs may be used in embodiments to perform fast and computationally efficient intersection tests with axis-aligned bounding boxes (AABBs), embodiments that utilise the contained regions disclosed herein may use exactly the same, or very similar, hardware to also perform intersection tests on AACBs. In this way, embodiments of the present method significantly speed up the traversal of a BVH with effectively no additional hardware cost.

In other examples, the bounding region may be non-axis aligned, e.g. an oriented bounding box, (OBB), or of more general parallelopipeds or convex polytopes formed from the intersections of planar half-spaces. It would be advantageous for the contained region to be based on the same orientations. Other embodiments may allow the contained region to be a sphere or even a cylinder. In some examples, an OBB can still be efficiently tested: i.e., when an OBB is used in some examples, the ray may be transformed into a different coordinate space such that the OBB can then be handled as an AABB. Therefore, in some examples OBBs may also be able to exploit the efficiencies of BTUs that perform fastest when testing axis-aligned volumes.

The contained region 414 inside the object 400 of figures 4a and 4b is merely illustrative of the concept of a contained region, and thus does not maximally occupy the internal space inside the object. It should nevertheless be appreciated that the contained region should be constructed conservatively, i.e., preferably such that it is designed to entirely avoid the possibility of a 'false positive' hit. Bounding regions such as AABBs are also generally constructed to be conservatively larger than they need to be for the same reason. Thus, contained regions are preferably constructed to be conservatively smaller than the extremities of the object within which they are contained. For example, the dimensions of a contained region may be deliberately reduced by a small value e.g., by a small absolute value such as the 'unit in the last place' (ULP), or a multiple thereof. The result of this conservative construction is that a ray will not be found to falsely intersect a contained region, which would have the undesirable consequence of implying that a ray intersects with an object when, in reality, it does not.

Figure 4c illustrates one further example behaviour of ray tracing, this time concerning a standard closed object but contained with multiple bounding regions, or more specifically contained within the union of multiple bounding regions. The circular object 400c, as illustrated in Figure 4a, is contained within two bounding regions 404c-1, 404c-2. Each bounding region 404c-1, 404c-2 contains only a part of the object 400c, but the union of the overlapping bounding regions 404c-1, 404c-2 contains the whole of the object. It is therefore possible to treat the union of a plurality of bounding regions as if it were a single bounding region for the purposes of defining and testing contained regions. That is, intersections with contained regions within one or more bounding regions can be determined with respect to a region defined by the union of the one or more bounding regions. This is advantageous because it allows objects having unusual or erratic shapes to be bounded efficiently using a plurality of overlapping boxes, without unnecessarily limiting the extent of a contained region within the object. Furthermore, it will be observed that no singular bounding region contains a whole contained region 414c-1, 414c-2. However, since the union of the overlapping bounding regions 404c-1, 404c-2 contains both contained regions 414c-1, 414c-2, the contained regions operate in substantially the same way as for the closed object case with a single bounding region.

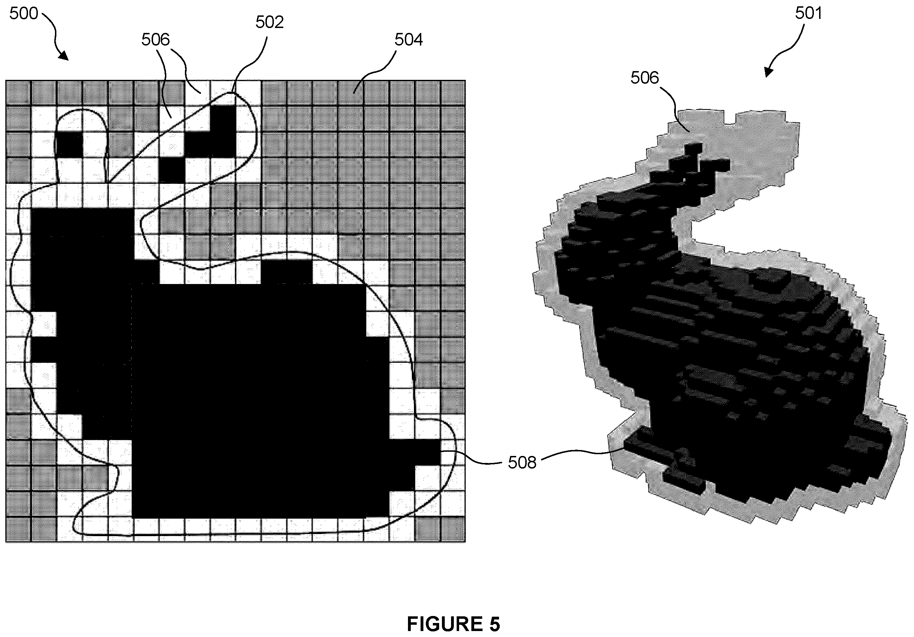

For example, consider a first ray 402c-1 having $t_{min}$ 410c-1 and $t_{max}$ 412c-1 placed outside the union of the bounding regions 404c-1, 404c-2, and which intersects the bounding regions at the entry point 406c-1 and exit point 408c-1. The first ray 402c-1 intersects one of the contained regions 414c-1 at entry point 420c-1 and exit point 418c-1. Since $t_{min}$ 410c-1 and $t_{max}$ 412c-1 lie outside the union of the bounding regions, the value of $t_{max}$ 412c-1 can be updated to the intersection point with a contained region that is the least far along the direction of the ray, i.e., point 420c-1. This is equivalent to the behaviour in Figure 5a, the only difference being that the union of bounding region is treated as a single bounding region.

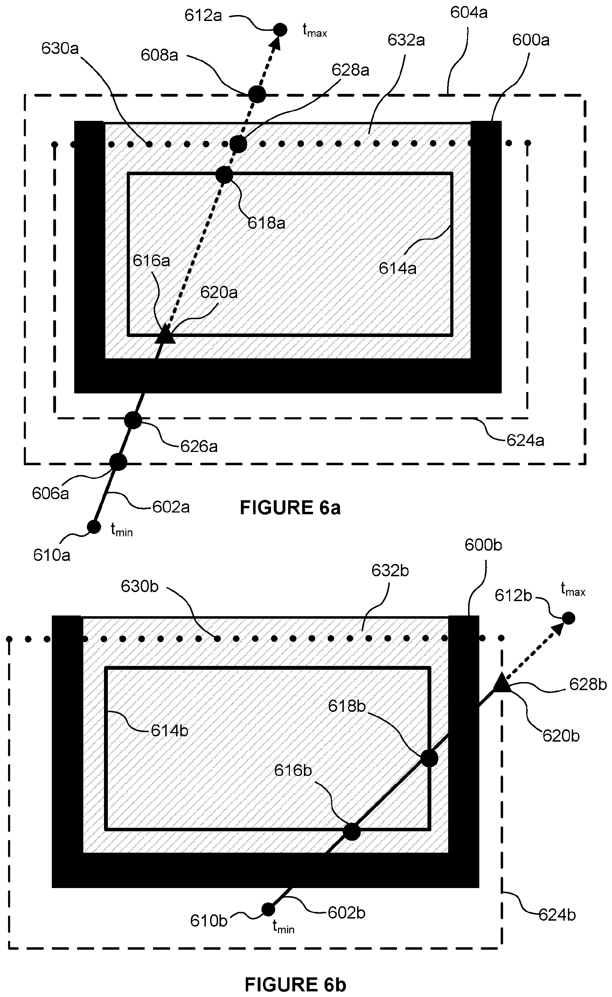

Now consider a second ray 402c-2, which has the start point $t_{min}$ 410c-2 of the ray being inside a bounding region 404c-1, but $t_{max}$ 412c-2 outside the union of the bounding regions 404c-1, 404c-2. The second ray 402c-2 intersects the bounding regions at the final exit point 420c-2. The second ray 402c-2 intersects one of the contained regions 414c-2 at entry point 416c-2 and exit point 418c-2. Since $t_{min}$ 410c-1 lies inside the region (which in this 2D case is a perimeter) defined by the union of the bounding regions, the value of $t_{max}$ 412c-2 cannot be updated to the first intersection point with the contained region 416c-2. Instead, to be conservative, $t_{max}$ can only be updated to the intersection with the union of the bounding regions that is farthest along the direction of the ray, i.e., intersection potin 420c-2. It should be noted that the second ray 402c-2 also intersects with the first bounding region at exit point 422c-2. This exit point 422c-2 is earlier along the ray that the exit point between the union of the bounding regions 420c-2. However, in order to ensure correct behaviour, for conservativism, the value of $t_{max}$ is preferably not updated to the earlier point 422c-2 (even though this point 422c-2 technically an exit point of a bounding region). This ensures that the point at which the value of $t_{max}$ is updated 420c-2 is guaranteed not to cause any undesirable consequences. Again, this behaviour is equivalent to the behaviour illustrated in Figure 6a for the same closed object. Again, the only difference is that the region defined by the union of bounding region is treated as a single bounding region, and portions of the individual bounding regions (e.g., point 422c-2) that are inside the region/perimeter defined by the union of bounding regions 404c-1, 404c-2 is ignored for the purposes of updating $t_{max}$.

For the avoidance of doubt, although the multiple overlapping bounding regions 404c-1, 404c-2 form a region that is substantially rectangular, there is no requirement for this, nor is there any special advantage. The region defined by the union of a plurality of bounding regions can by any irregular shape, and indeed part of the advantage of having a plurality of overlapping bounding regions is that they can be combined/unified to form an irregular shape that compactly bounds an irregular object.

In summary, an intersection between a ray and a contained region can be used to skip acceleration structure traversal, and subsequently cause fewer primitive tests to be invoked during ray-mesh intersection testing. By placing one or more contained regions high up the sub-tree for a certain mesh, those contained regions can be tested early (i.e., before or instead of directly testing the mesh). In response to determining a hit, the result is either to prune traversal branches by limiting the t-max value of the ray, or ending traversal entirely.

As previously known to the Applicant (which is not to suggest that the methods were generally known, or even contemplated) the contained region may be pre-determined for each given object in a scene or may be produced by a graphics engine or other part of the ray tracing system. The construction will depend on the type of object. For example, for objects of fixed dimension (i.e., where the geometry defining the object remains the same), the contained region may be pre-defined, e.g., by the designer or algorithm/API that constructed the object. Thus, the geometry of the object may be associated with a contained region (or multiple contained regions) that is bespoke for that object. Therefore, during ray tracing, the geometry of the contained region may be transferred to a ray tracing unit 102 as part of the 'geometry data' indicated in Figure 1. In other examples, the contained region may be dynamically generated once the acceleration structure/BVH has been constructed for a set of objects in a scene. However, manual construction of a contained region would occupy a significant amount of designer time. It would be advantageous if the designer did not have to manually construct contained regions. Moreover, it is highly unlikely that a designer is capable of manually creating an optimal set of contained regions with good utility.

Thus, as previously known to the Applicant (which is not to suggest that the methods were generally known, or even contemplated), any suitable algorithm for producing a contained region within a closed object may be employed, in principle. For example, in one method, the average centre point of an object may be determined, and a contained region is produced by expanding a region or volume around that centre point until the region occupies as much space as possible within the region defined by the relevant geometry of the object (e.g., external surface for a closed object). Algorithms such as 'flood fill' may also be used. Procedural generation and/or modification of contained regions may also be applied for contained regions that are contained within objects whose shape changes, e.g., moving objects.

However, such naïve algorithmic approaches may still not produce results any better than the manual results by a designer, i.e., contained regions having good utility. In other words, a contained region (or multiple contained regions) produced in this manner may not be optimal. In the present disclosure, reference to 'utility' of a contained region or an 'optimal' set of contained regions refers to a contained region that is able to extract the full potential of the advantages of contained regions mentioned above. More detail on how these advantages are extracted is explained below in more detail.

In general, the overriding objective of good utility for a contained region is that the contained region provides a high probability of a ray interacting with it, given that the ray interacts with the object that contains the contained region. In other words, for an arbitrary ray that intersects with an object, the probability that that ray also intersects with the contained region(s) should be as high as possible. This can be expressed as attempting to maximise the conditional probability of *p (ray hits contained region | ray hits object)*. However, generating a set of AACBs that maximises this value, without generating so many contained regions so as to degrade the performance of an intersection testing system (i.e., by producing too many regions that must be intersected-tested against each ray) is a highly non-trivial problem.

Consequently, the present disclosure provides methods that solve the problem of how to generate one or more efficient and useful contained regions, i.e., having good utility. In addition to the above overriding objective, another implicit objective for a set of generated contained regions is that their use in an intersection testing method should, on average, save more time (i.e., by culling BVH branches in the case of the 'closest hit' condition, and/or culling rays altogether in the case of the 'any-hit' condition) than the cost of performing intersection tests against the additional contained regions. Contained regions are not an alternative to bounding regions, since a bounding region will always be tested first, before reaching the contained regions within the BVH.

Consequently, at a high level, the solution provided by the present disclosure are to generate one or more contained regions which

i) provide good utility by optimising the ability to occlude objects, thus capturing a significant proportion of rays that actually intersect the object; and

ii) achieve i) with a reasonably low number of contained regions such that, overall, the cost of performing intersection tests against the additional contained regions is outweighed (preferably significantly outweighed) by the time saved in the overall traversal.

As mentioned above, it is possible that contained regions can be generated manually to solve the above two-problems, but this is labour-intensive and thus not desirable. Moreover, the manual approach is not possible on-the-fly, e.g., for non-static objects.

For the purposes of the present disclosure, there are three different classes of object that can exploit contained regions to improve ray tracing efficiency. These three different objects all use the same underlying method for generation of contained regions, although some variations apply for each specific case. The three types of objects are as follows:

1) Closed object: these are objects whose mesh is fully connected and closed, such that no gaps exist in the object mesh. It is therefore not possible for a ray to penetrate inside the object without intersecting the object mesh. These objects may also be termed 'watertight'. A convenient mathematical term which can describe this closed mesh property is an object having a manifold mesh.
2) Concave object: An object that has a convex region that defines a cavity or basin or the like.
3) Contiguous surface object: a surface with no holes but which may not be closed. It should be noted that all local regions of the mesh of a closed object represent a contiguous surface.

In the foregoing examples, the example used to explain methods in respect of closed objects is a Stanford bunny, the example concave object is a bowl, and an example of a contiguous surface object is a substantially flat portion of a mesh.

Voxelisation of Objects

Figure 5 shows a 2D and 3D representation of a closed object, in this case the Stanford bunny 500. One feature common to all methods for generating contained regions in the present disclosure is that the object is subdivided into voxels in the first instance. Generally, a voxel is a three-dimensional counterpart to a pixel, and it represents a unit value on a regular grid in a three-dimensional space. Typically, the dimensions and locations of voxels may be pre-defined as part of the geometry of a scene. However, it will be appreciated that not all voxels disclosed in the present specification have to have a unit size, and indeed not all voxels described herein are required to being quantised to a unit value of a voxel. For example, an 'expanded voxel' as described herein may be any arbitrary size. Moreover, a voxel hierarchy could be employed (voxelising the object at different granularities), in which case voxels can be different sizes.

Although many examples in the present specification are 3D examples, and a voxel is an inherently 3D object, it should be appreciated that the presently disclosed methods are applicable to 2D cases as well in respect of closed objects, concave objects, and contiguous surfaces. Therefore, for the purposes of this specification, a voxel is not strictly limited to a 3D object, but can represent a 2D object as well.

The decision to use voxels follows from the observation that it is possible to take cuboid groups of voxels to make an AABB. This is because the voxels in a 3D scene are usually axis-aligned with the space-coordinate system. Constraints can then be imposed upon the AABB, in particular where the AABB is positioned, to thereby make it into a valid AACB. As a simple example, if we take a conservative solid voxelisation of a mesh (i.e. inner voxels that are strictly inside the mesh), any AABBs only within these voxels will also be valid AACBs.

For closed objects, the first step is to identify and classify the different types of voxels that make up the object. For closed objects, the key type of voxel to be identified is that which lies strictly within the object's mesh, and which does not intersect with the object. This type of voxel is referred to as an 'inner voxel'. There is a presumption here that it has already been identified that the object is closed. This is not always the case, and in some examples, the first step is to pre-process the mesh to determine whether or not the mesh of the object is closed. Mesh pre-processing steps are described below in more detail. The other type of voxel that is identified is a 'boundary voxel'. Boundary voxels are those which intersect with the mesh of an object.

At a high level, the steps involved in identifying 'inner voxels' and 'boundary voxels' are as follows:

i. Generate or identify a 'voxelised hull': In effect, this involves defining the extent/boundary of the closed object (i.e., determining that the mesh is a manifold mesh and thus watertight). For an area of the mesh that contains the object, every voxel that intersects the mesh is labelled as a 'boundary voxel'. The set of boundary voxels should then form a closed boundary, and this closed boundary defines the 'voxelised hull'.

ii. Fill inner volume: Once the voxelised hull has been identified, every voxel inside the voxelised hull is then labelled as an inner voxel.

One way to perform step i), rather than start from a (relatively) fine voxelisation of the object, would be to use a voxel hierarchy. Starting from a (relatively) coarse voxelisation, boundary voxels can be identified and then those identified voxels can be sub-divided before smaller voxels are re-evaluated to determine if they are boundary voxels or not. By repeating that process the voxelisation can be refined around the mesh to identify the boundary voxels at the desired granularity. This can be an efficient way of identifying and storing the boundary voxels as it avoids having to consider whether every voxel at the ultimate/ finest voxelisation granularity is a boundary voxel. This can reduce memory usage because, at each level in the voxel hierarchy, the only voxels that need to be considered are those within a voxel that was identified to be a boundary voxel at the next coarsest level of granularity up.

In practice, step ii) may be done by performing scanline passes of the grid of voxels, and labelling all voxels lying between 'entry' and 'exit' boundary voxels as inner voxels. This is merely one example, and other methods of identifying inner voxels also exist and are usable. Solid voxelisation is only one approach to classifying these voxels, and other voxelisation methods would be interchangeable here so long as the result is a voxelised hull (defining the boundary voxels) and voxelised inner volume (inner voxels). For example, if a different method were used which generated a voxelisation of all the required voxels, these could be separated by subtracting the easily-computed voxelised hull: $voxels_{inner} = voxels_{all} - voxels_{hull}$. As another example, a voxel hierarchy approach similar to that discussed above for step i) may be used. In this case, if an inner voxel is identified at a coarse level then again a memory usage efficiency arises because voxels at a finer level can be allocated as inner voxels without being explicitly considered individually.

Figure 5 shows a 2D Stanford bunny object 500 and a 3D Stanford bunny object 501, both of which have been voxelised, and where the voxels have been categorised as described above. The mesh boundary of the object is shown as the solid black line 502 in the 2D object 500. The mesh surface of the 3D object 501 is not shown merely for illustrative clarity. In both the 2D and 3D objects, as the solid black line 502 in the 2D object 500. The mesh surface of the 3D object 501 is not shown merely for illustrative clarity. In both the 2D and 3D objects, the black squares represent the inner voxels 508. It can be seen that these inner voxels are contained entirely within the object's surface 502. The white squares in the 2D object (and light grey squares in the 3D object) represent the boundary voxels 506. For the 2D object, it can be seen that each of the white boundary voxels 506 intersects with the line defining the objects surface 502.

All remaining voxels that have not been classified as either inner or boundary voxels are deemed as 'uncategorized' or 'empty'. It is not necessary to explicitly classify/label these voxels for this reason, since they can simply be left as 'uncategorized'. It is generally beneficial for these voxels to be left as uncategorized, so that they may be classified as 'concavity' voxels (described below) later on, if necessary. The dark grey squares in the 2D object 500 of Figure 5 represent the uncategorized voxels 504.

As is described in more detail below, contained regions are generated starting from voxels classified as inner voxels. In theory, every single 'inner voxel' is already a valid contained region without any further manipulation (specifically, an AACB since it is likely to be axis-aligned). This is because every inner voxel is contained within the geometry extents of the object (e.g., for a closed object, it's outer surface), and does not intersect the mesh of the object. However, a 3D object would contain a very large number of small voxels. If these inner voxels were not further modified, such a large number of small AACBs would have little utility, because the ray tracing system would have to test so many boxes against each ray. This would be counterproductive, since the objective of using contained regions is to save time overall by performing a small number of box intersection tests to save traversal time, and so adding hundreds or thousands of AACBs to the BVH would use an undesirable amount of testing resources.

In some examples, in order to speed up the solid voxelisation step and provide us with quick access to useful data later, two types of auxiliary data structures may be generated during voxelisation: a 'voxelised hull map' and an 'occupancy mask'. The voxelised hull map is a spatially partitioned data structure (e.g. kd-tree) containing positions of boundary voxels. This voxelised hull map allows quick querying (O(log n)) of the nearest boundary voxel to any arbitrary voxel which enables quick calculation of the voxel density metric (which is one example of an occlusion utility metric). This metric, as described in more detail below, is used to select which voxel to use to generate a contained region (e.g., an AACB). The occupancy mask is a 2D bitmask of the voxel-grid for a projection of the mesh, usually projected from a principal axis (i.e., an axis aligned with the 3D space-coordinate system). The occupancy mask stores the minimum and maximum indices of occupied voxels (i.e., voxels that have been classified either as inner or boundary voxels) in the corresponding grid slice. The occupancy mask can be thought of as a of hierarchical z-buffer (HZB) for the voxelised mesh from a principal axis (thereby making it GPU-optimized). For 3D cases, three of these masks are generated (one per principal axis), and subsequently they are used to 1) speed up solid voxelisation by limiting start and end points of the scan-line passes (used to identify the inner voxels between the boundary voxels); and 2) calculate surface area utility criteria (described in more detail below). In short, surface area utility criteria comprise one or more criteria that are used during the generation and/or selection of contained regions to determine whether to use an AACB. For example, surface area utility criteria may be used to reject AACBs that are highly occluded, or place an AACB (sometimes by replacing another AACB) that performs better than at least one existing AACB.

Turning now to concave objects, despite the fact that these objects comprise an opening such that rays may penetrate an interior cavity of the object (e.g., the basin of a bowl, the inside of a vase, or the interior of a pipe), it is still useful in many cases to define contained regions within the cavity of the object (which in some cases may be the convex hull of the object). Before describing the voxelisation process for concave objects, their properties for intersection testing purposes with contained regions is briefly described.

Figure 6a shows a modified use of a contained region 614a for use with an object. In this case, the object 600a comprises an open cavity, and the 2D figure is intended to be representative of a 3D mug or vase. The object is bounded by a bounding region 604a defined in the 'standard' way, i.e., such that it contains the entirety of the object. Additionally, within the standard bounding region 604a is a further bounding region referred to as a 'partial bounding region' 624a. The partial bounding region 624a is constructed to contain all portions of the object 600a defining the open cavity, i.e., the concave portion of the object (including both external and internal walls). The partial bounding region is also constructed to exclude portions of the object defining an 'opening' of the cavity: in this case, the lip of the vase-like object 600a. Due to the fact that the partial bounding region is specifically intended to exclude 'open' portions of the object, the surface that provides this exclusion function is treated differently to other surfaces of the region, and is referred to as an 'exception surface' 630a. In this disclosure, the reference to an 'exception surface' 630a refers to a surface of a contained region, or the surface of a voxel, that intersects with the mesh of an object.

It should be appreciated once again that the bounding region 604a, contained region 614a, and partial bounding region 624a are intended to also represent 3D objects, i.e., boxes. In the case that the partial bounding region 624a is a 3D partial bounding box, or partial axis-aligned bounding box, five of the six faces of the partial bounding box 624a are 'standard' surfaces, and one face of the partial bounding box 624a represents the 'exception surface' 630a. In this specification, any reference to 'standard' surface means a surface of a partial bounding region that is not an exception surface.

It should be understood that all examples in the specification that are shown in 2D could equally relate to 3D examples, and vice versa. 2D examples are used primarily for illustrative clarity. References to 'surface' are used throughout the present disclosure, again, for consistency and clarity of terminology. However, references to 'surface' should not be interpreted as being restrictive to a 3D embodiment. For example, in 2D embodiments, as in figures 6a and 6b, the exception 'surface' would in fact be a line, i.e., an 'exception line'.

Given that the object 600a has an open cavity (i.e., a substantial concave portion), the contained region makes more efficient use of space if it is allowed to occupy this open cavity 632a, rather than being constrained to being constrained within the outside surfaces of the object (i.e. inside of the walls of the vase, in this example). Consequently, the contained region is constructed to be contained within the outside surfaces of the object. The cavity/concavity of the object may also be defined as the 'convex deficiency' of the object, which is the region of space that is formed in between the convex hull of the object and the external contours of the object. The convex deficiency 632a is shaded in figure 6a.

The ray 602a is defined in the standard way, i.e., having a start point, $t_{min}$, defining the minimum culling distance, and an endpoint, $t_{max}$, defining the maximum culling distance. A 'hit' with the standard bounding box 604a would also be determined in the standard way. Following this determination, it is determined whether the ray 602a intersects with the partial bounding region 624a. If the ray intersects the partial bounding region 624a, it is determined whether the ray intersects the contained volume 614a. In the standard 'closed object' scenario, $t_{max}$ could be safely updated to the closest intersection with the contained region. For the cavity object, since the object has an open face that is excluded by the 'exception surface' of the partial bounding region, at least one additional test is included to determine the type of surface on the partial bounding region with which the ray intersects. In general, the following factors are used to determine whether, or how, to update the $t_{max}$ of a ray (it is presumed in this case that the start point and end point of the ray lie outside of the partial bounding region (PBR) as in figures 6a and 6c):

1) If the ray does <u>not</u> hit a contained region then it cannot safely be determined whether the object is hit by the ray;

2) Else (i.e., the ray <u>does</u> hit at least one contained region) if the entry point on the PBR is a standard surface (regardless of the type of PBR surface at the exit point), $t_{max}$ may be adjusted to the minimum of i) the entry point of the contained region (e.g., 620a) and ii) the existing $t_{max}$;

3) Else, the entry point of the PBR must be via an exception surface (i.e., entry point 626c of figure 6c), and thus $t_{max}$ may be adjusted to the minimum of: the exit point of the PBR (e.g., 628c) and ii) the existing $t_{max}$.

Thus, in figure 6a, it is determined whether the closest intersection point between the ray 602a and the partial bounding region 624a lies on the exception surface 628a. In figure 6a, it can be seen that the closest intersection point 626a with the partial bounding region 624a is a 'standard' surface. It can also be seen that the ray intersects the contained region 614a. Therefore, it can be inferred that the ray passed through the object 604a by entering on an externally facing part of the object (i.e., a surface of the object that is not next to the main concavity 632a of the object). Consequently, the intersection point between the ray 602a and the object 600a must lie no further along the direction of the ray that the closest intersection point 616a with the contained region. This is illustrated in figure 6a by the solid portion of the ray 602a, which indicates the length of the ray that contains the intersection with the object. On this basis, $t_{max}$ can be conservatively updated, i.e. as shown with triangular point 620a, to the closest intersection point 616a with the contained region. For completeness, it is noted that, even if the start point 610a of the ray lay inside boundary of the standard bounding region 604a, the outcome would be the same in respect of updating $t_{max}$ because it is still outside of partial bounding region 624a

In figure 6b, the 'standard' bounding region is not shown for brevity, though its existence, and the existence of an intersection between the ray and the bounding region, are presumed. In figure 6b, the start point 610b of the ray lies inside the partial bounding region. Given this, it cannot easily be determined (i.e., without traversing further down the hierarchy) whether the start point of the ray lies before or after the external surface of the object 600b. However, it may be possible to conservatively determine that at least one intersection with the open object 600b exists. Specifically, if it can be determined that the ray intersects the contained region 614b, and that the start point of the ray lies outside the contained region, it may be possible to reduce $t_{max}$. In order to conservatively do this, it is determined what type of surface on the partial bounding region 624b the ray intersects with in order to infer whether the ray exited the object via the main concavity of the object. Thus, the other condition to be satisfied is whether the furthest intersection point 628b with the partial bounding region (or in this case, the only intersection point) lies on an exception surface. Since the ray does not intersect an exception surface, it can be inferred that an intersection with the object 600b must exist. Consequently, provided that it results in an overall reduction of $t_{max}$, $t_{max}$ can conservatively be updated, i.e. as shown with triangular point 620b, to the furthest intersection point 628b with the partial bounding region 624b. If the start point of the ray 610b lay outside the partial bounding region 624b in the figure 6b scenario, $t_{max}$ could be reduced even further (because, in that case, it would be possible to infer that the intersection with the object occurred no further along a direction of the ray than the closest intersection with the contained region).

The treatment of shadow rays is not shown here, for brevity. However, for at least the types of intersection shown in Figures 6a and 6b, if the ray were a shadow ray (or any ray being tested using the 'any-hit' intersection exit condition) the traversal of the ray would be terminated immediately.

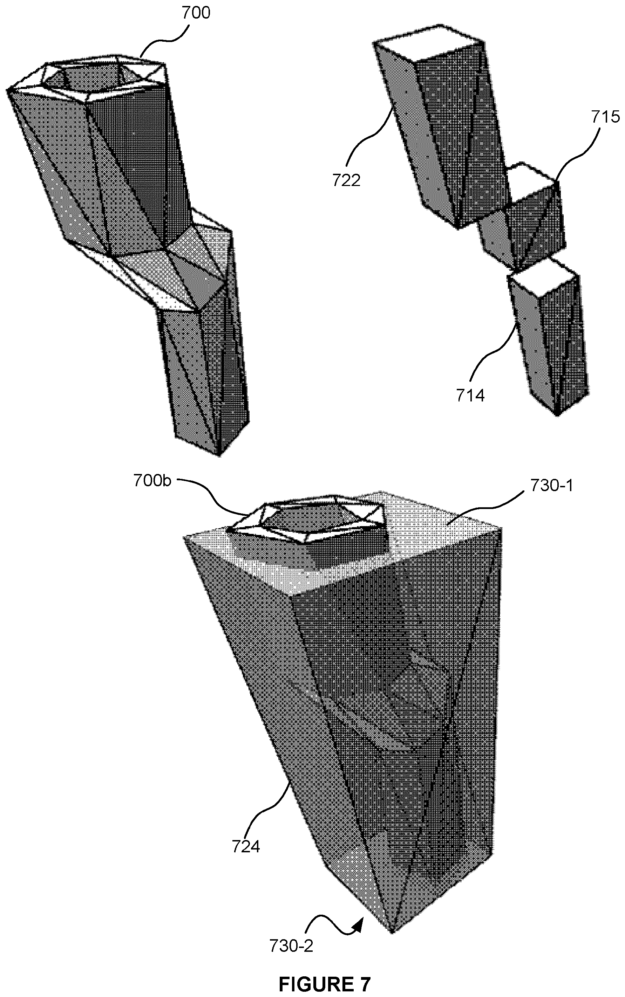

Figure 7 shows another example of an object having a cavity, in this case a pipe 700 having a crook through its centre, and having an opening at both ends. This example is included for completeness, merely to show another example of an object having a cavity and/or concave region. Again, there exist rays (not shown) that can pass un-occluded through one opening and out the other. Three contained regions 700, 714, 715 that could be used in conjunction with the crooked pipe are shown in the upper right drawing. As with other examples, the contained regions should be contained within the outward facing surfaces of the pipe and also contained within the partial bounding region. The contained regions 700, 714, 715 in this example are axis-aligned boxes. An example partial bounding region 724 for use with the crooked pipe is shown in the lower drawing. Since the pipe has two openings, the upper and lower faces of the bounding box 724 are treated as exception surfaces 730-1, 730-2, because both of them intersect the object mesh and thereby exclude the openings of the pipe. The upper exception surface 730-1 is shown. As before, these as exception surfaces 730-1, 730-2 are used to exclude the openings of the pipe from the partial bounding region.

It should be apparent from Figures 7 that, in order to infer an intersection between a ray and the pipe object 700, the ray should intersect at least one 'standard' surface of the partial bounding region. In this disclosure, 'standard' surface is used to indicate a surface of a partial bounding region that is not an exception surface. In other words, an intersection ray that intersects with the partial bounding region only via exception surfaces cannot conservatively be deemed to intersect with the object. This should be apparent, because in the case of Figure 7, a ray that intersects with both of the exception surfaces may pass through the centre of the pipe and therefore not intersect the pipe 700. Thus, Figures 7 provide an example in which a ray cannot always have its maximum valid distance reduced (or, for a shadow ray, have its processing terminated) even if the ray intersects with two faces of a bounding region and one or more contained regions.

As shown in Figures 6a, 6b, and 7, the contained regions are placed within the concave region (e.g., the convex hull) of the concave objects. However, unlike the closed object shown in Figure 5 where contained regions are generated starting from inner voxels, there are no inner voxels within the cavity of these open objects. This is because an inner voxel should in most cases be entirely enclosed within the mesh of a closed object, and not intersect the mesh, though for some classification algorithms this constraint could be relaxed (e.g. to include voxels from "hidden regions", which are discussed in more detail below). Thus, in order to generate contained regions for concave objects, the present inventors have established a method of identifying voxels that form part of the concave region of an object.

In general, 'concavity voxels' are those that are not inner voxels, and which lie within the 'concave subsection' of an object. The 'concave subsection' of an object may be defined in different ways. For example, at least the following two conditions would be necessary to define a concavity voxel i) voxels that fall within the convex hull of an object, and ii) voxels that are not inner voxels. In some cases other conditions may be required, e.g., the condition that the concavity voxel is 'shielded' from empty voxels by an exception surface. Consequently, it is possible that some voxels that would be classified as 'boundary' voxels may be classified as concavity voxels. Thus, voxels can be classified as both boundary voxels and concavity voxels. However, it is not possible to classify a voxel as both an inner voxel and a concavity voxel.

The aim is therefore to label all 'empty' voxels (i.e., uncategorized' voxels that are not inner voxels or boundary voxels) that lie within a concave subsection of a mesh as concavity voxels. Concavity is characterized by curvature, and so at least regions that are surrounded by positive curvature can be considered a 'concavity' (which is not to say that certain regions with negative curvature could not also comprise concavity voxels). Such regions can be found quickly within a voxel grid, for example by checking if this holds orthogonally, i.e., if an empty voxel is completely enclosed (in at last one cross-section) by non-empty voxels (boundary or inner voxels).

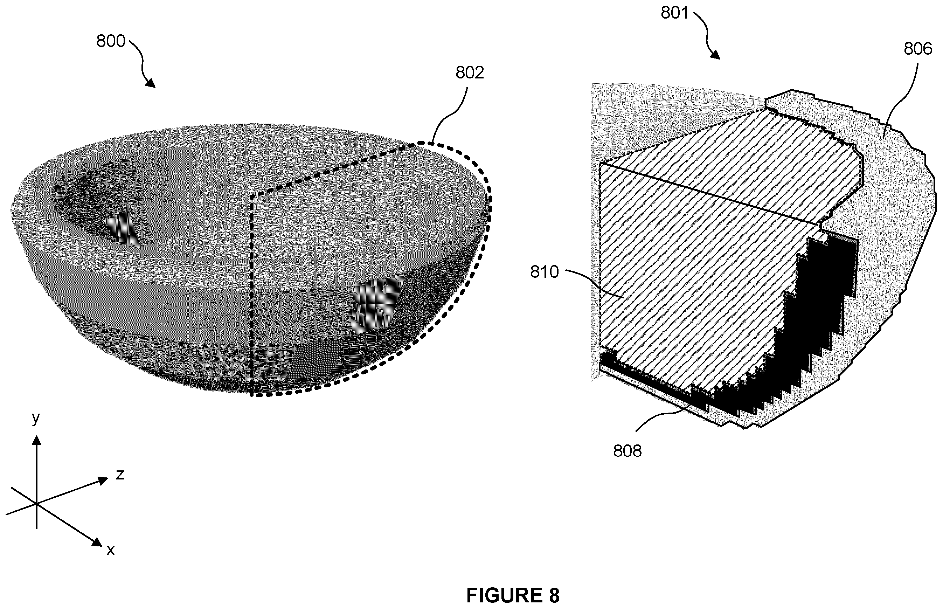

Figure 8 shows a 3D example of a bowl 800. The bowl 800 is illustrated by its mesh, and so the surface exterior of the object is shown. The walls of the bowl are thick, and so in theory one could place inner voxels inside the closed region within the walls of the bowl. However, contained regions generated from these inner voxels would be highly restricted in surface area (and volume) and so would lack utility. It would be better to identify concavity voxels within the cavity of the bowl. The right-hand diagram in Figure 8 shows a quartered section 801 of the bowl. The dimensions of the quartered section are indicated by way of the dashed line 802 on the mesh 800. The outermost region (light grey) indicates the boundary voxels 806, i.e., the voxels that intersect with the surface of the bowl. The black region within the wall of the bowl represents the inner voxels 808. The largest region, being the striped/shaded region, represents the concavity voxels 810. It can be seen from the quartered section 801 that the region containing the concavity voxels 810 represents by far the largest region in the bowl. It would therefore be advantageous to generate contained regions using these concavity voxels, and thereby placing a contained region within the space occupied by the concavity voxels. Contained regions generated in this way would therefore have the potential to occlude a large proportion of the object, and thereby provide good utility.

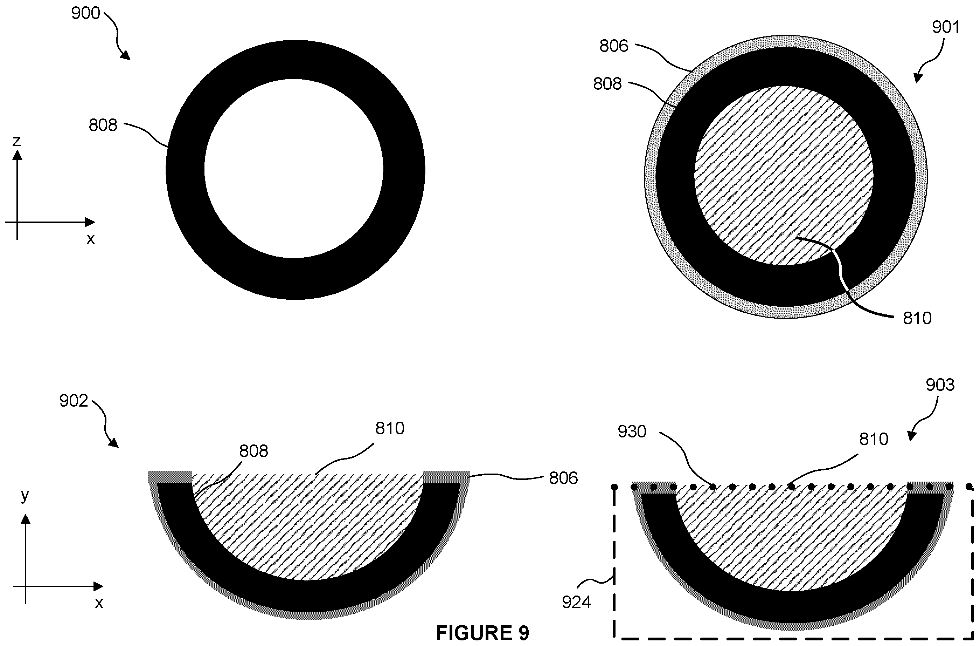

Figure 9 illustrates the voxels categorised from the bowl shown in Figure 8. The illustrations in Figure 9 show 2D cross sections of the bowl and its voxels from different perspectives. Figure 9 illustrates how the cross-sections of a 3D object can be used to identify/categorise the concavity voxels. In general, identifying the concavity voxels may comprise determining the subset of voxels that are enclosed, within a cross section of at least one dimension, by a plurality of boundary voxels. One such method of performing this is to scan the cross-sections of an object from three orthogonal planes (aligned with the three primary axes).

For each scan, any set of 'empty' voxels (unclassified as inner or boundary) that are completely contained by 'occupied' voxels (i.e., those classified as inner or boundary) can be labelled as concavity voxels. Figure 9 shows a Y-axis cross-section 900 of the bowl (i.e., viewed from above). Here, every voxel within the disc (representing the walls of the bowl) is fully enclosed by the curvature of the object at that scan position, and so can be labelled as a concavity voxel. The scanning and labelling of 2D cross sections is repeated in all three dimensions, preferably along the primary axes. A concavity voxel is one that is fully enclosed by a cross-section in any dimension, and so there is no requirement for a concavity voxel to be enclosed in more than one dimension. As discussed above for inner voxels, voxel hierarchies could be used in a similar fashion when identifying concavity voxels to reduce memory usage.

In another example, determining concavity voxels could be done by performing a flood-fill on empty voxels starting on the edge of the grid only. This would identify non-enclosed regions of the cross-section. This corresponds to finding all empty voxels on the exterior of the disc. Afterwards, any empty voxels not found by the flood fill can be inferred to be within the interior of the disc, and so can be immediately labelled as concavity voxels. The voxelised Y-axis cross-section 901 of the bowl on the right-hand side of Figure 9 shows the three different voxel categories again. It can be seen that the concavity voxels 810 directly border the inner voxels here. This is because some boundary voxels may also be categorised as concavity voxels. The only boundary voxels 806 shown in the voxelised Y-axis cross-section 901 are on the very outer edge of the bowl.

The bottom-left diagram in Figure 9 shows a voxelised z-axis cross-section of the bowl. It can be seen that the concavity voxels do not extend beyond the upper surface of the bowl. This is a property of the concavity voxels because, in order to use the contained regions effectively (as demonstrated in Figures 6a and 6b), a partial bounding region must exclude the part of the object defining the opening. In other words, all contained regions must also exist with the partial bounding region, and so the concavity voxels used to define the contained regions must lie within the boundary defined by the exception surface of the partial bounding region.

The uppermost concavity voxels 810 can also be used to define the partial bounding region in the first instance. For example, when identifying the concavity voxels, the concavity voxels that are immediately adjacent to an 'empty' voxel can also be categorised as lying on the boundary of the concave regions. This boundary can then be used to place the exception surface of a partial bounding region. The bottom-right diagram in Figure 9 shows another z-axis cross-section 903 with a partial bounding box 924. It can be seen that the exception surface 930 of the partial bounding box 924 borders the upper layer of the concavity voxels.

Since the cross-section scanning method considers the primary axes, preferably the object should be axis-aligned. This is beneficial since, usually, the voxels will be axis-aligned and therefore the exception surfaces will also usually be axis-aligned and lie in the XY, XZ, and YZ planes. However, it should be noted that in some embodiments, it is possible to align both the bounding region and contained regions with the orientation of the object, i.e., thereby defining oriented bounding boxes (OBB) and oriented contained boxes (OCB). This method also relies on the voxel labelling already having been performed, i.e., such that inner and boundary voxels are labelled. Thus, in other examples, it would also be possible to consider other axes for the scanning, e.g., diagonals instead of just orthogonal directions.

Yet another type of object is able to exploit contained regions in a similar way to closed objects, despite the fact that the object is not technically closed. This object is referred to as a non-closed self-concealing object with a hidden region. The mesh of the object itself may be watertight (i.e., contain no cracks or gaps), but the object contains some opening or slot. Generally, a self-concealing object means an object which has an internal region that behaves as a closed object. More specifically, a 'hidden region' within a self-concealing non-closed object in this context means a region within an object (which may be 2D or 3D) that is

i) not fully enclosed by a closed boundary, i.e., it is accessible by some curved or multi-step pathway from the exterior of the object (though separately from non-closed objects, as explained above, some fully closed objects may be treated has having hidden regions that are not accessible by any path); and

ii) fully hidden from view from the exterior of the object, i.e., no straight line is able to intersect any part of the hidden region via any opening, hole, or gap in the object.

Practical examples of such a non-closed self-concealing object might be a conch shell, a post-box, or a tunnel with multiple sharp bends. In other words, a hidden region is obscured from all possible viewing angles external to the non-closed self-concealing object. It will be appreciated that some objects might be treated as having hidden regions within a concavity, rather than being closed (although these behave essentially equivalently for ray tracing purposes).

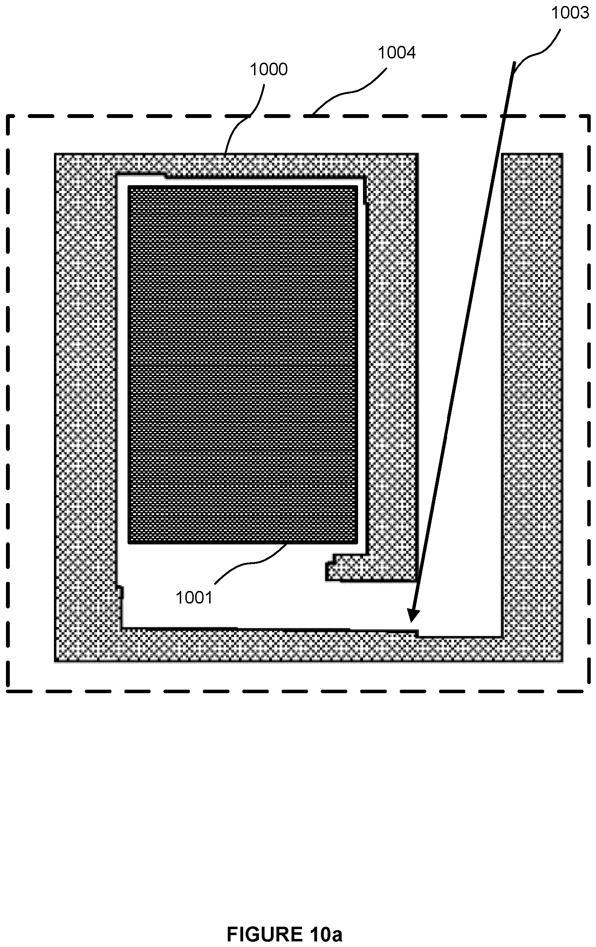

Figure 10a illustrates a 2D example of a non-closed self-concealing object 1000 having a hidden region. This object 1000 curves around on itself such that it encloses a hidden region 1001. It should be appreciated that not all non-closed self-concealing objects fit into the class of objects. For example, at least one condition that should be met, in order to be able to treat the non-closed self-concealing object as if it were a closed object for intersection testing purposes, is that for a suitable bounding volume around the entity of the object (e.g., an AABB) it must be impossible for any ray, i.e., a straight line, to intersect both the outer bounding volume and the hidden region without striking a surface of the object on entry and exit. In other words, for a ray that starts and ends (i.e., has $t_{min}$ and $t_{max}$) outside the bounding volume, and intersects the hidden region, it must be guaranteed that the ray will intersect the object at least twice (i.e., on entry and exit).

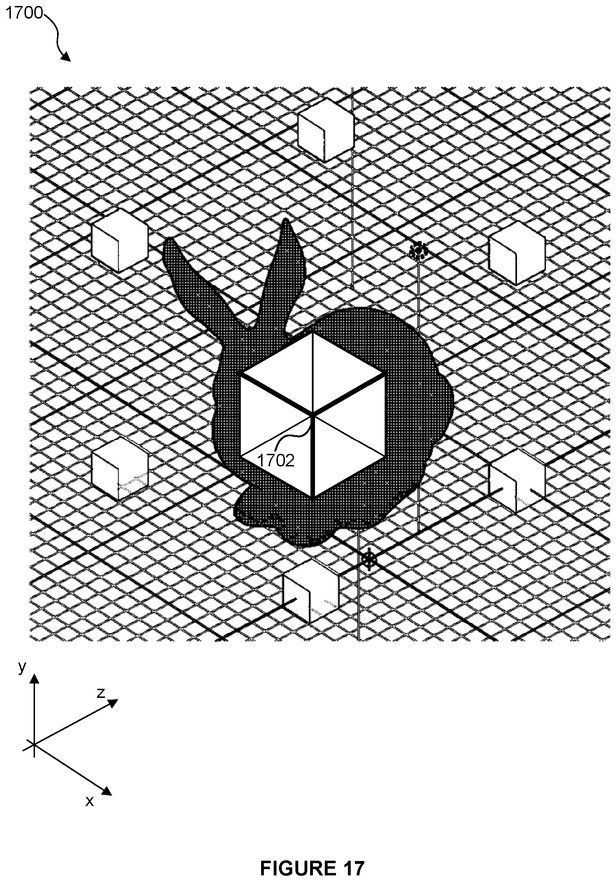

Nevertheless, as for the closed object case, it is possible for the $t_{min}$ of the ray to start inside the bounding region 1704. Provided that the ray still intersects the hidden region, even if the ray starts inside the bounding region 1704 it can still be guaranteed that the ray will at least intersect the object at least once (i.e., at least after the point that it intersects the hidden region). Therefore, similar to the closed object case, if $t_{min}$ of the ray starts inside the bounding region that, at best, the position of $t_{max}$ can be updated to the intersection point with the bounding region that is furthest along the ray, i.e., point 1708 in Figure 17b.

Figure 10a illustrates this rule by showing a bounding volume 1004 and an incident ray 1003 that enters an opening in the object 1000. Even this ray 1003, which penetrates into the object as far as is possible (given that it starts outside of the bounding volume 1004), cannot reach the hidden region 1001. Thus, as mentioned above, the hidden region is defined as the region that is entirely inaccessible by any ray that is incident on the object. For the avoidance of doubt, the hidden region 1001 shown in Figure 10a is not the complete hidden region (for illustrative clarity). In reality, the hidden region may not be a uniform polygon or polyhedron. However, for the purposes of conservative intersection testing, it is sufficient that a suitable contained region (e.g., an axis-aligned contained volume, but generally any suitable contained region or volume) is wholly contained within the hidden region.

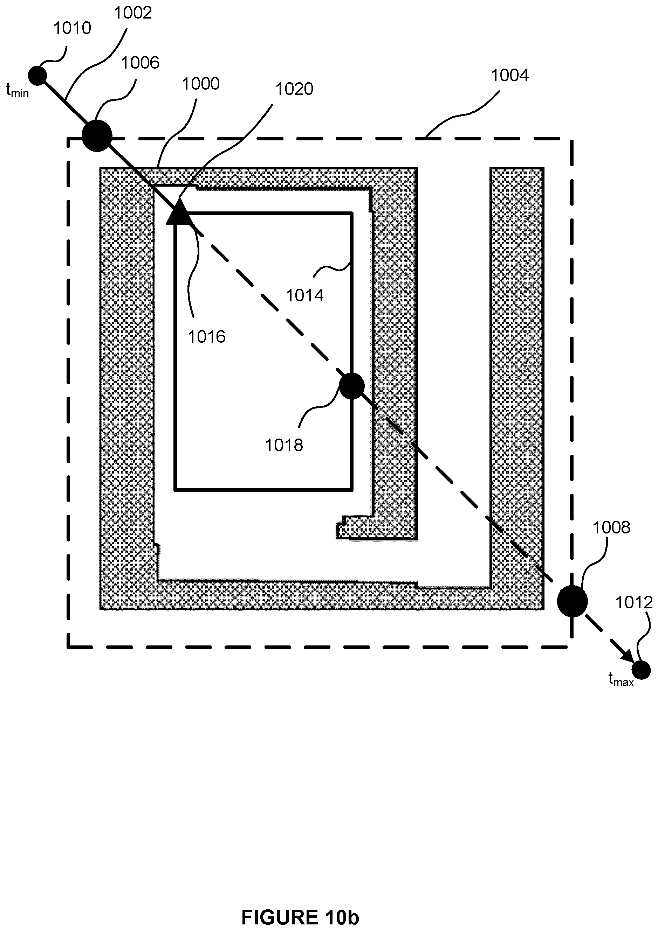

Figure 10b shows an example of how the $t_{max}$ of a ray may be reduced for a non-closed self-concealing object with a hidden region, in a manner equivalent to the culling of $t_{max}$ for closed object. The intersection testing behaves in the same way as for a closed object, since a hidden region behaves exactly like a closed object. In Figure 10b, the contained region 1014 is fully contained within the hidden region 1001 (not shown in Figure 10b). The contained region 1014 may be as large as the hidden region itself, but it will be understood that the shape of the region 1014 in Figure 10b is chosen for illustrative clarity. It will also be appreciated that a valid contained region may even extend into the neighbouring solid walls of the object, provided that the contained region is still entirely contained within the outermost exterior of the object's walls.

The ray 1002 in Figure 10b intersects the bounding box 1004 at entry point 1006 and exit point 1008 (based on the ray direction). The ray can also be seen to intersect with the contained region 1014 at points 1016 and 1018. Given that the start point of the ray lies outside the bounding region 1004, there is no need to determine whether the start point of the ray lies outside the contained region (because, by inference, it must do). For completeness, it is noted that the ray intersects with the contained region an even number of times, i.e., at points 1016 and 1018, but even if the ray ended (i.e., the position of $t_{max}$) within the bounding volume 1004 or the contained region 1014, the $t_{max}$ value could still be updated to the entry point intersection 1716 with the contained region. Due to the fact that the ray 1002 starts outside the bounding region 1004, and intersects with the contained region 1014, it can be determined that the ray intersects the object 1000, because it is also known that the contained region is within the hidden region of the object. This is because it can be inferred, with certainty, that the intersection point between the object 1000 and the ray 1002 occurs at some point between the first intersection with the bounding region 1006, and the first intersection with the contained region 1016. This inference is possible because the object behaves as if it were closed from the perspective of the hidden region, and the contained region is fully within the hidden region, and the bounding region is fully outside the object.

As with the closed object example shown in Figure 4a, it is therefore possible to reduce $t_{max}$ by the largest conservative amount. The motivation for reducing $t_{max}$ as far as (conservatively) allows is to reduce the possibility that the ray 502 will be needlessly tested against a more distant, and occluded, object, or indeed further portions of the object 1000 itself. It should be appreciated that if the object 1000 has a non-trivial (i.e., large) number of primitive/triangles, it may constitute a large sub-tree of a BVH, and so 'pruning' portions of that subtree as early as possible is a worthwhile saving. Therefore, $t_{max}$ can be reduced, at most, to the intersection point 1016, between the ray and the contained region that is closest to the start point of the ray (i.e., the first intersection point 1016 with the contained region). Consequently, $t_{max}$ can be updated to an 'updated maximum culling distance' 1020, denoted by the triangle in Figure 10b.

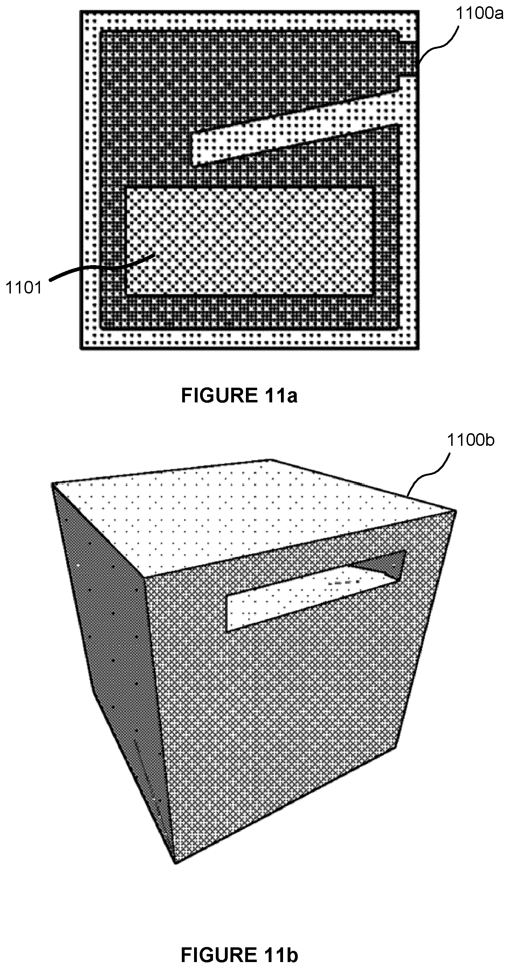

The 2D example of a non-closed self-concealing object with a hidden region applies equally to 3D objects. Figure 11a shows a 2D profile view of a post-box type object 1100a that contains a 'slot' entrance point and a hidden region 1101 within the cavity of the object. Figure 11b shows the post-box object 1100b in 3D, where the entry slot can be seen on the front face. The 'hidden region' 1101 cannot be shown in Figure 11b because, by definition, it is hidden from external view since no single light ray can access the hidden region via the exterior of the object.

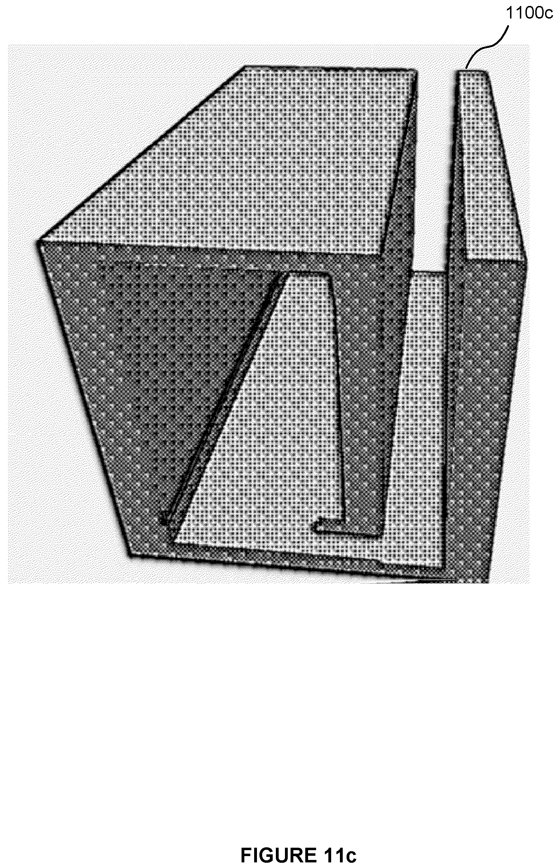

Figure 11c shows one further type of non-closed self-concealing object that is also envisaged by the present inventors, which is a direct 3D extension of the 2D non-closed self-concealing object 1000 shown in Figures 10a and 10b. If this object 1000 is extended out of the plane of the viewing plane, it forms an extended pipe 1100c which is open at either end, as shown Figure 11c, but is not enclosed in the same way a pipe would be. In other words, a conventional pipe (open at both ends, such as the pipe object 700 shown in Figure 7) has the topology of a torus, whereas the non-closed self-concealing object has no closed loops. Figure 11c thus shows a 3D object 1900, resembling a non-joined pipe, that would result from the extension of the non-closed self-concealing 'hidden region' object 1000 in Figure 10a. The non-joined pipe object 1100c is not joined, and nor does it contain a hidden region. It can be seen from the image that every part of the interior of the non-closed pipe object 1100c could be reached by a ray of light. Nevertheless, the interior of the pipe can only be reached by a ray that enters from the large openings at either side, and no light rays can penetrate the interior of the pipe via the small slot-like opening. Consequently, the non-joined pipe can still be treated in the same way as a normal pipe, provided that appropriate partial bounding volumes with exception surfaces are used.

Specifically, a partial bounding region, like partial bounding region 724 in Figure 7, may be constructed around the non-joined pipe 1100c with two exception surfaces (corresponding to the two exception surfaces 730-1, and 730-2, shown in Figure 7) that exclude the main openings of the pipe at either end. Since a ray can only access the contained regions via the main openings, the exception surfaces may be selected such that they exclude only the 'main' two openings of the object, but not the slot-like opening. Thus, one or more contained regions can be contained within the main cavity of the pipe, and within the partial bounding region. Those contained regions, contained within the non-joined pipe, may then be treated for intersection testing purposes in the same manner as the pipe object and contained regions in Figure 7. In other words, as with the Figure 7 example, in order to infer an intersection between a ray and the non-joined pipe object 1200, a ray should intersect at least one 'standard' surface (i.e., a non-exception surface) of the partial bounding region, and at least one contained region.

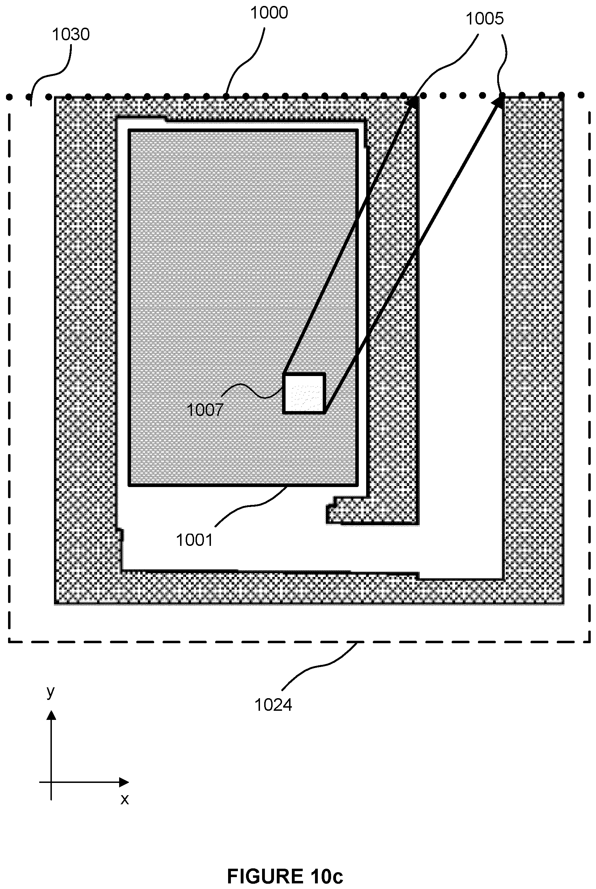

Returning to the objects with a hidden region, Figure 10c shows a method by which the hidden region can be identified, e.g., within a non-closed self-concealing object. It is presumed that the voxels for the object have been tagged already as either inner voxels, concavity voxels, and boundary voxels as appropriate. The most naïve way to identify the set of concavity voxels that form the hidden region would simply be to iterate through the concavity voxels, and check, for each concavity voxel, whether all rays from the voxel are occluded by the mesh. If all rays, in all possible directions, do not escape any exception surface, then that voxel belongs in a hidden region. However, this would be prohibitively time-consuming and is not considered a viable route to identifying a hidden in region.

A better way to identify a hidden region is to only test rays which are actually travelling in the direction of an exception surface. If the ray is not travelling towards an exception surface, it is guaranteed to be occluded by the mesh, and so there is no point in testing it. However, this can be improved upon further, since only a subsection of the exception surface may actually border the opening of the non-closed self-concealing object.

The first step is to identify the voxels (both boundary and concavity) that lie on an exception surface. Figure 10c shows a partial bounding region 1024, and the exception surface 1030. Although the exception surface extends across the upper side of the object 1000, only a small portion (enclosed between the tips of the arrows 1005 defining a frustum) of the exception surface is exposed to the opening of the object. Put another way, only a small part of the exception surface is adjacent to concavity voxels, since most of the exception surface intersects the boundary voxels. Consequently, the part of the exception surface that needs to be considered for the purposes of identifying a hidden region comprises only parts of the exception surface which are adjacent to i) concavity voxels that are adjacent to empty space and ii) boundary voxels that are adjacent to a concavity voxel (specifically where the surface within the boundary voxels has holes).

Once this zone of the exception surface has been identified (i.e., the portion that would allow rays into the cavity of the object), for a particular voxel, we only have to check for occlusion between the frustrum defined by that voxel and the zone of the exception surface. The frustrum that is formed between a concavity voxel 1007 and the identified zone of the exception surface is shown by the two arrows 1005 in Figure 10c. Consequently, the most efficient test for identifying the hidden region is, for each concavity voxel, and for each identified frustrum, to determine whether any ray in the frustrum originating from the voxel is occluded by any surface of the object. If all such rays within the frustrum 1005 are occluded, then the concavity voxel belongs to the hidden region. As can be seen in Figure 10, all rays that can originate from the concavity voxel 1007 and which are bound within the frustrum 1005 must intersect with the object 1000. Consequently, the concavity voxel 1007 lies within the hidden region 1001. In this way, the ray directions that need to be checked for a concavity voxel 1007 are subsequently reduced from a hemisphere (e.g. testing rays that have a positive y-component), to a frustum 1005 of directions.

Once the hidden region of a non-closed self-concealing object has been identified, all concavity voxels that form the hidden region can be treated as inner voxels for the purposes of generating contained regions.

Voxel selection

The various types of objects, and the different voxels used to define the space around the objects, have now been described. The following description explains in detail how these voxels may be used to select and generate candidate contained regions starting from voxels.

Generally speaking, finding the best set of n AACBs for an object is a difficult problem. The preferred method is therefore an efficient but greedy search algorithm for a set of n AACBs that fill the space of an object well, followed by a pruning and selection process. The objective of the greedy search and pruning strategy is to obtain only a marginal difference in utility (compared to a theoretical optimum utility) with the benefit of greatly reduced computational complexity. In the present disclosure, the term 'candidate contained region' or 'candidate AACB' may be used to refer to an AACB that is generated in the first instance using the greedy search. The set of candidate AACBs may be pruned and/or replaced as the greedy search progresses, such that the result is a set of refined contained regions/AACBs that provide good utility for intersection testing purposes.

The present inventors have established that, since the contained regions are being used in ray tracing, the objective is not (primarily) merely to occupy the most voxelised volume with the fewest AABBs. Instead, the objective is to maximise the amount of projected/visible surface area for arbitrary view directions of AACBs, and therefore maximise the amount between a set of AACBs and an object. To take a simple example, the largest 2D square (having zero volume) that can be placed inside a sphere is capable (provided the direction of projection is perpendicular to the plane of the square) of occluding a larger projected portion of the sphere than the largest cube that can fit inside a sphere. More particularly, three orthogonal squares placed inside a sphere may occlude a larger projected portion of the sphere for arbitrary ray directions than the largest cube that can fit inside a sphere. Consequently, for a spherical object, the presumption that the largest single cube that can be fit inside the sphere will provide the best occlusion utility is not always correct. This is where the generation of AACBs differs from the automatic generation of box-occluders in rasterisation methods. Aside from the fact that raster-based methods ultimately transform occlusion boxes into polygons, raster-based methods can afford to rasterize many boxes, and thus often employ a hierarchical / clustering approach, which is likely not a sufficient reduction to be practical for ray tracing tests. For example, not only would a large number of AACBs result in a burden for intersection testing (which would be counterproductive to the overriding objective of using AACBs, which is to reduce the amount of intersection testing involved in traversing a ray), but simply producing a set of AACBs which with the objective of occupying the largest volume may not provide best occlusion.

By contrast, the solution presented by the present inventors allows offline generation of up to n AACBs where the objective is to increase the proportion of the object that is occluded. Given that usually we only want a small number of AACBs (so that the GPU's box tester units aren't overloaded), it may also be possible to solve the problem of generating n AACBs in real-time for some simpler use cases. It is also worth noting that the presently provided algorithm is designed generally to work with static meshes. Full support for dynamic (e.g. skinned) meshes would require extending the algorithm (if a coarse voxel grid is used) to ensure that computation can be effectively parallelized on the GPU. As yet a further alternative, a set of AACBs could be generated per key-frame animation state of a dynamic mesh offline, from which a selection could then be made when generating a BVH online.

Nevertheless, the process of generating AACBs involves growing voxels since there is a correlation between surface-area and volume. In detail, an inner AACB, $\alpha$, (i.e. one with no exception surfaces, since it does not intersect an object mesh) is 'optimal' if it occupies the largest volume (and therefore surface area) possible given its position within the inner volume of a mesh. However, if there exists another Inner AACB, $\beta$ where $\beta \supset \alpha$, i.e. the volume of $\alpha$ can be entirely contained within the larger AACB $\beta$, then $\alpha$ is not optimal. If $\beta$ itself is optimal, then $\beta$ is said to be an optimal parent of $\alpha$. In other words, if it is possible to enlarge an inner AACB without it intersecting the mesh, then the AACB is not optimal. The result is that all optimal inner AACBs should have at least two vertices which are exactly placed on the mesh's surface (for the specific case where the object is a closed object). In practice, an epsilon tolerance would be included to account for floating-point imprecision. Moreover, in current embodiments, for computational efficiency and in order to ensure that contained regions are conservative (i.e., cannot possibly intersect with the object and produce a false positive), an optimal contained region is considered one which is adjacent to two or more boundary voxels (but does not intersect the boundary voxels).

Conversely, for any non-optimal Inner AACB $\alpha$, there necessarily exists at least one optimal parent $\beta$, where $\beta \supset$

$\alpha$. An optimal parent $\beta$ can therefore be found by expanding $\alpha$ until expanding $\alpha$ further in any degree of freedom yields an intersection with the mesh. It is preferable to use an optimal parent over its non-optimal child. This is because an optimal parent and its non-optimal child have the same intersection testing cost, but the optimal parent necessarily has a larger surface area and will therefore occlude a larger proportion of the object, and so better intersect continuous sets of rays. Advantageously, this means with an optimal parent, there will be more opportunities to apply traversal optimizations with a fixed box-test cost. Furthermore, AACBs which are closer-bound to mesh primitives also enable more aggressive limiting of t-max in general (illustrated in Figure 4a and 4b), thereby leading to better optimizations for rays with a closest-hit exit condition.

In order to obtain a useful selection of AACBs, inner voxels that are promising 'starting points' must be selected, which are then enlarged into AACBs that (initially) occupy as much volume as possible within the object. Naively, the set of all possible optimal AACBs for a grid can be generated by expanding all occupied voxels (from the mesh's inner volume) on the grid. However, as mentioned above, this would be very inefficient as many voxels would be expanded to the same AACB. We can therefore speed up the process by observing that, in order for two expansions to yield different AACBs, one box should capture new voxels that are not captured by the other. We can therefore start expansion from only uncaptured inner voxels in order to get a different optimal box with each iteration

The first step involves selecting a starting voxel. For a closed object, this is based on determining which of the inner voxels has the occlusion utility. The occlusion utility for a voxel quantifies an estimate of the potential surface area of an expanded version of each internal voxel. In other words, the occlusion utility metric quantifies an estimate of a lower bound of the surface area of each internal voxel, when expanded and transformed into a contained region. The occlusion utility metric thereby estimates a potential utility of each internal voxel, once expanded into a contained region, to occlude the object. The occlusion utility metric depends on the type of object. However, for all objects, an occlusion utility metric is calculated for all voxels that could be used to generate a contained region (inner voxels for closed objects; concavity voxels for concave objects; and boundary voxels for contiguous surface objects).

For a closed object, a preferred occlusion utility metric is called the 'voxel density heuristic', which elsewhere in the specification is referred to as a 'depth metric'. The voxel density heuristic is used to rank inner voxels, wherein the highest-ranked inner voxels will be preferentially chosen to generate contained regions. The voxel density, $\rho_v$, is defined as:

$$\rho_v = dot\big(\min(position_{voxel} - position_{boundary}), 1\big)$$

This corresponds to computing the minimum 'Manhattan distance' to a boundary voxel. This is a relatively quick test, especially when the boundary voxels have already been calculated, and particularly when the voxels have been spatially partitioned (in any case, this test is significantly faster than testing against all 'empty' voxels). Intuitively, this corresponds to ranking the inner voxels by which are the 'deepest' within the interior, hence the use of the term 'depth' in the naming of the heuristic. Inner voxels are therefore chosen, based on their voxel density ranking, to be enlarged into candidate AACBs.

It is possible to speed up the calculation of calculating the minimum Manhattan distance to the closest boundary voxel by spatially partitioning the boundary voxels with a data structure such as a "Kd Tree", to make the search particularly fast. This allows us to pinpoint the closest boundary voxel quickly with a divide-and-conquer type approach, instead of having to check all boundary voxels to determine which is closest for each given voxel.

The use of the voxel density heuristic (i.e., depth metric) for choosing inner voxels to enlarge is based on the following observations. Firstly, the inner-most voxels, i.e., the deepest voxels, within a set of inner voxels generally expand to the largest and most uniform boxes. Secondly, it is possible to expand these voxels the most before a constrained voxel is reached (i.e. a boundary or empty voxel). In this disclosure, a 'constrained voxel' is one that cannot be expanded into, i.e., a voxel that a contained region is forbidden from overlapping with. Thirdly, boxes which have a large surface area, and are reasonably uniform (i.e., similar sizes in all dimensions and thus close to being a cube), will be able to intersect a higher proportion of incident rays on the mesh with higher consistency (ray casts are usually somewhat continuous). This allows more traversal optimizations to be applied, thereby improving the performance of the intersection testing algorithm.

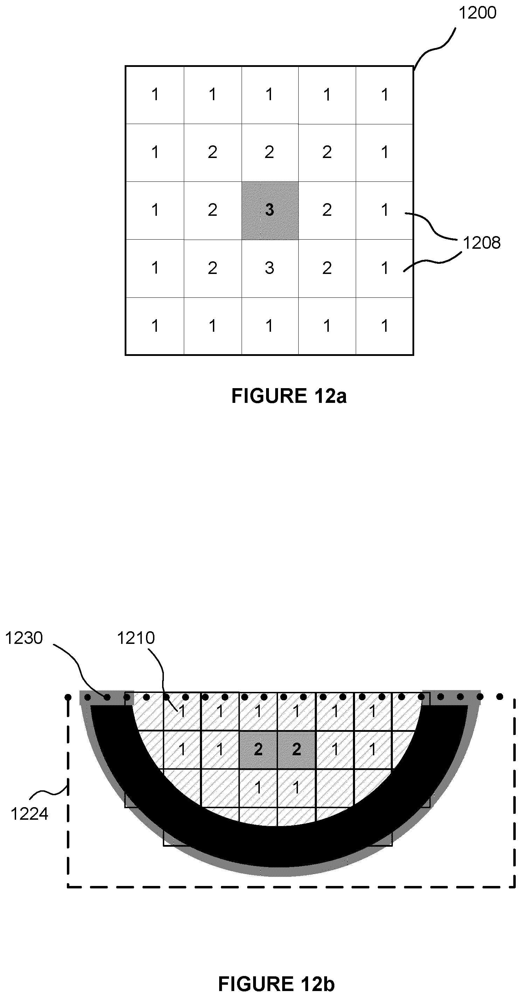

Figure 12a illustrates the voxel density metric for a simple cubic object 1200. Each voxel is an inner voxel 1208, and for this simple example there are no boundary voxels. The numbers in each voxel represent the voxel density metric. Voxels adjacent to the boundary of the object 1200 have a value of 1. The deepest voxel (shaded) has a voxel density metric of 3. Consequently, in the first iteration of an AACB generation algorithm, preferably, this innermost voxel with a value of 3 would be chosen first for expansion.

Figure 12b illustrates a more realistic example, where the object is the same concave bowl object 800 shown in Figure 8. For a concave object, the extents of the geometry of the object defining the bounds from which the voxel density metric is calculated need to include something other than just the boundary of the object, since an open cavity exists. For concave objects, instead of selecting inner voxels to expand, concavity voxels are chosen. Thus, the density metric is still based on which concavity voxel is the innermost concavity voxel. Put another way, the voxel density metric for a concave object involves computing the minimum 'Manhattan distance' to a boundary voxel or an empty voxel (i.e., the exception surface). Thus, it can be seen that the concavity voxels 1210 in Figure 12b that are adjacent to the exception surface 1230 of the partial bounding region 1224 have a voxel density metric of 1. The highest voxel density metric is a value of 2 for the two concavity voxels that are deepest within the set of concavity voxels. Thus, the voxels with a voxel density metric of 2 would be selected first for AACB generation, in this simple example.

In summary, the voxel enlargement system may thus proceed in a similar manner to the closed-object case, where instead of inner voxels, the 'concavity voxels' are now selected as the starting point for voxel enlargement. Also, rather than being bound by the 'boundary voxels', part of the boundary for enlargement purposes is now defined by the exception surface(s) of the outer AACB. In other words, the concavity AACBs are expanded within the boundary defined by the combination of boundary voxels and exception surface(s).

However, a modified heuristic may be used to more appropriately rank the concavity voxels. This modified heuristic/metric is arranged to account for the surface area of the exception surface. This is taken into account because the exception surface effectively reduces the 'value' of an AACB within a concave region. Partly this is because of the overhead of requiring a partial bounding region per concave region within which AACBs are to be placed. In essence, the discounted voxel density heuristic, $\rho_v^-$, reduces $\rho_v$ by the ratio of (surface area of exception surface(s))/(surface area of non-exception surfaces), i.e.,

$$\rho_v^- = \rho_v \times \left( \frac{ESA}{SA - ESA} \right)$$

Where *ESA* is the surface area of the exception surface 1230, and *SA* is the total surface area of the partial bounding region. Concavity voxels may then be chosen, based on their discounted voxel density ranking, to be enlarged to form AACBs, as explained below.

Contained Region Generation

Initially, voxels are selected to be expanded based on their respective occlusion utility metric. It should be noted that more than one occlusion utility metric can be calculated per voxel. For example, both the discounted voxel density heuristic, $\rho_v^-$, and the voxel density heuristic, $\rho_v$, may be generated for concavity voxels within a concave object. If more than one occlusion utility metric has been calculated for each voxel in a set of voxels, the maximum value from any metric is used to select the voxel. In practice, however, the discounted voxel density heuristic, $\rho_v^-$ may be used in preference to the voxel density heuristic, $\rho_v$, which usually is used only for inner voxels. However, a more practical example of multiple occlusion utility metrics is both concavity and boundary voxels may be classified using both the discounted voxel density heuristic, $\rho_v^-$ and another metric referred to as the 'discounted maximum chain length' which is described in greater detail below. At a high level, the expansion of a selected voxel preferably involves two stages:

 i. uniformly expanding the voxel in all dimensions until it has reached part of the boundary, and

 ii. if further expansion is possible after step i), non-uniformly expanding/extending in any dimension where further expansion/extension is possible, and expanding until no further expansion is possible.

The intended result is that the expanded voxel will have a large surface area (meaning, implicitly, that it will take up a large space/volume as well). This will allow the expanded voxel to intersect a large proportion of the rays that also intersect the object. An outcome of the voxel expansion performed in this way is that at least two edges/vertices/faces of the expanded voxel will touch constrained areas of the object (e.g., boundary voxels empty voxels, or the actual surface mesh of the object).

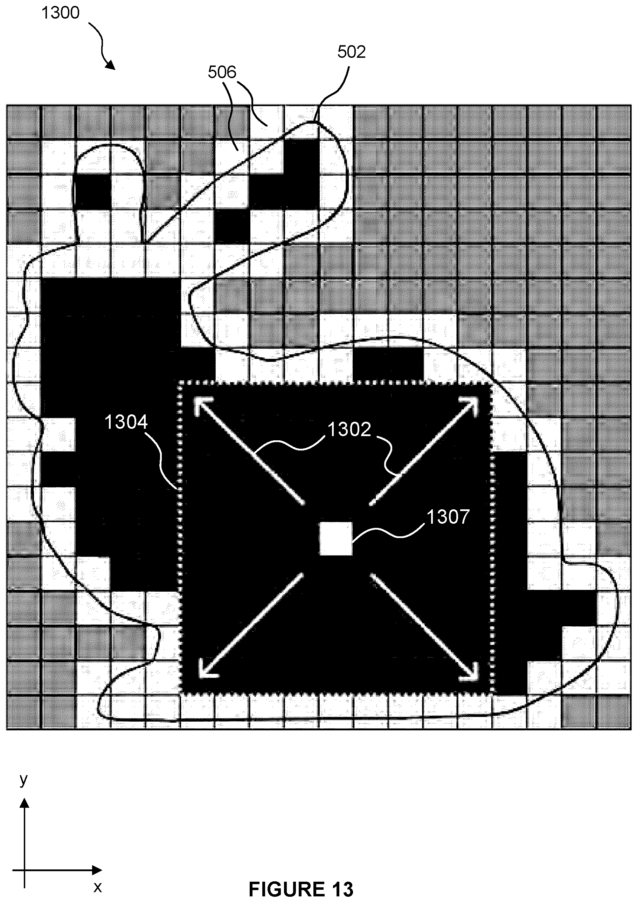

Figure 13 shows the first stage of the expansion, i.e., uniform expansion. The object 1300 shown is again a 2D representation of the Stanford bunny. Although the voxel expansion method is applicable to 2D example, preferably the method applies to 3D objects. As explained above, the first stage is to select a voxel 1307 for expansion. The selected voxel 1307 is selected based on its occlusion utility metric, e.g., based on which voxel has the highest occlusion utility metric, which preferably is defined by the voxel density metric, $\rho_v$. Once a voxel is chosen, the voxel 1307 is uniformly expanded, i.e., expanded at the same rate in all dimensions. In Figure 13, this corresponds to expanding the voxel uniformly 1302 in two dimensions (along the x and y axes). In a 3D example, the uniform expansion would proceed voxel by voxel in all three dimensions.

Performing this uniform expansion first ensures that a contained region is (at least partially) capable of intersecting large continuous sections of rays in each axis (i.e., for any given direction of those rays). The result is the enlarged voxel 1304 that occupies a 9x9 voxel region. The uniform expansion in this case proceeds until the expanding voxel encounters a constrained region, which in this case is a boundary voxel. Although, in some examples, the voxel may expand until it touches the mesh surface 502 defining the object, preferably (in order to produce a conservative contained region) the voxel is expanded until it reaches a boundary voxel. In Figure 13, it can be seen that the expanded voxel has reached a plurality of different boundary voxel 506, but has not expanded into the space they occupy. Although allowing the voxels to expand all the way towards the mesh would provide better utility (since more volume would be occupied and therefore more there would be more effective occlusion between the contained region and the object), it is advantageous to consider only the boundary voxels and not the mesh when voxels are expanded. This is because, when the voxel is allowed to expand only into other inner voxels, it is guaranteed that the voxel will never intersect with the mesh (which would make the contained region invalid), and so this does not need to be explicitly checked.

The second step of non-uniform expansion involves either expansion, i.e., increasing the volume by stepping an edge or vertex forward by a unit-voxel stride, or extension, i.e., increasing the volume by stepping a face forward by a unit-voxel stride. Non-uniform expansion is always checked/performed first before extension. The reason is that expansion in the direction of an edge or vertex results in more than one dimension being increased simultaneously, thereby resulting in a more uniform expansion which results in a greater volume and surface area of the resulting voxel. By contrast, extension in the direction of a face only causes expansion in a single dimension.

When determining whether to perform expansion or extension of a voxel, flags and/or masks for each possible axis of expansion are tracked in order to keep a record of whether further expansion/extension is possible in a given dimension. As soon as no further enlargement along an axis is possible, the flag for the axis is unset. Non-uniform expansion and extension are iteratively performed by cycling through the expansion flags and extension flags in turn until all flags/bits are unset. Thus, the result is an AACB that maximises the volume it can occupy within the object's boundaries.

In one detailed example, at the implementation level, two masks of 6 Boolean flags each are stored; one mask for each primary axis, both positive and negative: { +x, +y, +z }, { -x, -y, -z }. These two masks are

  1) Expansion Mask: This stores which axes are free for expansion (i.e., expansion via corners and edges); and
  2) Extension Mask: This stores which axes are free for extension (i.e., via faces only, in a single dimension).

For example, a 3D voxel that is able to expand in all directions uniformly would have the following expansion masks prior to expansion: { +x, +y, +z }, { -x, -y, -z }: (111), (111). When expanding, if the voxel encounters a wall of boundary voxels in the positive x direction, it will unset this flag to indicate that the voxel can no longer expand in the positive x direction. Thus, after the initial stage of uniform expansion, the voxel will have the following expansion masks: { +x, +y, +z }, { -x, -y, -z }: (011), (111). Where mask bits are unset, the axes corresponding to those bits are not considered for further checks (i.e. when checking for non-uniform expansion directions). The expansion step is repeated until all mask bits are unset, wherein the result will be an AACB approaching an optimal AACB (with respect to quantization of the unit voxel grid).

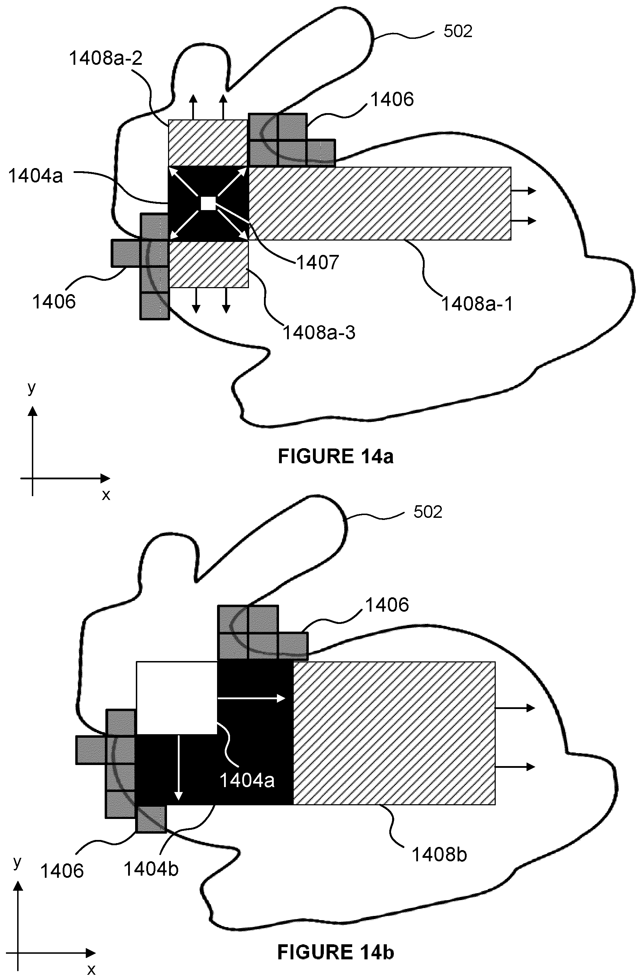

Figures 14a and 14b illustrate a specific example of the steps involved in performing a uniform expansion followed by a non-uniform expansion, and the AACB contained region that results. The same Stanford bunny object as a 2D representation is shown, with the outline 502 representing the mesh surface. Only a select few boundary voxels 1406 are shown, i.e., those which interact with the expanding voxel. It will be appreciated that the voxels are not shown to scale, merely for illustrative clarity. The starting voxel 1407 in this case is in a different position within the object, where uniform expansion is only possible by a small amount. Prior to uniform expansion, the expansion and extension masks for the starting voxel are as follows:

| Mask | +x | +y | -x | -y |
|------|-----|-----|-----|-----|
| Expansion | 1 | 1 | 1 | 1 |
| Extension | 1 | 1 | 1 | 1 |

.

After initial uniform expansion, the resulting expanded voxel 1404a reaches two boundary voxels, i.e., at a portion of its lower-left face and corner, and at its upper right corner. Consequently, the voxel can no longer expand in both the positive y and x directions simultaneously. Also, the voxel can no longer expand in the negative x direction at all. The expansion and extension masks for the uniformly expanded voxel 1404a are therefore:

| Mask | +x | +y | -x | -y |
|------|-----|-----|-----|-----|
| Expansion | 1 | 1 | 0 | 1 |
| Extension | 1 | 1 | 0 | 1 |

It will be appreciated that the expansion mask for -y is not unset here as obstruction in -x no longer matter given that -x's masks are fully unset.

The extension masks for the expanded voxel 1404a indicate that three possible extensions remain. These are to extend the voxel 1404a in the +x direction 1408a-1, the +y direction 1408a-2, or the -y direction 1408a-3. Each of these possible extension directions is indicated by the shaded/striped boxes (1408a-1, 1408a-2, 1408a-3) in Figure 14a. Preferably, the extension(s) that result in the largest box will be selected, since this will result in the largest box, thereby having the greatest surface area and the greatest occlusion utility.

In this case, it can be seen that there is a 'deadlock' between the different expansion options. For example, the voxel is constrained at its upper right corner by the boundary voxels 1406, and so the voxel can only expand in the +x or the +y dimension, but not both simultaneously. It can also be seen that the voxel can expand in the -y direction, and this could be performed simultaneously with the +x expansion. In general, for both 2D and 3D cases, as is the case in Figure 14a, sometimes there will be situations in which two or more adjacent faces could be extended individually, but not simultaneously. For example, if an edge of a 3D voxel hits an edge of a boundary voxel, the voxel cannot expand any further, and so one of the two faces neighbouring the constrained edge of the voxel needs to be chosen to expand. As explained above, it is usually worthwhile prioritising uniformity of a box, since this results in the largest volume, and therefore results in the largest occlusion utility, on average, across multiple different projection directions.

Consequently, the preference is to drop as few axes as possible to thereby extend voxels in multiple dimensions wherever possible (resulting in a large and more uniform box) in preference to extending the box in only one dimension, which might make a longer (but less voluminous) AACB. In practice, this might involve performing a plurality of expansion 'tests' based on different combinations of axes: e.g., combinations of axes that have the fewest axes 'dropped' are tested first (corresponding to more uniform expansion) in preference to expansions/extensions where many are dropped (corresponding to more non-uniform expansion, or expansion in a single dimension). In other words, expansion tests for uniform expansion along multiple axes are treated preferentially. A deadlock can therefore be resolved when a combination of axes is found that can be expanded.

Turning back to the uniformly expanded voxel 1404a in Figure 14a, the following expansion combinations are possible:

1) +y axis only (1408a-2);

2) +x axis only (1408a-1);

3) -y axis only (1408a-3);

4) +y and -y axes simultaneously (1408a-2 and 1408a-3);

5) +x and -y axes simultaneously (1408a-1 and 1408a-3).

Treating multiple expansions preferentially would discard the first three options in favour of option 4) or 5), which each result in two simultaneous extensions. As can be seen in Figure 14a, the combination of the +y and -y axes would result in an elongate box, which would not have the best occlusion utility. However, the +x and -y axes combination would result in a large expansion, since a significant amount of space (i.e., inner voxels) exists in the +x and -y directions.

Figure 14b shows the result of the expansion in the +x and -y directions simultaneously, starting from the uniformly expanded voxel 1404a. The result is another expanded voxel 1404b, which again is still uniform since all dimensions of the square voxel have been expanded. The newly expanded voxel 1404b has reached another obstruction at its lower face, meaning that it can no longer expand in the -y direction. Furthermore, the voxel 1404b can no longer expand into the +y direction. These bits can therefore be unset, and so the expansion and extension masks for the secondarily uniformly expanded voxel 1404b are therefore:

| Mask | +x | +y | -x | -y |
|------|----|----|----|----|
| Expansion | 0 | 0 | 0 | 0 |
| Extension | 1 | 0 | 0 | 0 |

The only remaining option for expanding the secondarily uniformly expanded voxel 1404b is therefore an extension in the +x direction 1408b, which is illustrated with the shaded/striped area in Figure 14b. This will be the final possible extension for this voxel, and the result will be a rectangular voxel. The result of the fully expanded voxel is a contained region that is an AACB. Since the voxel is subject to being replaced by another voxel (i.e., having better occlusion utility) the voxel may be termed a 'trial voxel' or 'candidate' voxel.

After each expansion to generate a trial AACB, all inner voxels (or, in the case of concave objects, all concavity voxels) occupied by the trial AACB are 'unset' such that they cannot be selected for the next voxel expansion. Thus, after each expansion to generate a candidate contained region, the next voxel chosen for expansion (again based on choosing a voxel with the highest occlusion utility metric, e.g., voxel density metric) will not be within any existing candidate contained region. This is done to help prevent multiple identical AACBs being generated, and to thereby ensure that each candidate AACB captures at least some new surface area leading to better coverage of the object.

Alternatively, another possibility would be to recalculate the occlusion utility metric for each inner/concavity voxel after every candidate contained region is generated. For example, the voxel density metric could be recalculated on the basis that all candidate contained regions also count as constrained regions. Therefore, the innermost inner voxel in an object that contains one or more candidate contained regions will be different to the innermost inner voxel in an object that contains no candidate contained regions.

Nevertheless, each expansion is allowed to expand into the volume occupied by existing AACBs, such that a plurality of expanded voxels will spatially intersect one another. The expansion proceeds iteratively until a plurality of candidate contained regions are obtained. There may be one or more metrics or conditions used for determining when to stop generating new contained regions. One condition that is implicit is the condition that there is at least one inner voxel (for a closed object) or concavity voxel (for a concave object or region) from which to generate a new candidate contained region. Another metric may simply be a threshold number of contained regions, i.e., that the iterative voxel selection and expansion is terminated after a certain number of contained regions have been generated. In general, after multiple voxel expansions, the set of candidate contained regions may significantly overlap with one another. The next step (described below in detail) is therefore to select an optimal set of AACBs from the set of spatially intersecting trial AACBs.

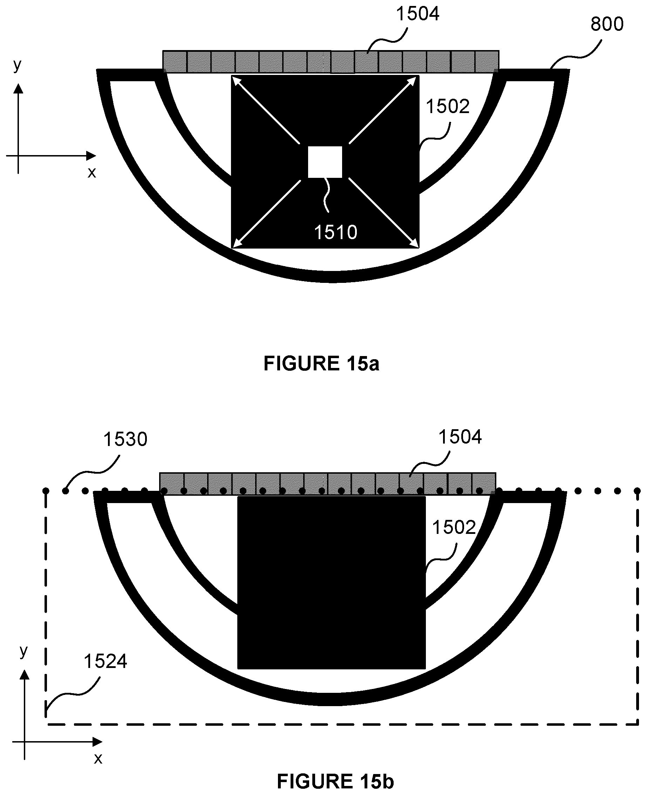

Figures 15a and 15b show how the voxel expansion proceeds for a concave object 800. In this case, an occlusion utility metric will have been calculated for each concavity voxel. For example, this could be the discounted voxel density heuristic, $\rho_{\overline{v}}$. The concavity voxel having the highest voxel density heuristic value is preferably chosen as a starting point, which in the case of Figure 15a is a concavity voxel 1510. This expands uniformly until it reaches a constrained area. In the case of concave objects, a constrained area includes either the boundary voxels of the surface of the object, or an 'empty' voxel 1504. Turning back to cross-sectional (quartered) view of the bowl in Figure 8, it can be seen that the only voxels that are labelled as exclusively boundary voxels 806 for the bowl are on the (convex) exterior of the bowl. The voxels intersecting the (concave) inner surface of the bowl may also be labelled as concavity voxels (since they are part of the concavity), in addition to being labelled as boundary voxels. As can be seen in Figure 8, the concavity voxels 810 are exactly adjacent to the inner voxels 808 formed within the thick walls of the bowl. The advantageous result of this is that an expanding voxel may expand 'through' the (concave) inner surface of the bowl until it reaches a constrained boundary voxel 806. In this case, a constrained boundary voxel 806 is a boundary voxel that intersects with the (convex) exterior surface of the bowl. This is why, in Figure 15a, the expanding voxel 1510 expands until it reaches the outer surface of the bowl, and appears to go 'through' the inner concave surface.

The result of the uniform expansion is the expanded voxel 1502 shown in both Figures 15a and 15b. In this case, the constrained voxels that prevent further expansion in the -y direction of the expanded voxel 1502 are the outermost boundary voxels (i.e., those that aren't also labelled as concavity voxels) of the object 800 as shown in Figure 8, and the constrained voxels that prevent further expansion in the +y direction of the expanded voxel 1502 are the empty voxels 1504. To indicate how the candidate contained region 1502 is placed relative to the partial bounding region 1524, the partial bounding region 1524 and its exception surface 1530 are shown in Figure 15b.

The examples discussed above have considered voxel expansion in terms of (starting) voxels all of the same size. However, voxel hierarchies (mentioned above in terms of classifying voxels) may also be used advantageously during voxel expansion. Specifically, using a voxel hierarchy may allow certain expansion steps to be skipped. For example, for an expansion step (at a fine voxel level) proceeding within a coarse inner voxel, it can be deduced that the expansion won't hit a voxel (at the fine voxel level) it should not expand into at least until the expansion has progressed through the coarse voxel. In other words, at that point the expansion could effectively proceed a few steps (at the fine voxel level) in one go, rather than having to work through each of those steps one-by-one.

Contained Region Refining

As mentioned previously, it is very difficult (in that there is no polynomial-time solution) to find an 'optimal' set of AACBs *a priori*. Furthermore, the 'optimal' set cannot be defined with any analytical criteria because an optimal set is best subjective. In any case, what constitutes an optimal set of AACBs can be highly dependent on the orientation of the AACBs and the object compared to the incident rays (which are not known in advance). For example, a set of AACBs might occlude a high proportion of an object in one projection direction, but occlude substantially less of the object in another projection direction.

The iterative contained region generation described above is therefore a 'greedy' algorithm, which generates many AACBs that are subsequently pruned/refined to obtain a more optimal set. Clearly, reducing the number of AACBs will inevitably reduce the overall occlusion. However, as explained above, an optimal set of contained regions should strike a balance between a proportion of the object that is occluded over a range of different projection directions and the number of contained regions. There should be enough contained regions to provide good occlusion utility, but not so many that the testing of the plurality of contained regions (and thus the traversal of the acceleration structure) takes too long. Specifically, a large number of AACBs would necessarily increase the number of nodes in the BVH, thereby potentially making the ray-box intersection testing less efficient than desired.

The problem with the greedy algorithm is that, although it provides a set of contained regions with good occlusion (which is the objective of the AACBs: i.e., to provide good utility to cull rays or reduce $t_{max}$ as early and as often as possible), a large number of contained regions/AACBs are generated. Moreover, the greedy voxel selection and expansion algorithm may be prone to producing contained regions with a significant amount of spatial intersection , which therefore makes at least some of the contained regions redundant. In some examples, the greedy algorithm may keep selecting new voxels to expand so long as both of the two conditions hold:

1) there are suitable voxels remaining within the object to expand; and
2) the maximum allowed number of voxels (some pre-defined number) has not yet been reached.

As mentioned above, new voxels are selected that are not within the space already occupied by an expanded AACB.

The inventors have therefore identified, as a result of the greedy algorithm, that there is a need to refine the set of candidate contained regions. As mentioned, if two AACBs occupy substantially the same volume, they will also inevitably have similar surface areas and therefore will occlude substantially the same portion of the object. Only one of two such AACBs should be kept in this instance. It will be appreciated that AACBs can 'overlap' in more than one sense. In addition to physical spatial intersection, two AACBs do not have to spatially intersect to be redundant. For example, two AACBs may, in at least projection direction, occlude one another. AACBs that occlude one another in one projection direction may also be redundant, since only one of the two AACBs could be used to provide occlusion of an object.

On the basis of these two different types of overlapping contained regions, at least the following mechanisms for removing/replacing boxes are provided:

1) Removal of contained regions based on occlusion utility metric of contained region;

2) Removal of contained regions based on spatial intersection with another contained region;

3) Removal of contained regions based on occlusion, as measured by a suitable surface area utility criteria.

It should be appreciated that all mechanisms for AACB selection and refinement described herein can be done either simultaneously with the greedy search (i.e., either disallowing a new AACB, or replacing a new AACB with an older one), or subsequent to the generation of a set of candidate AACBs. However, it is more advantageous to perform the replacement of AACBs on an ongoing basis and simultaneously with the AACB search phase, since fewer box replacement tests will need to be carried out overall.

It should also be appreciated that, due to the fact that most of the occlusion utility metrics define a lower-bound on the potential maximum uniform AACB size, the maximum size of a contained region, once it has undergone both uniform and non-uniform expansion as described above, is often underestimated. In other words, the occlusion utility metric used to select a voxel for expansion is only an estimate of the potential for that voxel to occlude the object, once expanded. Consequently, once the candidate AACBs are actually generated, their true occlusion utility should preferably be re-evaluated.

Furthermore, particularly with the voxel density metric, the densest voxels in a typical convex mesh tend to be more conservative with respect to non-uniform expansion as they are usually similarly bound in all three axes (i.e. the distance to the mesh surface in all three axes is roughly equal). Less 'dense' voxels are typically the opposite: often, they may be heavily skewed along one or two axes. When a less dense voxel is encountered that isn't so tightly bound in one axis, it is often the case that a less conservative contained region is found that potentially performs better than those found in the densest voxels in the grid. The resulting observation is that the greedy algorithm will often place a conservative contained region for which we will later find a less conservative alternative that performs better. The optimality of the greedy search can therefore be improved by allowing the replacement of conservative contained regions that are deemed redundant, upon generating or identifying a better-performing candidate contained region.

In some examples, the test for removing and/or replacing a contained region may be based on comparison to a predetermined value. Generally, a suitable surface area metric is calculated for each candidate AACB. In one example, the surface area metric is the combined surface area of all sides of the target contained region. In other words, the overall surface area of the voxel (which, for a 2D voxel, is simply the area) is the metric used for a contained region. Thus, the surface area utility criteria with which to measure the candidate contained region against may simply be a predetermined minimum surface area defining a minimum surface area for the combined surface area of all sides of a contained region. Thus, in some examples if a candidate contained region does not have a surface area meeting the predetermined minimum surface area threshold it may be either discarded, replaced by another candidate contained region that does meet or exceed the minimum surface area threshold, or simply not placed as a candidate AACB in the first instance (i.e., during expansion phase).

In other examples, the refining process may simply consider any occlusion utility metric, or surface area utility metric, to determine whether or not to place a new AACB. Specifically, the occlusion utility metric of the original voxel that was expanded into the contained region may be used to determine whether to remove that contained region. For example, a simple way to perform this tracking would be to determine the origin voxels associated with AACBs, and determine whether the maximum occlusion utility metric associated with that voxel (since more than one occlusion utility metric may be defined) is within a heuristic range proportional to the current minimum heuristic for all current candidate AACBs. For example, a simple test for a given candidate region could be to determine whether the maximum occlusion utility metric for the candidate AACB is greater than half the value of the current minimum occlusion utility metric,. If this test is not satisfied, then the candidate contained region may be discarded, or not be placed in the first place.

More sophisticated tests are also available which consider the actual occlusion that is conferred by a candidate contained region. One such test involves determining the spatial intersection between two candidate contained regions. If the spatial intersection is above a certain threshold, the box with the best utility (e.g., has a larger volume or surface area) may be preferentially kept. Generally, when testing one candidate contained region against another, one candidate region may be referred to as a 'target' candidate region, wherein the objective is to determine whether or not the candidate contained region should replace the 'target' candidate region. In the present specification, reference to a 'target' contained region refers to a contained region being tested to determine whether to discard/remove it.

A test which compares spatial intersection between two candidate contained regions is advantageous because an AACB that was originally thought to be conservative (i.e., occupies a large proportion of the object's volume and thereby has a high occlusion utility) might turn out to be worse performing AACB than another, seemingly less conservative AACB.

The mechanism for deciding whether to replace a 'target' box with a 'candidate' box (which might be a newly created candidate) is based on one or more of the following criteria:

i) Is a projected area overlap between the target box and candidate box above a predetermined threshold?

ii) If 'yes' to i), is the combined total surface area of the target box less than the surface area of the candidate box?

If yes to ii), consider replacing target box with candidate box.

iii) Is there another candidate region (i.e., a third AACB) which i) has projected area overlap with candidate above threshold AND ii) has greater surface area than the candidate?

If 'yes' to iii), the original candidate box should not be placed.

These steps therefore define one example of suitable surface area utility criteria used to test candidate contained regions.

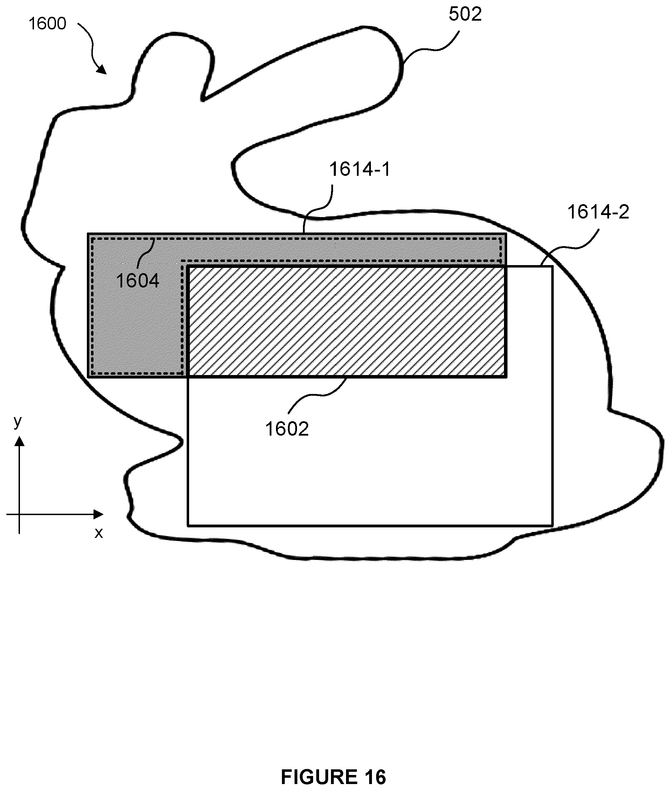

Figure 16 illustrates some of the considerations of this method. The projected area overlap is the overlap between one contained region and another for a given projection direction. In Figure 16, the projected area overlap is indicated as the striped region 1602, formed by the overlap between a first contained region 1614-1 and a second contained region 1614-2. The projection direction in this case is along the principal z-axis. Thus, the set of tests outlined above consider in step i) whether the area of overlap 1602 is above some predetermined threshold value. The 'combined total surface area' tested in step ii) above is the total surface area of all faces of the voxel (i.e. the area for a 2D voxel, and the sum of all faces for a 3D voxel).

As mentioned above, the other main factor that affects the utility of contained regions is projected occlusion (whether or not the AACBs spatially intersect). When two AACBs that occlude one another intersect a very similar set of rays, only one intersection between a ray and an AACB is needed to guarantee that the ray will intersect the object. However, an intersection test is carried out for every contained region that exists. For two mutually occluded AACBs, this makes one of the AACBs effectively redundant. The occlusion utility metrics used to select voxels (i.e., the density-based metrics) cannot account for mutual occlusion between different contained regions. Therefore, it is advantageous to impose a constraint upon which contained regions are actually accepted, discarded, or replaced by determining the overlap between i) the projected surface area of a target contained region and ii) the projected surface area of another candidate contained region. Analytically calculating the occlusion between two contained regions would be prohibitively expensive to perform, i.e., since it would involve calculating an integral such as integrating occlusion ray samples over the surface area of a contained region. Thus, a faster approximation of the occlusion between two candidate contained regions, which is projection-dependent, is provided.

Consequently, the inventors have devised another one or more surface area utility criteria that considers the utility of mutually occluded AACBs (but which don't necessarily intersect). Considering Figure 16 again, let the object 1600 shown be a 2D representation of a 3D object. In this case, the two contained regions 1614-1, 1614-2, which are both AACBs, do not necessarily spatially intersect. However, in the projection direction along the z-axis (as shown in Figure 16) the two contained regions 1614-1, 1614-2 partially occlude one another. It does not matter for this purpose which of the two regions is in front of the other. The inventors have devised some surface area utility criteria that quantify the utility/redundancy of a contained region on the basis of two quantities:

1) A proportion of unoccluded projected surface area; and

2) A magnitude of unoccluded projected surface area relative to the size of the object mesh.

The proportion of unoccluded projected surface area represents the proportion of a target candidate region that is not occluded by another candidate contained region. The magnitude of the unoccluded projected surface relative to the size of the object mesh represents the proportion of the projection of the object's mesh that is occluded by the unoccluded portion of the candidate contained region.

As noted above, although it is possible to calculate the overlap of projected surface area between two boxes analytically (i.e., with integrals), it becomes prohibitive when considering the overlap between multiple pairs of boxes. Consequently, the inventors have provided a way to track areas of contained regions which are overlapping per pairwise intersection efficiently. One way to achieve this is to tag and count the pixels of pre-calculated axis-aligned bitmasks of the object mesh. This pre-calculated axis-aligned bitmasks may be calculated during the initial voxelisation process. Alternatively, the projection of an object can be considered at the resolution of the voxels (i.e., inner, concavity, and/or boundary voxels) that have been identified for that object.

Returning to the definition of the surface area utility criteria, the overall objective for a 'good' contained region having high occlusion utility is that it should maximise both 1) and 2) above. In other words, the pairwise occlusion between two AACBs should be low/minimal, thereby meaning that the portion of a target AACB that is not occluded by another AACB should be high. The occlusion of the object's mesh surface by the AACB should also be high/maximal. In particular, the occlusion of an object's mesh by the region of an AACB that is not already occluded by another contained region should be high. The particular surface area metric calculated for a particular 'target' contained region that is being considered for removal/replacement, being compared against another candidate, contained region, is called the weighted projected surface area metric, $SA_{WP}$. The surface area utility criteria against which this is then compared is a pre-determined threshold value.

The weighted projected surface area metric, $SA_{WP}$, is a product defined as

$$SA_{WP} = \frac{SA_{unoccluded}}{SA_{total}} \times \frac{SA_{unoccluded}}{SA_{object}}$$

wherein:

$SA_{unoccluded}$ defines the surface area of the target contained region that is not occluded by the first occluded contained region;

$SA_{total}$ defines the projected surface area of the target contained region;

$SA_{object}$ defines the projected surface area of the object.

Taking Figure 16 as an example, let the target contained region be the shaded region 1614-1, and the comparison candidate contained region is 1614-2. $SA_{total}$ is therefore the surface area of contained region 1614-1. If $SA_{overlap}$ is the surface area of the striped region 1602, i.e., the overlap between 1614-1 and 1614-2 in the z-direction projection, then $SA_{unoccluded} = SA_{total} - SA_{overlap}$. The region that defines $SA_{unoccluded}$ is indicated by the irregular dashed area 1604 in Figure 16. $SA_{object}$ is the surface area within the mesh outline 502. Expressed another way, the weighted projected surface area metric, $SA_{WP}$ is the product of the proportion of unoccluded projected surface area, $p(SA_{unoccluded})$, and the magnitude of unoccluded projected surface area relative to the size of the object mesh, $|SA_{unoccluded}|$, where

$$p(SA_{unoccluded}) = \frac{SA_{unoccluded}}{SA_{total}},$$

and

$$|SA_{unoccluded}| = \frac{SA_{unoccluded}}{SA_{object}}.$$

$p(SA_{unoccluded})$ therefore represents the area of the unoccluded (shaded) region 1604 as a proportion of the total area of contained region 1614-1, and $|SA_{unoccluded}|$ represents the area of the unoccluded (shaded) region 1604 as a proportion of the area within the object outline 502.

This 'weighted projected surface area' is thus used, for a candidate AACB, by comparing it to a predetermined threshold. Thus, if a candidate box does not have a 'weighted projected SA' above a certain value, it is not placed as an AACB. Put another way, if a target AACB does not have a value of $SA_{WP}$ above a certain value, but another candidate AACB does, then the target should be replaced in favour of the other candidate AACB.

So far, the weighted projected surface area metric, $SA_{WP}$, has only been expressed in terms of a single projection. However, in other projection directions, the value of $SA_{WP}$ might be very different. Moreover, the degree of occlusion between two AACBs may not be represented well by considering only the principal axes (i.e., projections in the X, Y, and Z directions). Moreover, there is no reason why rays would be aligned with the principal axes, and so it would be beneficial to calculate the weighted projected surface area metric for a variety of projections that are not aligned with the principal axes.

Consequently, to generate a more representative surface area utility metric, the weighted projected surface area metric, $SA_{WP}$, should be applied to a representative set of directions. The inventors have identified that 13 different representative directions can provide advantageous results, without the need to test a very large number of projections:

A) 3 directions for orthographic projection along the primary axes (i.e., unit vector directions z [0,0,1], y [0,1,0], x [1,0,0])
B) 6 directions for orthographic projection along the edges (i.e., unit vector directions xy [1, 1, 0], -xy [-1, 1, 0], xz 1, 0, 1], -xz [-1, 0, 1], yz [0, 1, 1], -yz [0, -1, 1])
C) 4 directions for the orthographic projections aligned with corners, i.e., isometric projections (i.e., [1, 1, 1], [-1, 1, 1], [1, -1, 1], [-1, -1, 1])

These directions are not arbitrarily chosen. They have the advantage that any given voxel will entirely occlude voxels of the same size along the same viewing direction, provided those voxels are directly in front or behind, and provided that the bitmask produced from the projection is sampled around the centre point of the voxels. Generally though, using these views enables the creation of a bitmask with a regular spatial structure that exactly covers the 'silhouette' of the voxel grid and anything placed (quantized) within it. Therefore, a combined weighted projected surface area metric, $SA_{WP}^{combined}$, can be calculated as the sum of $SA_{WP}$ calculated for a plurality of different projections, such as the 13 projections provided above.

It should be appreciated that the above-described surface area utility metrics can be applied in a very similar manner to contained regions generated within concave objects as well. One difference in methodology is that, where a projection captures an exception surface, these are not counted for projected surface area overlap since they cannot be used to optimize incident rays in the same way as for a closed object. In other words, the value of $|SA_{unoccluded}|$, which accounts for the projected overlap between the unoccluded region of a candidate contained region and the object mesh, only accounts for the overlap with portions the object projection that do not comprise an exception surface.

Figure 17 shows an example of an isometric projection 1700 (i.e., one of [1, 1, 1], [-1, 1, 1], [1, -1, 1], [-1, -1, 1]). An example of a candidate contained region 1702 is shown inside the silhouette of the Stanford bunny object. This diagram illustrates that, for any voxel of the same size that is in front of or behind the example contained region 1702, that voxel will be fully occluded provided that the sampling has been performed about the centre of the voxel. Consequently, the isometric projections provide an advantageous way of measuring the potential occlusion between voxels. Additionally, is should be appreciated that an isometric view (as seen in Figure 17) represents each voxel as a set of 6 triangles (which are illustrated in the large voxel 1702 in Figure 17). The isometric projection can be represented as a 'bitmask' where each triangle is one 'bit'. In an isometric projection, therefore, the hexagonal silhouette that is produced by each voxel will occlude 6 triangles, corresponding to 6 'bits', in each map.

Separately to the multiple projections, since the voxels are (usually) inherently axis-aligned, usually the expanded voxels and therefore the candidate contained regions are also axis-aligned. Consequently, this has the potential to slightly reduce the efficiency of the occlusion analysis, since some objects may have surfaces that are not well axis-aligned, and so AACBs do not provide optimum space filling. For example, a square object rotated 45 degrees relative to a square voxel would be very poorly occluded by even the largest square voxel that could be fit inside the square object. Nevertheless, it is possible to deliberately create boxes that are aligned with the alternate axes, e.g., corresponding to the orientation of the surfaces of the object. These contained regions would then be 'oriented' as desired, and may be referred to as 'oriented contained boxes', or OCBs.. When testing these OCBs against rays during traversal/intersection testing, an instance transform can be applied to rotate any rays that are tested into the desired projection that aligns with the OCBs. Thus, OCBs that are not aligned with the principal axes of the space-coordinate system can still be efficiently tested, as they may still exploit the efficiencies of box testing units (BTUs) that perform fastest when testing axis-aligned volumes.

Furthermore, it should also be noted that the voxelisation method disclosed above, being XYZ aligned with the principal axes, may still be used (initially) to generate non-axis-aligned OCBs. In other words, using the axis-aligned voxels may allow OCBs to be generated such as by conservatively defining OCBs within the vertices of voxels determined to be inner voxels (e.g. such that an OCB doesn't extend beyond the extents of the inner voxels). As an example, this approach may generate a better contained region than the 'best' (i.e., largest) square contained region defined along the axes of the voxels for a square-shaped object that is rotated 45° around one axis to the voxel grid. The same principles apply equivalently to cubic voxels inside a cubic object.

Contiguous Surface Objects

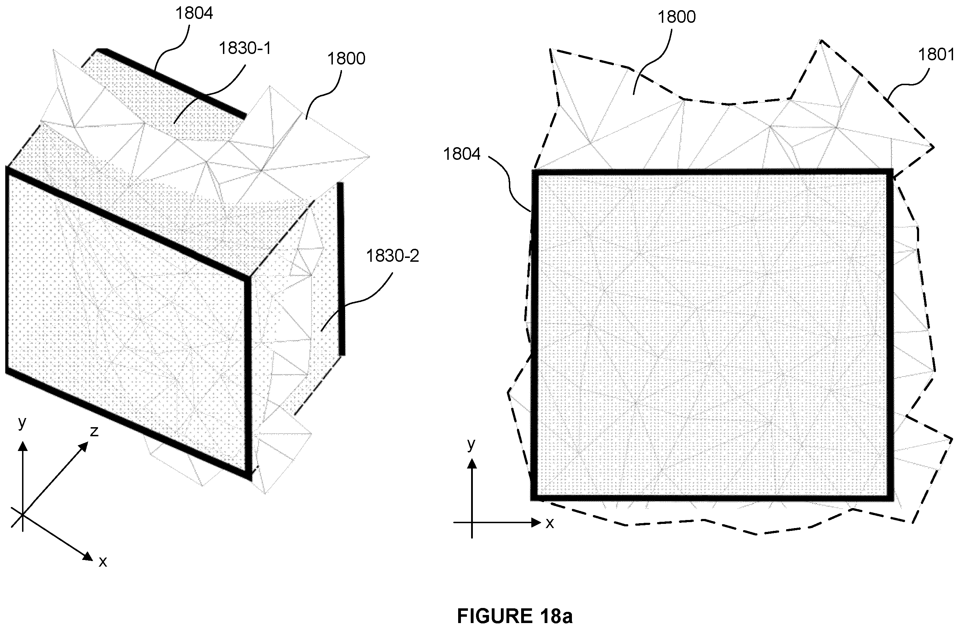

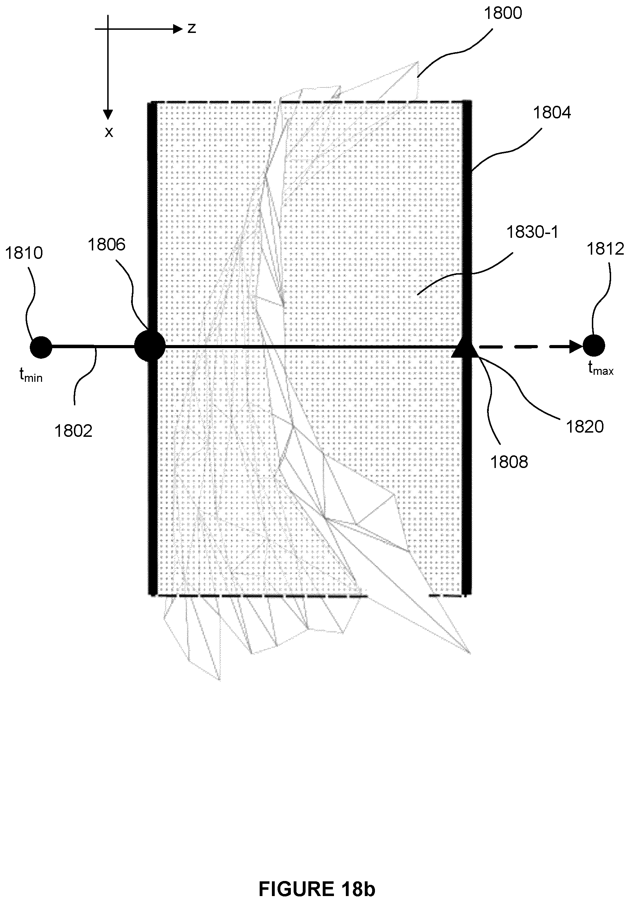

In the above-described objects, some interior region is identified within which the contained regions are expanded. For closed objects, this is the object interior; for concave objects it is the region occupied by concavity voxels (e.g., the convex hull of the object); and for some non-closed self-concealing objects it is the so-called 'hidden region'. However, another class of objects is able to exploit the voxel selection and expansion methods disclosed above. Slightly different occlusion utility metrics and surface area utility metrics are applied to the contained regions developed for contiguous surface objects. For the purposes of surface objects, the contained regions are referred to as "surface-dependent AACBs", or "surface-dependent contained regions", since they are derived specifically to bound part of a surface. In order to provide some context for this type of object, some background is provided to explain the utility of surface-dependent contained regions around contiguous surface objects in ray tracing methods and systems. In the following description in respect of Figures 18a and 18b, the term "partial bounding region" refers to a 'surface-dependent AACB', and so the terms can be considered interchangeable in this context.

Figure 18a illustrates a way of constructing a partial bounding region (i.e., a surface-dependent AACB) that intersects a surface. Doing so enables the existence of an intersection with a contiguous surface to be inferred without determining the exact intersection coordinates with the bounding region. In this particular example in Figure 16a, the triangles forming the surface object 1600 have been partially enclosed by an axis aligned box 1804.

The object 1800 in Figure 18a is comprised of a mesh of triangles. The mesh of triangles in this specific case have been selected from a much larger surface, and are contiguous and watertight (i.e., contain no gaps). The bounding volume 1804 is used here to encase a specific portion of the mesh object 1800. The bounding volume 1804 is considered a partial bounding volume in this case, since it does not entirely contain the surface object 1800. Instead, the partial bounding volume 1804 has the following properties:

    i. Two opposing faces contain a contiguous portion of the surface (i.e., the contained portion of the surface has no gaps). In this example, the front and back faces, i.e., those lying in the yx plane, contain the contiguous portion of the surface.

    ii. The remaining four surfaces are set to be 'exception' surfaces, since they intersect with the surface and are arranged to exclude the edges/outer boundary 1801 of the surface. The two exception surfaces shown in the left-hand drawing in Figure 18a are indicated as 1830-1, 1830-2.

In other words, the partial bounding volume 1804 is arranged relative to the surface 1800 to ensure that the edge/boundary 1801 of the primitives is not contained within any part of the bounding volume 1804. This can be seen from the right-hand drawing, which shows the partial bounding volume viewed along the z-axis direction, and illustrates that the partial bounding volume 1804 is arranged with respect to the surface 1800 such that the surface entirely bisects the partial bounding volume 1804. The boundary edge 1801, defined by the unpaired edges of the triangles, is indicated in the dashed line, and can be seen to fall outside of the partial bounding volume 1804. Thus, the partial bounding volume 1804 comprises two separate volumes that are separated by the surface 1800, and no gaps exist in the portion of the surface 1800 contained within the partial bounding region 1804.

The front and back facing surfaces of the bounding volume 1804, i.e., those lying in the yx plane, are considered 'standard' surfaces of the bounding volume (because they do not intersect the surface). In this example, these faces were chosen to be perpendicular to the narrowest dimension of the surface object 1800. The positions of the exception surfaces may be set so that opposing sides are as far apart as possible, but so that each of the exception surfaces is divided/bisected by a subset of triangles forming the surface object 1800. Each of the four exception surfaces of the bounding 1804 (shown with dashed lines), is divided into (at least) two disjoint regions. Consequently, any straight line drawn from the front surface of the bounding box 1804 (in the yx plane) to the back surface (in the yx plane) must necessarily intersect the surface object 1800 (provided that there are no holes in the triangle mesh forming the object 1800).

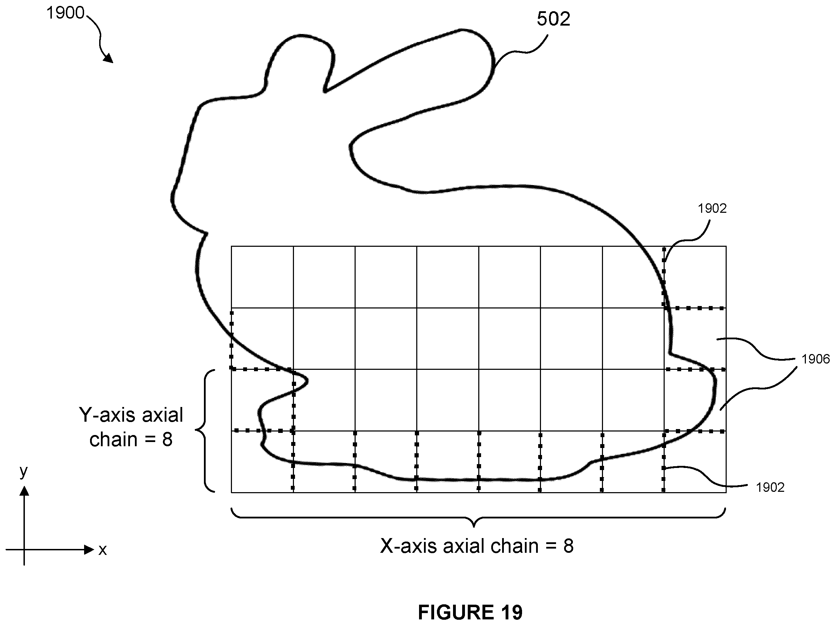

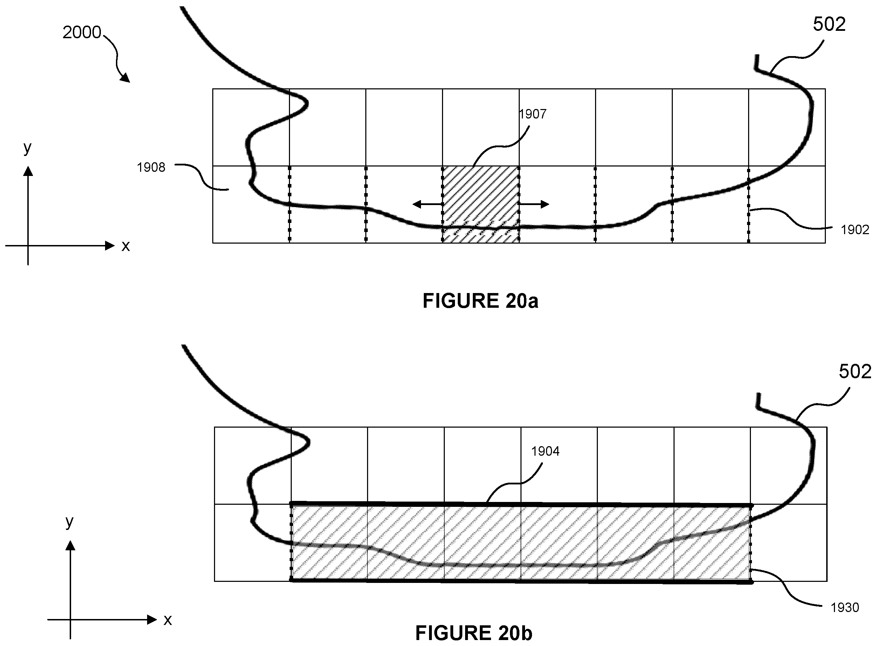

Preferably, the opposing faces that are the 'standard' (i.e., non-exception) surfaces, can be set to be as close together as possible (in a conservative manner) provided the contained portions of the triangles do not intersect those surfaces of the bounding volume 1804. The way in which this is achieved for surface-dependent contained regions is described below in respect of Figures 19, 20a, and 20b.

It should now be appreciated that if a ray enters via either of the non-exception surfaces of the partial bounding volume 1804, and exits by the other non-exception surface, then the ray must intersect at least one of the selected triangles forming part of the surface 1800. The $t_{max}$ value of the ray can then be adjusted to the intersection exit point on the far side of the bounding region 1804. If, however, the ray enters or exits through an exception surface, it is not immediately possible to determine the existence of an intersection.

Figure 18b illustrates explicitly how an intersection ray can be dealt with using the partial bounding volume/surface-dependent AACB of Figure 18a. Figure 18b shows the surface object 1800 and bounding volume 1804 from a new perspective, i.e., view along the negative direction of the y axis, such that only the upper-most exception surface 1830-1 (shown in figure 18a) of the bounding volume 1804 is seen. Figure 18b shows a ray 1802 having a with maximum valid distance $t_{max}$, 1812, and minimum valid distance $t_{min}$, 1810, passing through the surface object 1800. The ray also passes through the opposing non-exception surfaces of the partial bounding volume 1804, via entry point 1806 and exit point 1808. As explained above, since the bounding volume 1804 is arranged to contain only a portion of the surface, where that contained portion of surface comprises no gaps, it is possible to infer an intersection with the surface for a ray that passes through both non-exception surfaces of the partial bounding volume 1804. Such a scenario is indicated in Figure 18b. Consequently, Figure 18b illustrates that the $t_{max}$ value of the ray is updated, i.e. as shown with triangular point 1820, to the intersection exit point between the ray and the bounding region that is furthest along a direction of the ray, i.e., the exit point 1808 of the partial bounding region 1804. If the ray in figure 18b were a shadow ray, processing of the shadow ray could be immediately terminated based on the intersection criteria above.

In this example, the surface object 1800 formed by the triangles happens to be substantially perpendicular to a major axis (the z axis in this case). In other examples, when encountering more 'oblique' surfaces that are not substantially perpendicular to a major axis of the space-coordinate system, an oriented box might be a chosen for the partial bounding volume 1804. An oriented box in this case would be a box having one dimension aligned with the approximate average plane of the surface object.

In order to determine a surface-dependent contained region, such as the region 1804 shown in Figure 18a, some new features of voxels are taken into consideration. The overall objective for generating a surface-dependent contained region is to maximise the area of non-exception surfaces, and minimise the area of exception surfaces. This is because the point of a surface-dependent AACB is the non-exception surfaces should capture a ray (and therefore present a large surface are), and the exception surfaces should not capture a ray (because if they do it is not possible to infer an intersection with the surface object for that ray). This can be achieved by building the surface-dependent AACB around substantially flat areas of an object, or around a contiguous surface that is substantially flat. Such 'flat' areas can be identified by determining a chain of voxels that intersect the surface of an object.

In order to determine this metric, 'voxel exception surfaces' are defined. In other words, the extended continuous lines of the voxel grid which intersect with the object surface needs to be identified, which corresponds to identifying a 'chain' of boundary voxels (since boundary voxels are defined as voxels that intersect with the mesh of a surface). These chains of boundary voxels can be identified by determining continuities of such boundary voxels. Furthermore, if the continuities/chains of boundary voxels can be identified, then the continuities/chains can be quantified. Advantageously, therefore, it is possible to estimate the performance of boundary voxels that form part of a chain by quantifying the continuities/chains. In other words, the occlusion utility metric for boundary voxels that are used to form surface-dependent AACBs can be based on a quantification of the continuities/chains of boundary voxels lying on a surface.

Figure 19 shows an example of an object 1900 that has a substantially flat base. The object again is the Stanford bunny. Again, the following example is illustrated in 2D but is applicable to both 2D and 3D examples. A voxel grid of voxels is shown, where boundary voxels 1906, as before, are those that intersect with the object mesh 502. Figure 19 also shows 'voxel exception surfaces' 1902, which are the specific faces/edges of the voxels that intersect with the mesh. These voxel exception surfaces 1902 are indicated by way of the squared dashed lines. Voxel exception surfaces are a means of identifying continuities within a voxel grid. Individual faces of voxels which intersect triangles are flagged, indicating that a surface passes through it. Where there are continuous chains of voxel exception surfaces along a particular axis, it can therefore be determined that there must be a flat surface along that axis. Consequently, a chain of voxel exception surfaces (corresponding to a chain a boundary voxels) can help identify a flat region of a mesh around which a surface-dependent contained region may be generated.

Voxel exception surfaces can be calculated easily in at least two ways. The first is analytically: i.e., by modifying the triangle-box intersection routine used in voxelisation to also identify which faces of voxels are intersected by the mesh (and, for non-closed meshes, it should also be checked that the region is fully connected, i.e., contiguous). A simple way to do this is via testing voxels as 6 individual planes. The second method is approximate: i.e., by analysing the voxelised hull map of a voxelised mesh (i.e. the boundary voxels). It is usually correct to say that faces that lie between two adjacent boundary voxels will be a voxel exception surface.

The method of quantifying the length of a series of voxel exception surfaces 1902 is using the notion of an axial chain length. In plain terms, the number of 'jumps' from one voxel exception surface to another that can be counted along a given principal axis is the voxel's 'axial chain lengths' for that axis. Figure 19 shows that the axial chain length in the x-direction is 8, since there are 8 contiguous voxel exception surfaces in a straight line along the x-axis. Figure 19 also shows that the axial chain length in the y-direction is 2, since there are only 2 contiguous voxel exception surfaces in a straight line along the y-axis.

In reality, however, complex surfaces are usually not completely flat, but contain shallow meandering curves. Depending on the resolution/grid size of the voxel, shallow curves may be captured by a straight line of boundary voxels, though this is not always the case. In some cases, the axial chain length for a surface would be underestimated by strictly limiting voxel exception surface jumps to a single axis, without allowing for deviations in orthogonal directions. Consequently, we can account for these small deviations by allowing a predetermined amount of deviation away from the principal axis being considered, to account for a gradually curving surface. This allows for a small number of orthogonal jumps away from the principal axis direction, with an amount proportional to the current length of the chain. For example, in Figure 19, it can be seen that the lower-right boundary voxel intersects the mesh surface 502 in the line above the lowermost line of voxels. However, since this is only a deviation of a single voxel, it is allowed.

In some examples, a coefficient may be used to determine how much deviation to allow. The coefficient used in calculating how many of these orthogonal jumps we allow may be defined as $n_{jumps} = k \times d$, where $d$ is the length of 'jumps' that lie strictly in a straight line, and $k$ is a coefficient that can be arbitrarily determined. The inventors have found that a value of $k$ equal to about ~0.05 performs well for most typical meshes. It will be understood that this parameter can be adjusted to any suitable value to get the desired behaviour from the voxel generation algorithm.

Any given voxel will be associated with three axial chain lengths (for a 3D scene, only two chain lengths can be shown in the 2D example in Figure 19), i.e., one chain length for each axis-aligned direction. This represents the size of the chain, in that axis, in which the voxel is situated. Consequently, an occlusion utility metric based on the chain length can be obtained from the maximum of a voxel's 3 axial chain lengths. For example, the occlusion utility metric for a boundary voxel in the chain of 8 voxel exception surfaces could be 8. In this disclosure, the three chain lengths for each voxel, calculated for each principal axis, may be called the maximum chain length, the median chain length, and the lowest/minimum chain length.

It should be appreciated that the maximum chain length is representative of a lower bound on the largest dimension of a surface-dependent contained region, once grown from a boundary voxel. However, the exception surfaces that are a part of the surface-dependent contained region cannot be used, and so their area should preferably be taken into account when determining an occlusion utility metric for boundary voxels.

Consequently, the maximum chain length may be discounted based on estimated exception surface area, which can be inferred from the voxel's median chain length and minimum chain length. Though it may provide better results to calculate an occlusion utility metric based on the expected non-exception surface area (i.e. from the two largest chain lengths), only one chain length is used preferably in order to keep the metric a linearly scaling value instead of polynomially scaling. However, a linearly scaling chain-length metric has the advantage that it can be directly compared to the other occlusion utility metrics described herein (i.e., the voxel density metrics). In other words, to keep the metric comparable with the other metrics, the dimensionality is deliberately chosen to be linear, i.e., proportional to a single axial chain length. Nevertheless, the axial chain length metric accounts for the chain length in all directions, by being constructed as follows:

$$d^-_{\max} = x \times \frac{xy}{xy + xz + yz}$$

'x', 'y', and 'z' represent the maximum chain length, median chain length, and minimum chain length (respectively) for a given voxel. This particular occlusion utility metric, based on axial chain lengths, may be referred to as the 'discounted maximum chain length', in which the 'discount' refers to the fraction in the equation, which is indicative of the proportion of the exception surface area.

Figure 20a and 20b show how the boundary voxels intersecting a surface can be selected and expanded to form contained regions. The selection of a suitable voxel follows the same process as selecting an inner voxel for expansion within a closed object or a concavity voxel for expansion within a concave object: i.e., the voxel with the highest (or equal highest) occlusion utility metric is chosen. The preferred occlusion utility metric for boundary voxels is the maximum axial chain length, or the discounted maximum chain length.

The mesh 502 of the object 2000 in Figure 20a is the base of the Stanford bunny object. The voxel exception surfaces 1902 are again shown to indicate where the chain of boundary voxels lies. In addition to the requirement that a boundary voxel is chosen for expansion, an additional condition is usually imposed, which is that the boundary voxel should be entirely bisected by the surface (such a boundary voxel will almost always exist). In other words, the boundary voxel should comprise four voxel exception surfaces which bisect the voxel (for a 3D voxel). For a 2D voxel, there would only be two voxel exception surfaces. It can be seen that boundary voxel 1907 is indeed bisected by the surface mesh 502, and correspondingly, it contains two voxel exception surfaces. By contrast, boundary voxel 1908 contains only a single voxel exception surface, and it is not bisected by the mesh 502. Therefore, in this case, boundary voxel 1907 is chosen (although we cannot see what the z-axis axial chain length for that voxel would be in a 3D scenario).

The expansion of boundary voxels follows the same general objective of trying to expand uniformly in the first instance in order to maximise surface area. However, as mentioned above, surface-dependent AACBs have four exception surfaces (i.e. faces that intersect with the object surface), which effectively have zero utility. This is because if a ray intersects with the exception surface of a surface-dependent contained region/AACB, the traversal of that ray cannot be optimised in any way. Therefore, the objective to expand the surface-dependent AACBs uniformly applies only to the dimensions that are aligned with the surface, and not to the dimension that is perpendicular to the surface of the object (since expanding perpendicular to the object's surface corresponds to increasing the size of the exception surfaces).

Consequently, the maximum and median axial chain lengths indicate where the non-exception surfaces will go, and therefore indicate the dimensions in which the voxel should be expanded in the first instance. This is so that the surface area of the non-exception surfaces is increased, while minimizing the surface area(s) of the exception surfaces (which correlate to the minimum chain length).

In the 2D example 2000 in Figure 20a, the maximum chain length represents the x direction, and the minimum chain length is the y direction. If extended to a 3D object, the median chain length would be the z-direction. Consequently, as indicated by the arrows in Figure 20, the selected boundary voxel 1907 is expanded along the direction of the x-axis chain. In 3D, the voxel would be simultaneously expanded along the x-axis chain and the z-axis chain (i.e., the maximum and median chain lengths). This mode of expansion keeps the expanding voxel as uniform as possible in the non-exception surface plane.

The 'ends' of the AACB always need to contain exception surfaces, so expansion can be terminated as soon as it is determined that further expansion would result in the exception surfaces of the voxel becoming standard surfaces. Figure 20b shows an expanded voxel 1904 that is the result of expanding the original boundary voxel 1907 in the x-dimension. As can be seen, the two ends of the expanded voxel 1904 both comprise exception surfaces 1930, which intersect with the object mesh 502. If the expanded voxel 1904 were to be expanded one voxel further in either the +x or the -x direction, this would no longer be the case, and the voxel would no longer be a valid surface-dependent AACB. In some examples, it may be desired to expand the voxel non-uniformly a small amount in the minimum axial chain length dimension, following expansion in the maximum and median chain length dimensions. This may be performed in order to capture shallow curves in the surface, thereby allowing the voxel to be expanded further in the maximum and median chain length directions.

In more detail regarding the termination conditions of the voxel expansion, expansion is limited, as with the closed object examples, with a notion of 'constrained' voxels. However, the constraints for a contiguous surface are different to the previous examples. For example, in order to ensure the generation of a valid surface-dependent AACB, expansion should be terminated when:

i) There isn't a complete set of boundary voxels that spans the plane defined by the maximum chain length (in a 2D case) or for the maximum and media chain lengths (in a 3D case), edge-to-edge. In other words, an expansion edge should have boundary voxels that span across it and adjoin to boundary voxels in the existing box edge

ii) A boundary voxel in the expansion edge has a standard voxel surface (i.e., non-voxel exception surface) aligned with the direction of the expansion. This would correspond to expanding past the edge of the contiguous surface (e.g., if the exception surface 1930 no longer intersected the mesh 502).

It should be appreciated that multiple different surface-dependent AACBs can be generated for a surface, and they are able to overlap, i.e., spatially intersect with one another, in the same way as for the other object types. Moreover, a set of surface-dependent AACBs may also be refined to a smaller set using the same surface area utility metric as described above. However, since the surface-dependent AACBs comprise four exception surfaces, the projection of the surface-dependent AACBs becomes a simpler problem since the projected surface area would only need to be calculated in the minimum axial chain direction (thereby excluding the exception surfaces). In other words, projections in multiple different directions would not be needed for surface-dependent AACBs.

One further aspect of the contained region generation method is the pre-processing of the mesh, which in some examples may be needed in order to identify closed objects and the different types of voxels. Some level of pre-processing is often needed in order to help label the voxels with their correct category, since this cannot always be done before the mesh itself has been processed to determine the connectivity. Broadly speaking, pre-processing is done in order to identify which objects are truly 'closed' (i.e., watertight), so that the first-generation cases can be identified and the AACBs can be generated.

Three commonly performed steps involved in the mesh pre-processing are as follows:

1) 'Mesh optimisation'. This involves ensuring that the vertices that are intended to be connected are, in fact, connected (e.g. merge duplicates).
2) 'Instance segmentation'. This involves identifying which parts of the mesh are intended to be distinct objects. The meshes of the identified distinct objects are then classified as separate sub-meshes. A sub-mesh may be classified as a set of vertices that form a connected undirected graph.
3) 'Closure classification'. After step 2), each sub-mesh can be classified as closed or open. Classification of inner voxels may be skipped for meshes that are 'open', although these can still be treated as concavity objects.

For open meshes, the surface-dependent AACB type of contained region can be applied. Concavity voxels may also be applied to open meshes, provided there is some curvature. It should also be appreciated that a surface-dependent AACB can be applied to all types of objects, provided that at least a portion of the surface of the object is contiguous (i.e., has no gaps/holes).

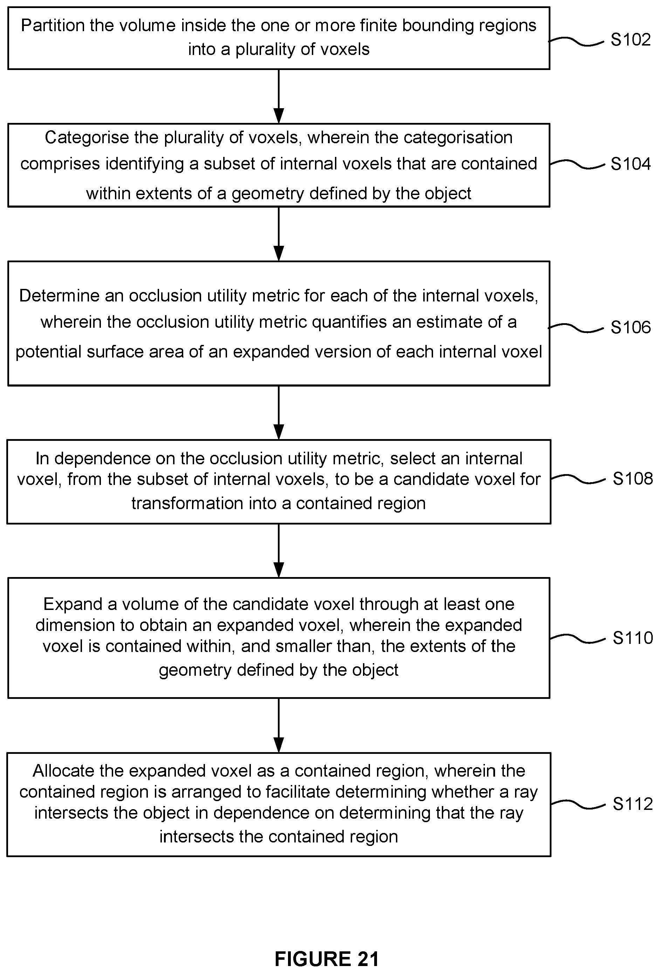

Figure 21 is a flowchart illustrating an example method, according to presently disclosed embodiments, for generating a contained region within an object. This method applied to all types of objects described herein, i.e., closed objects, open (concave) objects, contiguous surfaces, and non-closed self-concealing objects. For the purposes of the following method, it will be understood that the contained region is arranged to facilitate determining whether a ray intersects an object of a scene, and that the object is contained within one or more finite bounding regions (e.g., contained within a region defined by a union of the one or more bounding regions) which form part of an object partitioning hierarchy.

Step S102 involves partitioning the volume inside the one or more finite bounding regions into a plurality of voxels. Examples of such partitioning are described in respect of the voxelisation of objects. In some cases, the voxelisation will result in a set of voxels defined by a voxel grid that is aligned with the principal axes, thereby making each voxel axis-aligned. However, this is not necessarily the case. The voxel grid may have another orientation. Furthermore, voxels may be reoriented, as described above, to generate an oriented contained box, OCB.

Step S104 involves categorising the plurality of voxels, wherein the categorisation comprises identifying a subset of internal voxels that are contained within extents of a geometry defined by the object. In examples, this involves categorizing voxels according to one or more of the following voxel types: inner voxels, boundary voxels, concavity voxels, and 'empty' voxels. Further, for non-closed self-concealing objects, voxels that are initially categorised as concavity voxels may be deemed/labelled also as inner voxels if they are found to reside within the 'hidden region'. The extents of a geometry defined by the object depends on the type of object, as described herein.

Step S106 involves determining an occlusion utility metric for each of the internal voxels, wherein the occlusion utility metric quantifies an estimate of a potential surface area of an expanded version of each internal voxel. More than one occlusion utility metric may be determined for each voxel. Preferably, the occlusion utility metric quantifies an estimate of a lower bound of a surface area of each internal voxel when expanded and transformed into a contained region, and thereby estimates a potential utility of each internal voxel, once expanded into a contained region, to occlude the object. In examples, the occlusion utility metric is a scalar value, for example a 1 dimensional scalar estimate of surface area, which advantageously enables rapid and (mathematically) straightforward comparison with other occlusion utility metrics also defined as a scalar value.

Step S108 involves, in dependence on the occlusion utility metric, selecting an internal voxel, from the subset of internal voxels, to be a candidate voxel for transformation into a contained region. It should be appreciated that, when more than one occlusion utility metric has been calculated for a voxel, the voxel may be selected based on either of the occlusion utility metrics (preferably based on which has the highest value).

Step S110 involves expanding a volume of the candidate voxel through at least one dimension to obtain an expanded voxel, wherein the expanded voxel is contained within, and smaller than, the extents of the geometry defined by the object. As described above, this preferably involves first a uniform expansion until a constrained area/voxel is reached, followed by non-uniform expansion or extension. Preferably, and if it is possible, the non-uniform expansion involves simultaneous extension in more than one dimension.

Step S112 involves allocating the expanded voxel as a contained region, wherein the contained region is arranged to facilitate determining whether a ray intersects the object in dependence on determining that the ray intersects the contained region. This step may optionally involve performing a test, based on the utility of the expanded voxel, to determine whether to keep the allocated voxel, and/or to determine whether to replace an existing contained regions with the expanded voxel. Suitable surface area utility criteria are described above, e.g., the weighted projected surface area metric. The way in which the contained region may facility intersection testing is described throughout the current specification, e.g., in respect of Figures 4a-c, 6a, 6b, 7, 10a-10c, 11a-11c, 17, 18a and 18b.

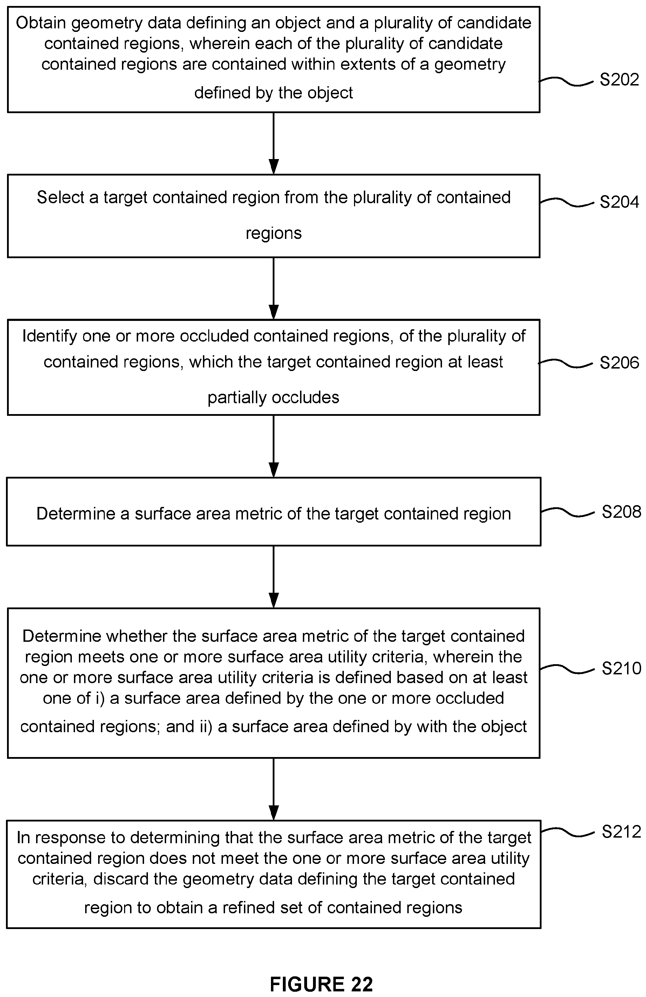

Figure 22 is a flowchart illustrating an example method, according to presently disclosed embodiments, for selecting from a plurality of contained regions to obtain a refined set. In other words, the method involves pruning a set of contained regions in order to obtain a more optimal set of contained regions that provides a better balance between occlusion utility and intersection testing cost. For the purposes of the following method, it will be understood that each of the plurality of contained regions is arranged to facilitate determining whether a ray intersects an object of a scene, wherein the object is contained within one or more finite bounding regions which form part of an object partitioning hierarchy.

Step S202 involves obtaining geometry data defining an object and a plurality of candidate contained regions, wherein each of the plurality of candidate contained regions are contained within extents of a geometry defined by the object.

Step S204 involves selecting a target contained region from the plurality of contained regions. Selection can be done arbitrarily, e.g., at random. Alternatively, selection may be done in dependence on the occlusion utility metric determined for the voxel. For example, a contained region having the lowest occlusion utility metric, or an occlusion utility metric below a certain threshold, may be selected as the target contained region.

Step S206 involves identifying one or more occluded contained regions, of the plurality of contained regions, which the target contained region at least partially occludes. It will be appreciated that this occlusion comprises occlusion by projection only, having no spatial intersection. The occlusion also comprises spatial intersection, which would thereby also involve at least partial occlusion.

Step S208 involves determining a surface area metric of the target contained region. This metric may be based on the target area alone, or may involve a metric determined based on the target contained region and the object, and/or may involve a metric determined based on the target contained region and another contained region. In some cases, the surface area metric may simply be the occlusion utility associated with the voxel that was expanded to generate the target contained region.

Step S210 involves determining whether the surface area metric of the target contained region meets one or more surface area utility criteria, wherein the one or more surface area utility criteria is defined based on at least one of i) a surface area defined by the one or more occluded contained regions; and ii) a surface area defined by with the object. Suitable examples of surface area utility criteria are described above. The surface area utility criteria may comprise one or more thresholds and/or one or more comparison tests.

Step S212 involves, in response to determining that the surface area metric of the target contained region does not meet the one or more surface area utility criteria, discarding the geometry data defining the target contained region to obtain a refined set of contained regions.

Subsequent to the steps outlined in Figure 22, the refined set of contained regions are arranged to facilitate determining whether a ray intersects the object in dependence on determining that the ray intersects at least one contained region of the refined set of contained regions. The way in which the refined set of contained regions may facility intersection testing is described throughout the current specification, e.g., in respect of Figures 4a-c, 6a, 6b, 7, 10a-10c, 11a-11c, 17, 18a and 18b.

The set of refined contained regions contains one fewer contained region than the plurality of contained regions, wherein the target contained region that was removed was discarded because it did not meet some surface area utility criteria. Consequently, the refined set of contained regions have been derived such that, overall, they provide better utility. To give a simple example, suppose the target contained region that was discarded did not occlude any unique part of the object, from any projection, that was not also occluded by the union of the refined set of contained regions. The refined set of contained regions therefore has a lower intersection cost (because it has one fewer contained region to test), but has exactly the same occlusion utility as before the target contained region was removed. Therefore, advantageously, the refined set of contained regions can be used more efficiently, and so has improved utility.

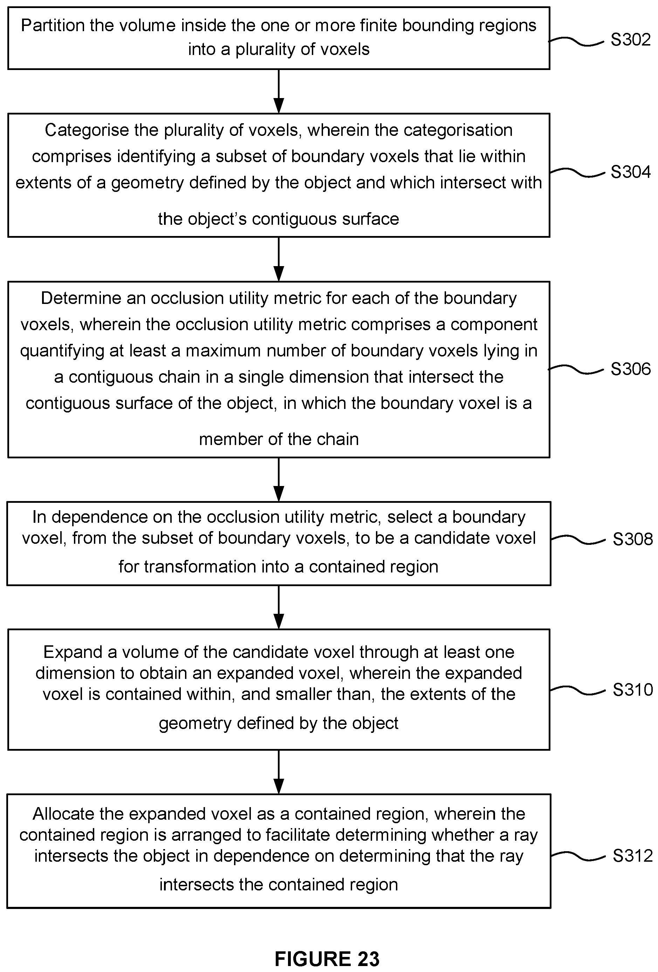

Figure 23 is a flowchart illustrating an example method, according to presently disclosed embodiments, for generating a contained region for a contiguous surface, or a portion of a surface of an object that is contiguous. For the purposes of the following method, it will be understood that the contained region is arranged to facilitate determining whether a ray intersects an object of a scene, wherein the object is contained within one or more finite bounding regions which form part of an object partitioning hierarchy, and wherein the object is a contiguous surface.

Step S302 involves partitioning the volume inside the one or more finite bounding regions into a plurality of voxels.

Step S304 involves categorising the plurality of voxels, wherein the categorisation comprises identifying a subset of boundary voxels that lie within extents of a geometry defined by the object and which intersect with the object's contiguous surface.

Step S306 involves determining an occlusion utility metric for each of the boundary voxels, wherein the occlusion utility metric comprises a component quantifying at least a maximum number of boundary voxels lying in a contiguous chain in a single dimension that intersect the contiguous surface of the object, in which the boundary voxel is a member of the chain.

Step S308 involves in dependence on the occlusion utility metric, selecting a boundary voxel, from the subset of boundary voxels, to be a candidate voxel for transformation into a contained region. Preferably, the selected boundary voxel is bisected by the contiguous surface, where the plane of bisection is aligned with the dimension of the contiguous chain in the single dimension defining the maximum number of boundary voxels.

Step S310 involves expanding a volume of the candidate voxel through at least one dimension to obtain an expanded voxel, wherein the expanded voxel is contained within, and smaller than, the extents of the geometry defined by the object. In this case, the extents of the geometry defined by the object are preferably defined by the outer boundary of the contiguous surface. In some cases, the contiguous surface may be part of a closed object. Therefore, in some examples the extents of the geometry defined by the object (that contained the expanded voxel) may be defined by a spanning plane of boundary voxels.

Step S312 involves allocating the expanded voxel as a contained region, wherein the contained region is arranged to facilitate determining whether a ray intersects the object in dependence on determining that the ray intersects the contained region. The way in which such an expanded voxel may facility intersection testing is described in respect of Figures 18a and 18b.

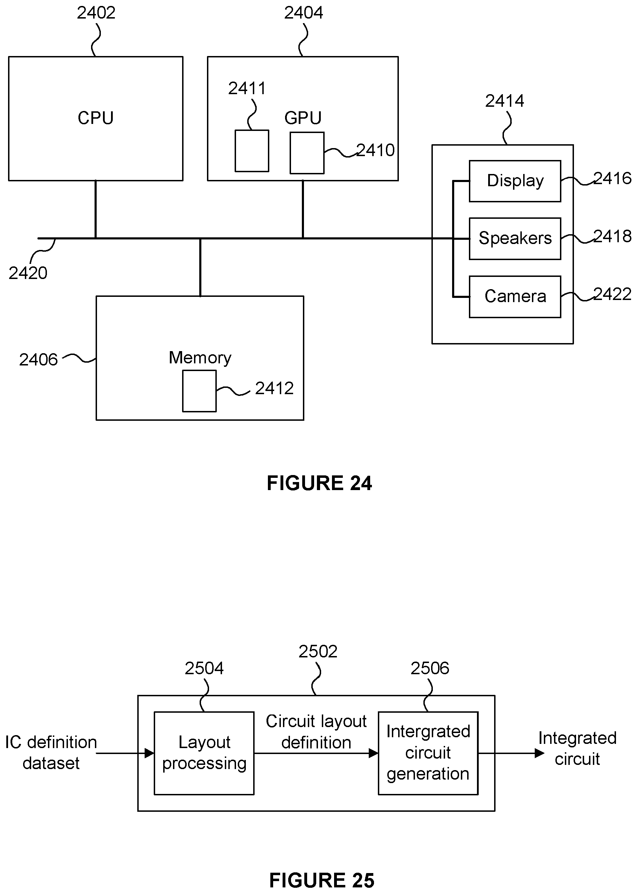

Figure 24 shows a computer system in which the graphics processing systems described herein may be implemented. The computer system comprises a CPU 2402, a GPU 2404, a memory 2406, a neural network accelerator (NNA) 2408 and other devices 2414, such as a display 2416, speakers 2418 and a camera 2422. A processing block 2410 (corresponding to processing logic 110) is implemented on the GPU 2404. In other examples, one or more of the depicted components may be omitted from the system, and/or the processing block 2410 may be implemented on the CPU 2402 or within the NNA 2408. The components of the computer system can communicate with each other via a communications bus 2420. A store 2412 (corresponding to store 104) is implemented as part of the memory 2406.

The graphics processing system of Figure 1 is shown as comprising a number of functional blocks. This is schematic only and is not intended to define a strict division between different logic elements of such entities. Each functional block may be provided in any suitable manner. It is to be understood that intermediate values described herein as being formed by a graphics processing module need not be physically generated by the graphics processing module at any point and may merely represent logical values which conveniently describe the processing performed by the graphics processing module between its input and output.

The graphics processing modules described herein may be embodied in hardware on an integrated circuit. The graphics processing modules described herein may be configured to perform any of the methods described herein. Generally, any of the functions, methods, techniques or components described above can be implemented in software, firmware, hardware (e.g., fixed logic circuitry), or any combination thereof. The terms "module," "functionality," "component", "element", "unit", "block" and "logic" may be used herein to generally represent software, firmware, hardware, or any combination thereof. In the case of a software implementation, the module, functionality, component, element, unit, block or logic represents program code that performs the specified tasks when executed on a processor. The algorithms and methods described herein could be performed by one or more processors executing code that causes the processor(s) to perform the algorithms/methods. Examples of a computer-readable storage medium include a random-access memory (RAM), read-only memory (ROM), an optical disc, flash memory, hard disk memory, and other memory devices that may use magnetic, optical, and other techniques to store instructions or other data and that can be accessed by a machine.

The terms computer program code and computer readable instructions as used herein refer to any kind of executable code for processors, including code expressed in a machine language, an interpreted language or a scripting language. Executable code includes binary code, machine code, bytecode, code defining an integrated circuit (such as a hardware description language or netlist), and code expressed in a programming language code such as C, Java or OpenCL. Executable code may be, for example, any kind of software, firmware, script, module or library which, when suitably executed, processed, interpreted, compiled, executed at a virtual machine or other software environment, cause a processor of the computer system at which the executable code is supported to perform the tasks specified by the code.

A processor, computer, or computer system may be any kind of device, machine or dedicated circuit, or collection or portion thereof, with processing capability such that it can execute instructions. A processor may be or comprise any kind of general purpose or dedicated processor, such as a CPU, GPU, NNA, System-on-chip, state machine, media processor, an application-specific integrated circuit (ASIC), a programmable logic array, a field-programmable gate array (FPGA), or the like. A computer or computer system may comprise one or more processors.

It is also intended to encompass software which defines a configuration of hardware as described herein, such as HDL (hardware description language) software, as is used for designing integrated circuits, or for configuring programmable chips, to carry out desired functions. That is, there may be provided a computer readable storage medium having encoded thereon computer readable program code in the form of an integrated circuit definition dataset that when processed (i.e. run) in an integrated circuit manufacturing system configures the system to manufacture a graphics processing module configured to perform any of the methods described herein, or to manufacture a graphics processing module comprising any apparatus described herein. An integrated circuit definition dataset may be, for example, an integrated circuit description.

Therefore, there may be provided a method of manufacturing, at an integrated circuit manufacturing system, a graphics processing module as described herein. Furthermore, there may be provided an integrated circuit definition dataset that, when processed in an integrated circuit manufacturing system, causes the method of manufacturing a graphics processing module to be performed.

An integrated circuit definition dataset may be in the form of computer code, for example as a netlist, code for configuring a programmable chip, as a hardware description language defining hardware suitable for manufacture in an integrated circuit at any level, including as register transfer level (RTL) code, as high-level circuit representations such as Verilog or VHDL, and as low-level circuit representations such as OASIS (RTM) and GDSII. Higher level representations which logically define hardware suitable for manufacture in an integrated circuit (such as RTL) may be processed at a computer system configured for generating a manufacturing definition of an integrated circuit in the context of a software environment comprising definitions of circuit elements and rules for combining those elements in order to generate the manufacturing definition of an integrated circuit so defined by the representation. As is typically the case with software executing at a computer system so as to define a machine, one or more intermediate user steps (e.g. providing commands, variables etc.) may be required in order for a computer system configured for generating a manufacturing definition of an integrated circuit to execute code defining an integrated circuit so as to generate the manufacturing definition of that integrated circuit.

An example of processing an integrated circuit definition dataset at an integrated circuit manufacturing system so as to configure the system to manufacture a graphics processing module will now be described with respect to Figure 25.

Figure 25 shows an example of an integrated circuit (IC) manufacturing system 1002 which is configured to manufacture a graphics processing module as described in any of the examples herein. In particular, the IC manufacturing system 2502 comprises a layout processing system 2504 and an integrated circuit generation system 2506. The IC manufacturing system 2502 is configured to receive an IC definition dataset (e.g. defining a graphics processing module as described in any of the examples herein), process the IC definition dataset, and generate an IC according to the IC definition dataset (e.g. which embodies a graphics processing module as described in any of the examples herein). The processing of the IC definition dataset configures the IC manufacturing system 2502 to manufacture an integrated circuit embodying a graphics processing module as described in any of the examples herein.

The layout processing system 2504 is configured to receive and process the IC definition dataset to determine a circuit layout. Methods of determining a circuit layout from an IC definition dataset are known in the art, and for example may involve synthesising RTL code to determine a gate level representation of a circuit to be generated, e.g. in terms of logical components (e.g. NAND, NOR, AND, OR, MUX and FLIP-FLOP components). A circuit layout can be determined from the gate level representation of the circuit by determining positional information for the logical components. This may be done automatically or with user involvement in order to optimise the circuit layout. When the layout processing system 2504 has determined the circuit layout it may output a circuit layout definition to the IC generation system 2506. A circuit layout definition may be, for example, a circuit layout description.

The IC generation system 2506 generates an IC according to the circuit layout definition, as is known in the art. For example, the IC generation system 2506 may implement a semiconductor device fabrication process to generate the IC, which may involve a multiple-step sequence of photo lithographic and chemical processing steps during which electronic circuits are gradually created on a wafer made of semiconducting material. The circuit layout definition may be in the form of a mask which can be used in a lithographic process for generating an IC according to the circuit definition. Alternatively, the circuit layout definition provided to the IC generation system 2506 may be in the form of computer-readable code which the IC generation system 2506 can use to form a suitable mask for use in generating an IC.

The different processes performed by the IC manufacturing system 2502 may be implemented all in one location, e.g. by one party. Alternatively, the IC manufacturing system 2502 may be a distributed system such that some of the processes may be performed at different locations, and may be performed by different parties. For example, some of the stages of: (i) synthesising RTL code representing the IC definition dataset to form a gate level representation of a circuit to be generated, (ii) generating a circuit layout based on the gate level representation, (iii) forming a mask in accordance with the circuit layout, and (iv) fabricating an integrated circuit using the mask, may be performed in different locations and/or by different parties.

In other examples, processing of the integrated circuit definition dataset at an integrated circuit manufacturing system may configure the system to manufacture a graphics processing module without the IC definition dataset being processed so as to determine a circuit layout. For instance, an integrated circuit definition dataset may define the configuration of a reconfigurable processor, such as an FPGA, and the processing of that dataset may configure an IC manufacturing system to generate a reconfigurable processor having that defined configuration (e.g. by loading configuration data to the FPGA).

In some embodiments, an integrated circuit manufacturing definition dataset, when processed in an integrated circuit manufacturing system, may cause an integrated circuit manufacturing system to generate a device as described herein. For example, the configuration of an integrated circuit manufacturing system in the manner described above with respect to Figure 25 by an integrated circuit manufacturing definition dataset may cause a device as described herein to be manufactured.

In some examples, an integrated circuit definition dataset could include software which runs on hardware defined at the dataset or in combination with hardware defined at the dataset. In the example shown in Figure 25, the IC generation system may further be configured by an integrated circuit definition dataset to, on manufacturing an integrated circuit, load firmware onto that integrated circuit in accordance with program code defined at the integrated circuit definition dataset or otherwise provide program code with the integrated circuit for use with the integrated circuit.

The implementation of concepts set forth in this application in devices, apparatus, modules, and/or systems (as well as in methods implemented herein) may give rise to performance improvements when compared with known implementations. The performance improvements may include one or more of increased computational performance, reduced latency, increased throughput, and/or reduced power consumption. During manufacture of such devices, apparatus, modules, and systems (e.g. in integrated circuits) performance improvements can be traded-off against the physical implementation, thereby improving the method of manufacture. For example, a performance improvement may be traded against layout area, thereby matching the performance of a known implementation but using less silicon. This may be done, for example, by reusing functional blocks in a serialised fashion or sharing functional blocks between elements of the devices, apparatus, modules and/or systems. Conversely, concepts set forth in this application that give rise to improvements in the physical implementation of the devices, apparatus, modules, and systems (such as reduced silicon area) may be traded for improved performance. This may be done, for example, by manufacturing multiple instances of a module within a predefined area budget.

The applicant hereby discloses in isolation each individual feature described herein and any combination of two or more such features, to the extent that such features or combinations are capable of being carried out based on the present specification as a whole in the light of the common general knowledge of a person skilled in the art, irrespective of whether such features or combinations of features solve any problems disclosed herein. In view of the foregoing description it will be evident to a person skilled in the art that various modifications may be made within the scope of the invention.

According to examples of the disclosure provided herein, the following clauses are provided, which relate to methods and systems for refinement of a plurality of AACBs to obtain a more efficient set of AACBs:

1. A method of selecting a plurality of contained regions for use in a ray tracing system, wherein each of the plurality of contained regions is arranged to facilitate determining whether a ray intersects an object of a scene, wherein the object is contained within one or more finite bounding regions which form part of an object partitioning hierarchy, the method comprising:

   obtaining geometry data defining an object and a plurality of candidate contained regions, wherein each of the plurality of candidate contained regions are contained within extents of a geometry defined by the object;
   selecting a target contained region from the plurality of contained regions;
   identifying one or more occluded contained regions, of the plurality of contained regions, which the target contained region at least partially occludes;
   determining a surface area metric of the target contained region;
   determining whether the surface area metric of the target contained region meets one or more surface area utility criteria, wherein the one or more surface area utility criteria is defined based on at least one of i) a surface area defined by the one or more occluded contained regions; and ii) a surface area defined by with the object;
   in response to determining that the surface area metric of the target contained region does not meet the one or more surface area utility criteria, discarding the geometry data defining the target contained region to obtain a refined set of contained regions;
   wherein the refined set of contained regions are arranged to facilitate determining whether a ray intersects the object in dependence on determining that the ray intersects at least one contained region of the refined set of contained regions.

2. The method of clause 1, wherein one or more surface area utility criteria defines, for at least one projection direction, a minimum amount of overlap between: i) a projected surface area of the target contained region; and ii) a projected surface area of a first occluded contained region in the one or more occluded contained regions.

3. The method of clause 2, wherein the surface area metric is a combined surface area of all sides of the target contained region, and the one or more surface area utility criteria comprises a predetermined minimum surface area defining a minimum surface area for the combined surface area of all sides of a contained region.

4. The method of clause 3, wherein determining that the surface area metric of the target contained region does not meet the one or more surface area utility criteria comprises:

   determining that the overlap between i) the projected surface area of the target contained region and ii) the projected surface area of the first occluded contained region exceeds the minimum amount of overlap; and

determining that the combined surface area of all sides of the target contained region do not exceed the predetermined minimum surface area.

5. The method of clause 4, wherein determining that the surface area metric of the target contained region does not meet the one or more surface area utility criteria further comprises;

determining that an overlap between i) a projected surface area of the first occluded contained region and ii) a projected surface area of a second occluded contained region exceeds the minimum amount of overlap; and determining that the combined surface area of all sides of the second occluded contained region exceed the predetermined minimum surface area.

6. The method of any preceding clause, wherein the surface area metric comprises, for a given projection direction:

a first component defining a proportion of overlap between i) a projection of the target contained region and ii) a first occluded contained region in the one or more occluded contained regions; and
and a second component defining a proportion of overlap between i) the projection of the target contained region and ii) a projection of the object,
wherein the one or more surface area utility criteria comprises is a predetermined value defined using the first and second component.

7. The method of clause 6, wherein the surface area metric is a weighted projected surface area metric, $SA_{WP}$, being a product of the first component and second component, and is defined as

$$SA_{WP} = \frac{SA_{unoccluded}}{SA_{total}} \times \frac{SA_{unoccluded}}{SA_{object}}$$

wherein:

$SA_{unoccluded}$ defines a surface area of the target contained region that is not occluded by the first occluded contained region;
$SA_{total}$ defines a projected surface area of the target contained region;
$SA_{object}$ defines a projected surface area of the object.

8. The method of clause 7, wherein the weighted projected surface area metric comprises a combination of individual weighted projected surface area each calculated for a projection direction selected from a plurality of different projection directions.

9. The method of clause 8, wherein the scene is a 3D scene represented in a 3D space-coordinate system and the plurality of contained regions are axis-aligned with the 3D space-coordinate system, and wherein the plurality of different projection directions comprise:

three orthographic directions along the three primary axes;
six orthographic projections aligned with the edges of the contained regions;
four isometric projections aligned with the vertices of the contained regions.

10. The method of any of clause 6 to 9, wherein determining that the surface area metric of the target contained region does not meet the one or more surface area utility criteria comprises determining that the surface area metric of the target contained region does not exceed the predetermined value defined using the first and second component.

11. The method of any preceding clause, wherein the surface area utility criteria comprises a threshold intersection amount defined as an amount of spatial intersection with an occluded contained region, and wherein determining that the surface area metric of the target contained region does not meet the one or more surface area utility criteria comprises determining that an amount of spatial intersection between the target contained region and a first occluded contained region of the one or more occluded contained regions exceeds the threshold intersection amount.

12. The method of any preceding clause, wherein each contained region of the plurality of contained regions is associated with an occlusion utility metric that quantifies an estimate of a potential of the contained region to occlude the object, wherein the surface area metric is the occlusion utility metric associated with the target contained region, and wherein the surface area utility criteria comprises a threshold based on a current minimum of an occlusion utility metric associated with the one or more occluded contained regions.

13. The method of any preceding clause, wherein the surface area utility criteria comprises a maximum number of allowed contained regions, and wherein determining that the surface area metric of the target contained region does not meet the one or more surface area utility criteria comprises determining that a number of contained regions in the plurality of contained regions exceeds the maximum number of allowed contained regions.

14. The method of any preceding clause, wherein at least two of the contained regions of the plurality of contained regions spatially intersect.

15. The method of any preceding clause, wherein each contained region of the plurality of contained regions is generated by:

partitioning the volume inside the one or more finite bounding regions into a plurality of voxels;
categorising the plurality of voxels, wherein the categorisation comprises identifying a subset of internal voxels that are contained within extents of a geometry defined by the object;
determining an occlusion utility metric for each of the internal voxels, wherein the occlusion utility metric quantifies an estimate of a potential surface area of an expanded version of each internal voxel;
in dependence on the occlusion utility metric, selecting an internal voxel, from the subset of internal voxels, to be a candidate voxel for transformation into a contained region;
expanding a volume of the candidate voxel through at least one dimension to obtain an expanded voxel, wherein the expanded voxel is contained within, and smaller than, the extents of the geometry defined by the object;
allocating the expanded voxel as a new contained region, wherein the new contained region is arranged to facilitate determining whether a ray intersects the object in dependence on determining that the ray intersects the contained region.

16. The method of clause 15, wherein the new contained region is the target contained region, and wherein discarding the geometry data defining the target contained region is performed in response to determining that the target contained region does not meet the one or more surface area utility criteria, thereby determining that the target contained region is redundant with respect to the one or more occluded contained regions.

17. The method of any preceding clause, further comprising, in response to generating a new contained region, allocating the new contained region as the target contained region and determining whether the surface area metric of the target contained region meets the one or more surface area utility criteria.

18. The method of any preceding clause, wherein the object is a closed object, wherein the extents of the geometry of the object is an external surface of the object.

19. The method of any of clauses 1 to 17, wherein the object comprises an open concave region, and wherein the extents of the geometry of the object defining the region that contains the contained region is an externally facing surface of the object.

20. The method of any of clauses 1 to 17, wherein the object is a non-closed self-concealing object that contains a hidden region, wherein the hidden region is contained entirely within an interior of the non-closed self-concealing object, the hidden region defined by being obscured from all possible viewing angles external to the non-closed self-concealing object, and wherein the extents of the geometry of the object defining the region that contains the contained region is the hidden region.

21. The method of any of clauses 1 to 17, wherein the object is a contiguous surface, and wherein the extents of the geometry defined by the object comprises an outer boundary of the contiguous surface.

22. The method of any preceding clause, comprising determining whether a ray intersects the object in dependence on at least determining that the ray intersects at least one contained region of the refined set of contained regions; and outputting an indication that the ray intersects the object, wherein the outputted indication is used in the ray tracing system for rendering an image of a scene.

23. A graphics processing system configured to perform the method of any of clauses 1 to 22.

24. A computer readable storage medium having encoded thereon computer readable code configured to cause the method of any of clauses 1 to 22 to be performed when the code is run.

25. An integrated circuit definition dataset that, when processed in an integrated circuit manufacturing system, configures the integrated circuit manufacturing system to manufacture a graphics processing system of clause 23.

26. A non-transitory computer readable storage medium having stored thereon a computer readable description of a graphics processing system of clause 23 that, when processed in an integrated circuit manufacturing system, causes the integrated circuit manufacturing system to manufacture an integrated circuit embodying the graphics processing system.

27. A graphics processing module for selecting a plurality of contained regions for use in a ray tracing system, wherein the each of the plurality of contained regions is arranged to facilitate determining whether a ray intersects an object of a scene, wherein the object is contained within one or more finite bounding regions which form part of an object partitioning hierarchy, the module being configured to:

obtain geometry data defining an object and a plurality of candidate contained regions, wherein each of the plurality of candidate contained regions are contained within extents of a geometry defined by the object;
select a target contained region from the plurality of contained regions;
identifying one or more occluded contained regions, of the plurality of contained regions, which the target contained region at least partially occludes;
determine a surface area metric of the target contained region;
determine whether the surface area metric of the target contained region meets one or more surface area utility criteria, wherein the one or more surface area utility criteria is defined based on at least one of i) a surface area defined by the one or more occluded contained regions; and ii) a surface area defined by with the object;
in response to determining that the surface area metric of the target contained region does not meet the one or more surface area utility criteria, discard the geometry data defining the target contained region to obtain a refined set of contained regions;
wherein the refined set of contained regions are arranged to facilitate determining whether a ray intersects the object in dependence on determining that the ray intersects at least one contained region of the refined set of contained regions.

According to examples of the disclosure provided herein, the following clauses are provided, which relate to methods and systems for generating surface-dependent contained regions and surface-dependent AACBs for contiguous surfaces:

1. A method of generating a contained region for use in a ray tracing system, wherein the contained region is arranged to facilitate determining whether a ray intersects an object of a scene, wherein the object is contained within one or more finite bounding regions which form part of an object partitioning hierarchy, and wherein the object is a contiguous surface, the method comprising:

partitioning the volume inside the one or more finite bounding regions into a plurality of voxels;
categorising the plurality of voxels, wherein the categorisation comprises identifying a subset of boundary voxels that lie within extents of a geometry defined by the object and which intersect with the object's contiguous surface;
determining an occlusion utility metric for each of the boundary voxels, wherein the occlusion utility metric comprises a component quantifying at least a maximum number of boundary voxels lying in a contiguous chain in a single dimension that intersect the contiguous surface of the object, in which the boundary voxel is a member of the chain;
in dependence on the occlusion utility metric, selecting a boundary voxel, from the subset of boundary voxels, to be a candidate voxel for transformation into a contained region;
expanding a volume of the candidate voxel through at least one dimension to obtain an expanded voxel, wherein the expanded voxel is contained within, and smaller than, the extents of the geometry defined by the object;
allocating the expanded voxel as a contained region, wherein the contained region is arranged to facilitate determining whether a ray intersects the object in dependence on determining that the ray intersects the contained region.

2. The method of clause 1, wherein the extents of the geometry defined by the object comprises an outer boundary of the contiguous surface.

3. The method of clause 1 or 2, wherein expanding the volume of the candidate voxel comprises expanding along at least a dimension of the contiguous chain defining the occlusion utility metric for the candidate voxel.

4. The method of any preceding clause, comprising expanding the candidate voxel until a surface of the candidate voxel reaches an outer boundary of the surface.

5. The method of any preceding clause, wherein the candidate voxel is selected from the subset of boundary voxels in dependence on determining that the candidate voxel has the highest maximum number of boundary voxels lying in a contiguous chain, as defined by the occlusion utility metric.

6. The method of any preceding clause, wherein the scene is a 3D scene represented in a 3D space-coordinate system and the plurality of boundary voxels are axis-aligned with the 3D space-coordinate system, and wherein determining the occlusion utility metric for each of the boundary voxels comprises determining:

> for each of the three axis-aligned dimensions, a maximum number of boundary voxels lying in a contiguous chain in the axis-aligned dimension;
> determining which axis-aligned dimension comprises the largest maximum number of boundary voxels, and setting that largest maximum number as the occlusion utility metric.

7. The method of clause 6, further determining which axis-aligned dimension comprises the second largest maximum number of boundary voxels, and setting that second largest maximum number as a median chain length metric, wherein expanding the candidate voxel comprises simultaneously expanding the candidate voxel in the two dimensions defined by the occlusion utility metric and the median chain length metric.

8. The method of clause 6 or 7, further comprising determining which axis-aligned dimension comprises the lowest maximum number of boundary voxels, and setting that lowest maximum number as the lowest chain length metric, wherein the occlusion utility metric is defined based on a combination of the maximum number of boundary voxels lying in a contiguous chain in any axis-aligned direction, the median chain length metric, and the lowest chain length metric.

9. The method of any preceding clause, further comprising ceasing to expand the candidate voxel in response to determining that the candidate voxel is about to expand to intersect with a voxel that is not a boundary voxel.

10. The method of any preceding clause, further comprising ceasing to expand the candidate voxel in response to determining that the candidate voxel is about to expand past the extents of the geometry defined by outer boundary of the object.

11. The method of any preceding clause, wherein the contiguous chain of boundary voxels in the single dimension that intersect the contiguous surface, which defines the occlusion utility metric, comprises one or more boundary voxels that deviate from the axis of the contiguous chain by a distance equal to a single boundary voxel.

12. The method of any preceding clause, wherein at least a portion of the contiguous surface of the object is contained within the contained region, and wherein determining whether a ray intersects the object using the contained region comprises:

> determining that the ray intersects the contained region at two intersection points, wherein the two intersection points represent an entry point and an exit point;
> determining that the entry point and the exit point lie on opposing faces of the contained region, wherein the opposing faces of the contained region are arranged on opposing sides of the portion of the contiguous surface contained within the bounding volume; and
> determining whether the ray intersects the object at least in dependence on determining that the entry point and the exit point lie on an opposing faces of the bounding volume.

13. The method of clause 12, wherein the portion of the contiguous surface contained within the contained region contains no gaps, and wherein the contained region is partitioned, by the portion of the contiguous surface of the object, into two distinct volumes.

14. The method of clause 13, wherein faces of the contained region that are intersected by the contiguous surface define exception surfaces of the contained region, wherein determining whether the ray intersects the object using the contained region further comprises:
in response to determining that the entry point and the exit point do not lie on exception surfaces of the bounding volume, determining that the ray intersects the object.

15. The method of any clause 14, wherein the contained region is arranged such that the opposing faces of the contained region are aligned with a plane of the contiguous surface, and wherein each of the opposing faces has a larger surface area than each of exception surfaces.

16. The method of any preceding clause, wherein the scene is a 3D scene represented in a 3D space-coordinate system the contained regions is axis-aligned with the 3D space-coordinate system.

17. The method of any preceding clause, comprising determining whether a ray intersects the object in dependence on at least determining that the ray intersects the contained region; and
outputting an indication that the ray intersects the object, wherein the outputted indication is used in the ray tracing system for rendering an image of a scene.

18. The method of any preceding clause, wherein the selected boundary voxel is bisected by the object's contiguous surface.

19. A graphics processing system configured to perform the method of any of clauses 1 to 18.

20. The graphics processing system of clause 19 wherein the graphics processing system is embodied in hardware on an integrated circuit.

21. Computer readable code configured to cause the method of any of clauses 1 to 18 to be performed when the code is run.

22. An integrated circuit definition dataset that, when processed in an integrated circuit manufacturing system, configures the integrated circuit manufacturing system to manufacture a graphics processing system of clause 19 or 20.

23. A non-transitory computer readable storage medium having stored thereon a computer readable description of a graphics processing system of clause 20 or 21 that, when processed in an integrated circuit manufacturing system, causes the integrated circuit manufacturing system to manufacture an integrated circuit embodying the graphics processing system.

24. A graphics processing module for generating a contained region for use in a ray tracing system, wherein the contained region is arranged to facilitate determining whether a ray intersects an object of a scene, wherein the object is contained within one or more finite bounding regions which form part of an object partitioning hierarchy, and wherein the object is a contiguous surface, the module being configured to:

partition the volume inside the one or more finite bounding regions into a plurality of voxels;
categorise the plurality of voxels, wherein the categorisation comprises identifying a subset of boundary voxels that lie within extents of a geometry defined by the object and which intersect with the object's contiguous surface;
determine an occlusion utility metric for each of the boundary voxels, wherein the occlusion utility metric comprises a component quantifying at least a maximum number of boundary voxels lying in a contiguous chain in a single dimension that intersect the contiguous surface of the object, in which the boundary voxel is a member of the chain;
in dependence on the occlusion utility metric, select a boundary voxel, from the subset of boundary voxels, to be a candidate voxel for transformation into a contained region;
expand a volume of the candidate voxel through at least one dimension to obtain an expanded voxel, wherein the expanded voxel is contained within, and smaller than, the extents of the geometry defined by the object;
allocate the expanded voxel as a contained region, wherein the contained region is arranged to facilitate determining whether a ray intersects the object in dependence on determining that the ray intersects the contained region.

**Claims**

1. A method of generating a contained region for use in a ray tracing system, wherein the contained region is arranged to facilitate determining whether a ray intersects an object of a scene, wherein the object is contained within one or more finite bounding regions which form part of an object partitioning hierarchy, the method comprising:

   partitioning the volume inside the one or more finite bounding regions into a plurality of voxels;
   categorising the plurality of voxels, wherein the categorisation comprises identifying a subset of internal voxels that are contained within extents of a geometry defined by the object;
   determining an occlusion utility metric for each of the internal voxels, wherein the occlusion utility metric quantifies an estimate of a potential surface area of an expanded version of each internal voxel;
   in dependence on the occlusion utility metric, selecting an internal voxel, from the subset of internal voxels, to be a candidate voxel for transformation into a contained region;
   expanding a volume of the candidate voxel through at least one dimension to obtain an expanded voxel, wherein the expanded voxel is contained within, and smaller than, the extents of the geometry defined by the object;
   allocating the expanded voxel as a contained region, wherein the contained region is arranged to facilitate determining whether a ray intersects the object in dependence on determining that the ray intersects the contained region.

2. The method of claim 1, further comprising:

   determining a surface area metric of the expanded voxel; and
   allocating the expanded voxel as a contained region in dependence on determining that the surface area metric of the expanded voxel meets one or more surface area utility criteria.

3. The method of claim 1 or 2, wherein the categorisation further comprises identifying a subset of boundary voxels that intersect with a surface of the object.

4. The method of claim 3, wherein the object is a closed object, wherein the extents of the geometry of the object is an external surface of the object, wherein expanding the volume of the candidate voxel comprises uniformly expanding the candidate voxel until a surface of the candidate voxel reaches one or more boundary voxels.

5. The method of claim 4, further comprising, subsequent to uniformly expanding the candidate voxel, non-uniformly extending the voxel in one or more dimensions, wherein the resulting expanded voxel comprises at least one dimension with a different to size to at least one other dimension, wherein non-uniformly extending the voxel comprises:

   determining that, subsequent to uniformly expanding the candidate voxel, uniform expansion of the voxel is no longer possible;
   determining that the candidate voxel may be extended in a plurality of different dimensions;
   selecting, from the plurality of different dimensions, a set of one or more dimensions through which the candidate voxel may be extended simultaneously, wherein the set of one or more dimensions comprises the maximum number of possible simultaneous extensions.

6. The method of any preceding claim, wherein the occlusion utility metric is a depth metric that quantifies a shortest distance of each internal voxel to external surface of the object.

7. The method of claim 3, wherein the object comprises an open concave region, and wherein identifying the subset of internal voxels that are contained within extents of a geometry defined by the object comprises determining a subset of voxels that are enclosed, within a cross section of at least one dimension, by a plurality of boundary voxels, wherein categorising the plurality of voxels further comprises categorising any voxels that are not either internal voxels or boundary voxels as empty voxels, and wherein the extents of the geometry of the object that contain the contained region are defined by an enclosed region defined by a union of boundary voxels and empty voxels, wherein expanding the volume of the candidate voxel comprises uniformly expanding the candidate voxel until a surface of the candidate voxel reaches one or more boundary voxels or empty voxels, the method further comprising, subsequent to uniformly expanding the candidate voxel, non-uniformly extending the voxel in one or more dimensions, wherein the resulting expanded voxel comprises at least one dimension with a different to size to at least one other dimension.

8. The method of claim 7, wherein the occlusion utility metric is a modified depth metric defined by i) quantifying a shortest distance of each internal voxel to any part of the enclosed region defined by the union of boundary voxels and empty voxels, and ii) weighting the quantification in i) by a value representing an estimated proportion of incident rays that will intersect the enclosed region by passing through an opening of the open concave region.

9. The method of claim 1 or 2, wherein the object is a non-closed self-concealing object that contains a hidden region, wherein the hidden region is contained entirely within an interior of non-closed self-concealing object, the hidden region defined by being obscured from all possible viewing angles external to the non-closed self-concealing object, and wherein the occlusion utility metric is a depth metric that quantifies a shortest distance of each internal voxel to external surface of the object, wherein identifying the subset of internal voxels comprises identifying a set of voxels that are contained within the hidden region, and expanding the volume of the candidate voxel comprises uniformly expanding the candidate voxel until a surface of the candidate voxel reaches a boundary of the hidden region.

10. The method of claim 1 or 2, wherein the object is a contiguous surface, and wherein the extents of the geometry defined by the object comprises an outer boundary of the contiguous surface, and wherein identifying the subset of internal voxels that are contained within extents of a geometry defined by the object comprises determining a set of voxels that intersect with the contiguous surface., wherein the occlusion utility metric for each internal voxel is defined based on the maximum number of internal voxels lying in a contiguous chain in a single dimension that intersect the contiguous surface of the object, in which the internal voxel is a member of the chain, and wherein expanding the volume of the candidate voxel comprises expanding along at least a dimension of the contiguous chain defining the occlusion utility metric for the candidate voxel, and expanding until a surface of the candidate voxel reaches an outer boundary of the surface.

11. The method of claim 2, wherein the surface area metric determined for the expanded voxel defines a combined surface area of all sides of the expanded voxel, wherein the surface area utility criteria comprises one or both of i) a threshold defined by a predetermined surface area and ii) a threshold defined by a combined surface area of all sides of a previously generated contained region, wherein determining that the surface area metric of the expanded voxel meets the one or more surface area utility criteria comprises determining that the combined surface area of all sides of the expanded voxel is equal to or greater than the combined surface area of all sides of the previously generated contained region.

12. The method of claim 2, wherein the surface area metric comprises i) a first component defining the proportion of projected overlap between the expanded voxel and a previously generated contained region and ii) a second component defining the proportion of projected overlap between the expanded voxel and a projection of the object, and wherein the surface area utility criteria comprises is a predetermined value defined using the same criteria as the surface area metric.

13. The method of any preceding claim, further comprising:

    determining whether the ray intersects the object in dependence on at least determining that the ray intersects the contained region; and
    outputting an indication that the ray intersects the object, wherein the outputted indication is used in the ray tracing system for rendering an image of a scene.

14. A non-transitory computer readable storage medium having stored thereon a computer readable description of a graphics processing system configured to perform the method of any of claims 1 to 13 that, when processed in an integrated circuit manufacturing system, causes the integrated circuit manufacturing system to manufacture an integrated circuit embodying the graphics processing system.

15. A graphics processing module for generating a contained region for use in a ray tracing system, wherein the contained region is arranged to facilitate determining whether a ray intersects an object of a scene, wherein the object is contained within one or more finite bounding regions which form part of an object partitioning hierarchy, the module being configured to:

    partition the volume inside the one or more finite bounding regions into a plurality of voxels;

categorise the plurality of voxels, wherein the categorisation comprises identifying a subset of internal voxels that are contained within extents of a geometry defined by the object;

determine an occlusion utility metric for each of the internal voxels, wherein the occlusion utility metric quantifies an estimate of a potential surface area of an expanded version of each internal voxel;

in dependence on the occlusion utility metric, select an internal voxel, from the subset of internal voxels, to be a candidate voxel for transformation into a contained region;

expand a volume of the candidate voxel through at least one dimension to obtain an expanded voxel, wherein the expanded voxel is contained within, and smaller than, the extents of the geometry defined by the object;

allocate the expanded voxel as a contained region, wherein the contained region is arranged to facilitate determining whether a ray intersects the object in dependence on determining that the ray intersects the contained region.

100

102

104

106 — | Processing module | → Memory

108

112 — Box intersection testing unit(s)

Geometric data →

Ray data →

Triangle intersection testing unit(s)

114 —

Intersection testing module

110 — Processing logic → Memory

Ray tracing unit

**FIGURE 1**

FIGURE 2a

FIGURE 2b

FIGURE 3

**FIGURE 4a**

**FIGURE 4b**

FIGURE 4c

FIGURE 5

**FIGURE 6a**

**FIGURE 6b**

**FIGURE 7**

FIGURE 8

EP 4 654 141 A1

**FIGURE 9**

EP 4 654 141 A1

**FIGURE 10a**

**FIGURE 10b**

**FIGURE 10c**

1100a

1101

**FIGURE 11a**

1100b

**FIGURE 11b**

1100c

FIGURE 11c

**FIGURE 12a**

**FIGURE 12b**

FIGURE 13

**FIGURE 14a**

**FIGURE 14b**

**FIGURE 15a**

**FIGURE 15b**

**FIGURE 16**

1700

1702

FIGURE 17

FIGURE 18a

**FIGURE 18b**

FIGURE 19

FIGURE 20a

FIGURE 20b

| | |
|---|---|
| Partition the volume inside the one or more finite bounding regions into a plurality of voxels | S102 |

| | |
|---|---|
| Categorise the plurality of voxels, wherein the categorisation comprises identifying a subset of internal voxels that are contained within extents of a geometry defined by the object | S104 |

| | |
|---|---|
| Determine an occlusion utility metric for each of the internal voxels, wherein the occlusion utility metric quantifies an estimate of a potential surface area of an expanded version of each internal voxel | S106 |

| | |
|---|---|
| In dependence on the occlusion utility metric, select an internal voxel, from the subset of internal voxels, to be a candidate voxel for transformation into a contained region | S108 |

| | |
|---|---|
| Expand a volume of the candidate voxel through at least one dimension to obtain an expanded voxel, wherein the expanded voxel is contained within, and smaller than, the extents of the geometry defined by the object | S110 |

| | |
|---|---|
| Allocate the expanded voxel as a contained region, wherein the contained region is arranged to facilitate determining whether a ray intersects the object in dependence on determining that the ray intersects the contained region | S112 |

**FIGURE 21**

Obtain geometry data defining an object and a plurality of candidate contained regions, wherein each of the plurality of candidate contained regions are contained within extents of a geometry defined by the object ⟋⟍ S202

Select a target contained region from the plurality of contained regions ⟋⟍ S204

Identify one or more occluded contained regions, of the plurality of contained regions, which the target contained region at least partially occludes ⟋⟍ S206

Determine a surface area metric of the target contained region ⟋⟍ S208

Determine whether the surface area metric of the target contained region meets one or more surface area utility criteria, wherein the one or more surface area utility criteria is defined based on at least one of i) a surface area defined by the one or more occluded contained regions; and ii) a surface area defined by with the object ⟋⟍ S210

In response to determining that the surface area metric of the target contained region does not meet the one or more surface area utility criteria, discard the geometry data defining the target contained region to obtain a refined set of contained regions ⟋⟍ S212

**FIGURE 22**

| Partition the volume inside the one or more finite bounding regions into a plurality of voxels | S302 |

| Categorise the plurality of voxels, wherein the categorisation comprises identifying a subset of boundary voxels that lie within extents of a geometry defined by the object and which intersect with the object's contiguous surface | S304 |

| Determine an occlusion utility metric for each of the boundary voxels, wherein the occlusion utility metric comprises a component quantifying at least a maximum number of boundary voxels lying in a contiguous chain in a single dimension that intersect the contiguous surface of the object, in which the boundary voxel is a member of the chain | S306 |

| In dependence on the occlusion utility metric, select a boundary voxel, from the subset of boundary voxels, to be a candidate voxel for transformation into a contained region | S308 |

| Expand a volume of the candidate voxel through at least one dimension to obtain an expanded voxel, wherein the expanded voxel is contained within, and smaller than, the extents of the geometry defined by the object | S310 |

| Allocate the expanded voxel as a contained region, wherein the contained region is arranged to facilitate determining whether a ray intersects the object in dependence on determining that the ray intersects the contained region | S312 |

**FIGURE 23**

**FIGURE 24**

**FIGURE 25**

Europäisches
Patentamt

European
Patent Office

Office européen
des brevets

# EUROPEAN SEARCH REPORT

**Application Number**

EP 25 17 7763

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A,D | PETER DJEU ET AL: "Accelerating shadow rays using volumetric occluders and modified kd-tree traversal",<br>HPG '09 PROCEEDINGS OF THE CONFERENCE ON HIGH PERFORMANCE GRAPHICS 2009, ACM, NEW YORK, NY, USA,<br>August 2009 (2009-08), pages 69-76,<br>XP058231110,<br>DOI: 10.1145/1572769.1572781<br>ISBN: 978-1-60558-603-8<br>* abstract *<br>* section 3 *<br>----- | 1-15 | INV.<br>G06T15/06 |
| | | | TECHNICAL FIELDS SEARCHED (IPC) |
| | | | G06T |

The present search report has been drawn up for all claims

| Place of search | Date of completion of the search | Examiner |
|---|---|---|
| Berlin | 7 August 2025 | Bouchaâla, Nicolas |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- GB 2407459 A

- GB 2505214 A

**Non-patent literature cited in the description**

- **DJEU**. Accelerating Shadow Rays Using Volumetric Occluders and Modified kd-Tree Traversal. *High Performance Graphics*, 2009